# EUROPEAN PATENT APPLICATION

(11) **EP 4 813 482 A1**
(43) Date of publication of application: **30.09.2026**
(21) Application number: 26168083.9
(22) Date of filing: 26.03.2026
(51) Int. Cl.: A63F 13/48, A63F 13/35, A63F 13/75, A63F 13/95

(54) **COMMUNICATION TERMINAL, EXTERNAL STORAGE MEDIUM, INFORMATION PROCESSING SYSTEM, ONE OR MORE NON-TRANSITORY COMPUTER-READABLE STORAGE MEDIA, AND METHOD**

(30) Priority: 28.03.2025 JP 2025056889
(71) Applicant: Nintendo Co., Ltd., Kyoto 601-8501 (JP)
(72) Inventor: NAGAOKA, Tomotsugu, Kyoto 601-8501 (JP); NAKASHIMA, Takanobu, Kyoto 601-8501 (JP); SEKI, Naomi, Kyoto 601-8501 (JP); NAITO, Tadashi, Kyoto 601-8501 (JP)
(74) Representative: Bardehle Pagenberg Partnerschaft mbB Patentanwälte Rechtsanwälte

(57) **Abstract**

An example of an information processing system includes a communication terminal apparatus communicable with a server, and a first external storage medium detachably attached to the communication terminal apparatus. The communication terminal apparatus includes at least one memory, a slot that detachably receives a first external storage medium, and at least one processor that determines whether the first storage medium is attached. The communication terminal apparatus: receives the first data from the first external storage medium attached to the slot; acquires, from the server, the first application corresponding to the first data and stores the first application in the memory, in response to determining that the first external storage medium is attached to the slot; and executes the first application stored in the memory, in response to determining that the first external storage medium is attached to the slot.

## Description

### BACKGROUND OF THE INVENTION

### Field of the Invention

The present invention relates to a communication terminal, an external storage medium, an information processing system, one or more non-transitory computer-readable storage media, and a method for executing applications.

### Description of the Background Art

Conventionally, there has been an apparatus to which an external storage medium having stored therein an application is attached, and which executes the application (e.g., Japanese Laid-Open Patent Publication No. 2018-64778).

However, in the conventional technique, a large-capacity external storage medium is required, leaving room for improvement.

The present invention discloses a communication terminal, an external storage medium, an information processing system, and a method which can execute applications without using a large-capacity external storage medium.

### SUMMARY OF THE INVENTION

The present invention adopts the following aspects to solve the above problems.

### (First Aspect)

The first aspect of the exemplary embodiment is a communication terminal apparatus capable of communicating with a server. The communication terminal apparatus includes: at least one memory; a slot configured to detachably receive a first external storage medium; and at least one processor. The at least one processor is configured to: receive first data from the first external storage medium attached to the slot; acquire, from the server, a first application corresponding to the first data and store the first application in the memory, when the first external storage medium is attached to the slot; and execute the first application stored in the memory, while the first external storage medium is attached to the slot.

According to the above aspect, the application can be executed in the communication terminal apparatus without storing the application in an external storage medium attached to the communication terminal apparatus.

### (Second Aspect)

In the second aspect based on the first aspect, the at least one processor is further configured to perform a notification to notify a user that the first application has already been stored, when the first application is stored in the memory and a second application of the same type as the first application is acquired from the server.

According to the above aspect, when the second application corresponding to the first application that has already been stored in the memory is acquired from the server, the user can be made aware that the first application has already been stored.

### (Third Aspect)

In the third aspect based on the first or second aspect, the slot is further configured to detachably receive a second external storage medium having stored therein a second application. The at least one processor is further configured to: determine whether the external storage medium attached to the slot is the first external storage medium or the second external storage medium, based on information transmitted from the external storage medium attached to the slot; execute the first application stored in the memory, based on the first data received from the first external storage medium, in response to determining that the external storage medium attached to the slot is the first external storage medium; and read the second application stored in the second external storage medium, and execute the second application, in response to determining that the external storage medium attached to the slot is the second external storage medium.

According to the above aspect, when the first external storage medium is attached to the communication terminal apparatus, the first application stored in the memory is executed, and when the second external storage medium is attached to the communication terminal apparatus, the second application can be read from the second external storage medium and executed. Thus, various types of external storage media can be attached to the communication terminal apparatus to execute applications.

### (Fourth Aspect)

In the fourth aspect based on any one of the first to third aspects, the at least one processor is further configured to: execute a third application corresponding to the first application; acquire the third application from the server when the first application is not stored in the memory; and not acquire the third application from the server when the first application is stored in the memory.

According to the above aspect, the first application and the third application corresponding to the first application can be prevented from coexisting in the memory.

### (Fifth Aspect)

In the fifth aspect based on any one of the first to fourth aspects, the at least one processor is further configured to execute the first application stored in the memory if the first external storage medium is attached to the slot, even when the communication terminal apparatus is in an offline state.

According to the above aspect, even when the communication terminal apparatus is in the offline state, the first application can be executed if the first external storage medium is attached.

### (Sixth Aspect)

In the sixth aspect based on any one of the first to fifth aspects, the first data may be identification information for identifying the first application.

According to the above aspect, the first application can be acquired based on the identification information for identifying the first application.

### (Seventh Aspect)

In the seventh aspect based on the sixth aspect, the at least one processor is further configured to: acquire a first icon image indicating information on the first application from the first external storage medium; and display the acquired first icon image.

According to the above aspect, the first icon image indicating the information on the first application can be displayed.

### (Eighth Aspect)

In the eighth aspect based on the seventh aspect, the at least one processor is further configured to: acquire the first application from the server, and acquire a second icon image corresponding to the first application from the server; display the first icon image acquired from the first external storage medium, while acquiring the first application from the server; and display the second icon image acquired from the server instead of the first icon image, when having acquired the first application from the server.

According to the above aspect, the first icon image stored in the first external storage medium can be displayed until the first application is acquired from the server, and the second icon image acquired from the server can be displayed when the first application has been acquired.

### (Ninth Aspect)

The ninth aspect is an external storage medium configured to be detachably attached to a slot of a first communication terminal apparatus communicable with a server. The external storage medium includes: a memory having stored therein at least first data; a terminal configured to be electrically connected to the first communication terminal apparatus when the external storage medium is attached to the slot of the first communication terminal apparatus; and a controller. The controller is configured to: establish a session for communicating with the first communication terminal apparatus, in response to receiving a predetermined signal via the terminal; transmit the first data to the first communication terminal apparatus that acquires a first application associated with the first data from the server based on the first data from the external storage medium, while the session with the first communication terminal apparatus is established; and transmit the first data stored in the memory to the first communication terminal apparatus, when the first communication terminal apparatus executes the first application, in a state where the session with the first communication terminal apparatus storing the first application acquired from the server is established.

According to the present invention, the application can be executed in the communication terminal apparatus without storing the application in the external storage medium attached to the communication terminal apparatus.

These and other objects, features, aspects, and effects will become more apparent from the following detailed description when taken in conjunction with the accompanying drawings.

### BRIEF DESCRIPTION OF THE DRAWINGS

FIG. 1 is a diagram showing an example of an aspect of a game system 100 according to the exemplary embodiment;
FIG. 2 is a diagram showing a flow of processes at respective components of the game system 100 in the case where a first-type cartridge 1 is inserted in the game apparatus 50;
FIG. 3 is a diagram showing an example of a menu screen that is displayed before insertion of the first-type cartridge 1;
FIG. 4 is a diagram showing an example of a menu screen that is displayed after insertion, into the game apparatus 50, of a first-type cartridge 1 having stored therein first information corresponding to game title C;
FIG. 5 is a diagram showing an example of a menu screen that is displayed during downloading of an application program of game title C;
FIG. 6 is a diagram showing an example of a menu screen that is displayed after downloading of the application program of game title C;
FIG. 7 is a diagram showing an example of a menu screen that follows FIG. 6 and is displayed when the first-type cartridge 1 having stored therein the first information corresponding to game title C is not inserted in the game apparatus 50;
FIG. 8 is six orthogonal views showing the external appearance of a cartridge 1 according to an exemplary embodiment;
FIG. 9 is a front view of the cartridge 1 and is a diagram showing an example of the size of the cartridge 1;
FIG. 10 is a bottom view of the cartridge 1 and is a diagram showing an example of the size of the cartridge 1;
FIG. 11 is six orthogonal views showing the external appearance of a front surface side housing 2;
FIG. 12 is six orthogonal views showing the external appearance of a back surface side housing 3;
FIG. 13 is a cross-sectional view along an A-A line in FIG. 8;
FIG. 14 is a cross-sectional view along a B-B line in FIG. 8;
FIG. 15 is a diagram illustrating a connection between the cartridge 1 and a game apparatus or an old game apparatus;
FIG. 16 is a diagram showing an example of the aspect of a game apparatus 50;
FIG. 17 is a diagram showing an example of the aspect of a cartridge 1;
FIG. 18 is a diagram illustrating the operations of the game apparatus 50 and the cartridge 1 when the cartridge 1 is connected to the game apparatus 50;
FIG. 19 is a diagram illustrating the operation of the game apparatus 50 when an old cartridge 7 is connected to the game apparatus 50;
FIG. 20 is a diagram showing the details of terminals T1 to T16 provided on the front surface of the cartridge 1;
FIG. 21 is a diagram showing the functions of the terminals T of the cartridge 1.
FIG. 22 is a front view of the old cartridge 7;
FIG. 23 is a diagram showing the functions of the terminals T of the old cartridge 7;
FIG. 24 is a diagram showing the shape of a cartridge insertion opening of a first slot 51;
FIG. 25 is a partially enlarged view of the cartridge insertion opening viewed from an oblique direction;
FIG. 26 is a diagram showing the placement of a plurality of terminals P provided inside the first slot 51;
FIG. 27 is a diagram showing the functions of the terminals P provided inside the first slot 51;
FIG. 28 is a diagram showing the state where a ground terminal T15 of the cartridge 1 and a ground terminal P15 of the first slot 51 come into contact with each other first when the cartridge 1 is inserted into the first slot 51;
FIG. 29 is a diagram showing the state where a power supply terminal of the cartridge 1 comes into contact with a power supply terminal of the first slot 51 after FIG. 28;
FIG. 30 is a diagram showing the state where a reset terminal T16 of the cartridge 1 comes into contact with a reset terminal P16 of the first slot 51 after FIG. 29;
FIG. 31 is a diagram showing the state where a ground terminal T1 of the cartridge 1 comes into contact with a ground terminal P0 of the first slot 51 after FIG. 30;
FIG. 32 is a diagram showing the state where a clock terminal and a strobe terminal of the cartridge 1 come into contact after FIG. 31;
FIG. 33 is a diagram showing the state where a detection terminal T1 of the cartridge 1 comes into contact with a detection terminal P1 of the first slot 51 after FIG. 32;
FIG. 34 is a diagram showing the state where a terminal P17 of the first slot 51 changes from an OFF state to an ON state;
FIG. 35 is a diagram showing the state where the detection terminal T1 of the old cartridge 7 comes into contact with the detection terminal P1 of the first slot 51 after FIG. 34;
FIG. 36 is a diagram showing the state where the old cartridge 7 is fixed in the first slot 51 after FIG. 35;
FIG. 37 is a sequence diagram of the game apparatus 50 and the cartridge 1 when the cartridge 1 is connected to the game apparatus 50;
FIG. 38 is a flow chart showing an example of processing performed when the cartridge 1 receives a reset cancellation signal from the game apparatus;
FIG. 39 is a flowchart showing an example of processing of the game apparatus 50 when a cartridge is inserted;
FIG. 40 is a diagram showing the cartridge 1 according to a first variation;
FIG. 41 is a diagram showing the cartridge 1 according to a second variation;
FIG. 42 is a diagram showing the cartridge 1 according to a third variation;
FIG. 43 is a diagram showing the cartridge 1 according to a fourth variation;
FIG. 44 is a diagram showing the cartridge 1 according to a fifth variation;
FIG. 45 is a diagram showing another identification method and is a diagram showing the state where the cartridge 1 is connected to the game apparatus 50 according to a sixth variation;
FIG. 46 is a diagram showing another identification method and is a diagram showing the state where the cartridge 1 is connected to the game apparatus 50 according to a seventh variation;
FIG. 47 is a diagram showing another identification method and is a diagram showing the state where the cartridge 1 is connected to the game apparatus 50 according to a ninth variation;
FIG. 48 is a diagram showing another identification method and is a diagram showing the state where the cartridge 1 is connected to the game apparatus 50 according to a ninth variation;
FIG. 49 is a diagram showing another identification method and is a diagram showing the state where the cartridge 1 is connected to the game apparatus 50 according to a tenth variation;
FIG. 50 is a diagram showing another identification method, when the cartridge 1 is connected to the game apparatus 50 according to an eleventh variation; and
FIG. 51 is a diagram showing a variation of the cartridge 1 and an example of a cartridge including the storage medium 11 attachable to and detachable from the cartridge 1.

### DESCRIPTION OF THE PREFERRED EMBODIMENTS

### (Aspect of Game System)

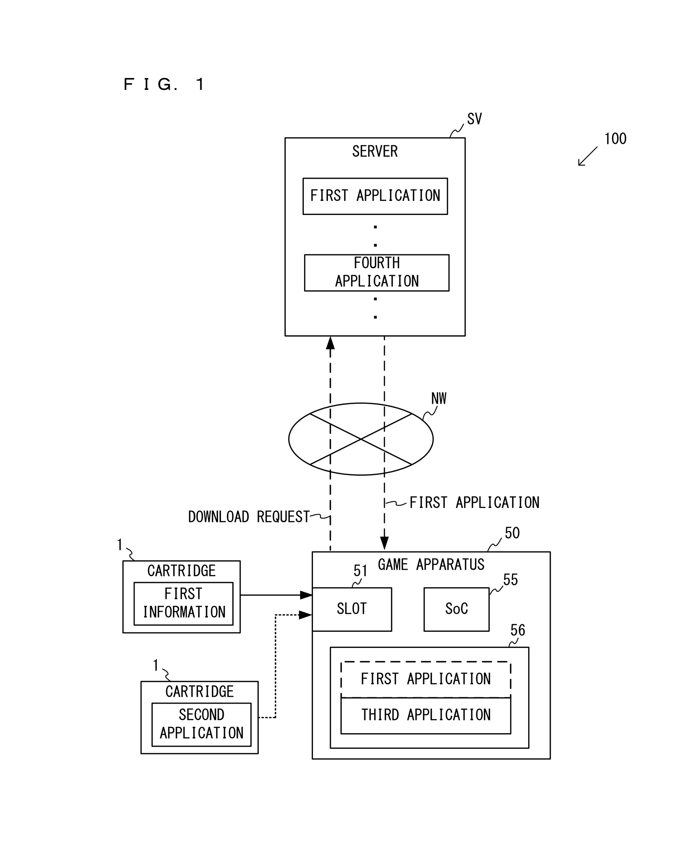

Hereinafter, a game system 100 of an exemplary embodiment will be described with reference to the drawings. FIG. 1 shows an example of the aspect of the game system 100 of the exemplary embodiment.

As shown in FIG. 1, the game system 100 includes a cartridge 1, a game apparatus 50, and a server SV.

The game apparatus 50 includes a SoC (System On a Chip) 55 for executing various applications (e.g., game application). Furthermore, the game apparatus 50 includes a first slot 51 (hereinafter referred to simply as "slot 51") into which the cartridge 1 is inserted, and a non-volatile memory 56. Various application programs can be stored in the non-volatile memory 56. The non-volatile memory 56 may be a non-volatile memory incorporated in the game apparatus 50, or may be a non-volatile memory (e.g., SD card) removable from the game apparatus 50. In the non-volatile memory 56 of the game apparatus 50, save data according to an execution result of an application program is stored. The save data may be, for example, data according to the progress of the game. The game apparatus 50 is configured to be communicable with the server SV via a network NW (e.g., the Internet).

The cartridge 1 is detachably inserted in the slot 51 of the game apparatus 50. First information (an example of first data) is stored in advance in the cartridge 1. The first information is identification information assigned to each application. The same first information is assigned to applications having the same title. Here, the first information is identification information assigned to a first application. In addition, title information indicating the title name of the application (e.g., game title name) is stored in advance in the cartridge 1. The first information may include the title information. The first information is relatively small data. No first application program is stored in the cartridge 1.

A first application program corresponding to the first information is stored in the server SV. Furthermore, application programs respectively corresponding to a plurality of pieces of first information are stored in the server SV. Each application program stored in the server SV is downloaded to the game apparatus 50 when the cartridge 1 having stored therein the first information corresponding to the application program is inserted in the game apparatus 50. Moreover, icon image data of each application is stored in the server SV.

When the cartridge 1 is inserted in the slot 51 of the game apparatus 50, the game apparatus 50 reads out the first information stored in the cartridge 1, and transmits a download request including the first information to the server SV. In addition to the first information, the title information may be included in the download request. In response to the download request, the server SV specifies the first application corresponding to the first information, based on the first information transmitted from the game apparatus 50, and transmits the first application program to the game apparatus 50. The game apparatus 50 downloads the first application program, and stores the same in the non-volatile memory 56. The latest version of the application program is stored in the server SV. Upon receiving the download request including the first information from the game apparatus 50, the server SV transmits the latest version of the application program corresponding to the first information to the game apparatus 50. The first information is information for identifying the application type, and may be information that does not distinguish between the old version of the application and the version updated from the old version.

By downloading the first application program, the game apparatus 50 becomes capable of executing the first application program stored in the non-volatile memory 56. The game apparatus 50 is configured to be able to execute the first application program while the cartridge 1 is inserted in the slot 51, and not to be able to execute the first application program when the cartridge 1 is not inserted in the slot 51. Specifically, the game apparatus 50 reads the first information and the title information from the cartridge 1 inserted in the slot 51, and executes the first application program stored in the non-volatile memory 56. Thus, the first information stored in the cartridge 1 functions as a key when the first application program is downloaded, and also functions as a key when the downloaded first application program is executed. Both or at least one of the first information and the title information may function as a key for executing the downloaded first application program. The first information or the title information may include information for decrypting an encrypted application.

Here, the cartridge 1 that has no application program stored therein and includes the first information and the title information is referred to as "first-type cartridge 1". The application program that is downloaded based on the first information stored in the first-type cartridge 1, and is stored in the non-volatile memory 56 is sometimes referred to as "key-version application program".

As shown in FIG. 1, the cartridge 1 having the second application program stored therein can be inserted in the slot 51 of the game apparatus 50. When the cartridge 1 having the second application program stored therein is inserted, the game apparatus 50 can read the second application program from the cartridge 1 and execute the same. The second application program stored in the cartridge 1 is not retained in the non-volatile memory 56.

Here, the cartridge 1 having the application program stored therein is referred to as "second-type cartridge 1". The application program stored in the second-type cartridge 1 is sometimes referred to as "card-version application program". The game apparatus 50 can execute the second application program while the second-type cartridge 1 is inserted, and cannot execute the second application program when the second-type cartridge 1 is not inserted.

In the following description, when no particular distinction is made between the "first-type cartridge 1" and the "second-type cartridge 1", the term "cartridge 1" is used simply.

There is a case where a third application program, which is downloaded from a second server different from the server SV and does not require the cartridge 1 when executed, is stored in the non-volatile memory 56 of the game apparatus 50. The third application program is associated with a user account and is downloaded from the second server to the game apparatus 50. The application program, which does not require the cartridge 1 when executed and is associated with the user account, is referred to as "download-version application program". The download-version application program can be executed when the game apparatus 50 is used with the corresponding user account. The user account may be associated with a plurality of game apparatuses 50. In this case, the download-version application program may be executable by any one of the plurality of game apparatuses 50 associated with the same account. The second server may be the same server as the server SV. In the following paragraphs as well, the server SV and the second server may be the same server or may be different servers. The server SV or the second server may be composed of one or more servers.

Application programs having the same title may be sold as a key-version application program, a card-version application program, and a download-version application program. The key-version application program, the card-version application program, and the download-version application program having the same title are application programs of the same type, and perform information processing (e.g., game processing) having substantially the same content. The key-version application program, the card-version application program, and the download-version application program having the same title are applications that perform the information processing of the same content, but each program may have identification information for identifying the same.

Furthermore, in the same game apparatus 50, the key-version application program and the download-version application program having the same title may coexist.

For example, when the first-type cartridge 1 having stored therein the first information corresponding to the first title is inserted in the game apparatus 50 having stored therein the download-version application program of the first title, a notification indicating that the download-version application program of the first title has already been stored, may be performed. In this case, for example, a selection screen that allows the user to select whether to download the key-version application program of the first title, may be displayed. When the user selects "download" on the selection screen, the key-version application program of the first title is downloaded and stored in the non-volatile memory 56. When the download-version application program of the first title is downloaded from the second server to the game apparatus 50 having stored therein the key-version application program of the first title, a notification indicating that the key-version application program of the first title has already been stored, may be performed. In this case as well, a selection screen that allows the user to select whether to download the download-version application program of the first title, may be displayed. When the user selects "download", the download-version application program of the first title is downloaded and stored in the non-volatile memory 56.

Save data K1 according to the execution result of the key-version application program of the first title, and save data D1 according to the execution result of the download-version application program of the first title may be stored in the non-volatile memory 56. In addition, common save data may be stored in the non-volatile memory 56 when the key-version application program of the first title is executed and when the download-version application program of the first title is executed.

Conversely, the download-version application program of the first title and the key-version application program of the first title may be configured so as not to coexist in the same game apparatus 50. For example, when the first-type cartridge 1 having stored therein the first information corresponding to the first title is inserted in the game apparatus 50 having stored therein the download-version application program of the first title, a notification indicating that the download-version application program of the first title has already been stored, may be performed, and downloading of the key-version application program of the first title may be prohibited. Furthermore, when an attempt is made to download the download-version application program of the first title to the game apparatus 50 having stored therein the key-version application program of the first title, a notification indicating that the key-version application program of the first title has already been stored, may be performed, and downloading of the download-version application program of the first title may be prohibited.

When the second-type cartridge 1 of the first title is inserted in the game apparatus 50 having stored therein the key-version application program of the first title, the game apparatus 50 reads the card-version application program of the first title from the second-type cartridge 1, and executes the same. In this case, save data C1 according to the execution result of the card-version application program of the first title and save data K1 according to the execution result of the key-version application program of the first title may be stored in the non-volatile memory 56. Furthermore, the save data according to the execution result of the card-version application program of the first title and the save data according to the execution result of the key-version application program of the first title may be stored in the non-volatile memory 56 as common save data.

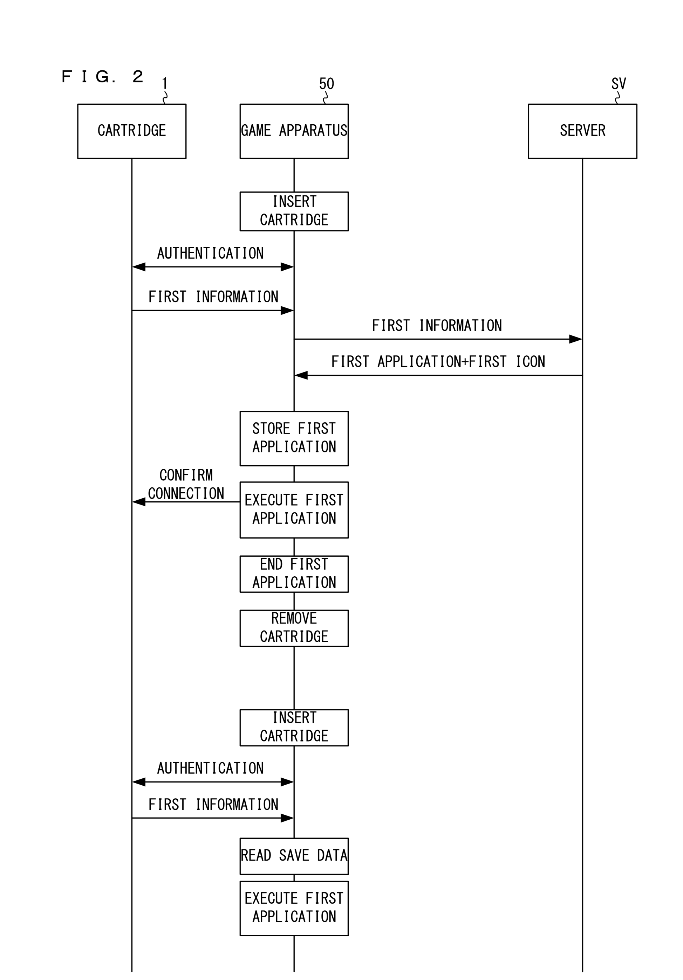

Next, the processes performed by the respective components of the game system 100 in the case where the first-type cartridge 1 is inserted in the game apparatus 50 will be described. FIG. 2 shows the flow of the processes at the respective components of the game system 100 in the case where the first-type cartridge 1 is inserted in the game apparatus 50.

As shown in FIG. 2, first, the user inserts the first-type cartridge 1 into the slot 51 of the game apparatus 50. When the first-type cartridge 1 is inserted in the slot 51 of the game apparatus 50, the game apparatus 50 performs authentication to verify whether the inserted cartridge is a legitimate cartridge. For example, key data for establishing a session with the game apparatus 50 is stored in the first-type cartridge 1, and authentication between the game apparatus 50 and the first-type cartridge 1 is performed based on the key data. When the authentication between the game apparatus 50 and the first-type cartridge 1 is successful, the game apparatus 50 acquires the first information (e.g., identification information for identifying the application) from the first-type cartridge 1. Communication between the game apparatus 50 and the first-type cartridge 1 is encrypted in a predetermined format.

Upon acquiring the first information, the game apparatus 50 determines whether the first application program (key-version application program) corresponding to the first information has already been stored in the non-volatile memory 56. When the program is not stored in the non-volatile memory 56, the game apparatus 50 transmits a download request including the first information to the server SV, and downloads the first application program corresponding to the first information from the server SV. The game apparatus 50 also downloads first icon image data corresponding to the first information from the server SV.

The game apparatus 50 stores the downloaded first application program and first icon image data into the non-volatile memory 56. Then, the game apparatus 50 executes the first application program in response to a start instruction made by the user. During execution of the first application, the game apparatus 50 performs processing based on an operation input performed by the user. For example, during execution of the first application as a game application, the game apparatus 50 performs game processing based on an operation input performed by the user, and displays on the screen a game image based on the result of the game processing. During execution of the first application program, the game apparatus 50 periodically confirms whether the first-type cartridge 1 is connected to the slot 51.

When an end instruction for the first application is made by the user, the game apparatus 50 ends execution of the first application program. When the game apparatus 50 ends the first application or is executing the first application, the game apparatus 50 stores, in the non-volatile memory 56, save data corresponding to the execution result of the first application. For example, the save data may be data indicating items acquired by the user during the game, the progress of the game, and the like.

When the first application has ended, the user removes the first-type cartridge 1 from the game apparatus 50.

The user inserts the first-type cartridge 1 into the slot 51 of the game apparatus 50 again. When the first-type cartridge 1 is inserted in the slot 51 of the game apparatus 50, authentication is performed between the game apparatus 50 and the first-type cartridge 1, and when the authentication is successful, the game apparatus 50 acquires the first information and the title information from the first-type cartridge 1, in the same manner as described above. Upon acquiring the first information and the title information, the game apparatus 50 executes the first application program stored in the non-volatile memory 56, based on the acquired first information and title information. In this case, the game apparatus 50 may execute the first application from the saved state by using the save data stored in the non-volatile memory 56.

As described above, in the first-type cartridge 1 of the exemplary embodiment, the application program is not stored, but the relatively small first information corresponding to the application (e.g., identification information for identifying the application of the first title, or the title information of the first title) is stored. The game apparatus 50 downloads the application program corresponding to the first information from the server SV, and stores the same in the non-volatile memory 56. Thus, the capacity of the first-type cartridge 1 can be reduced. In addition, the game apparatus 50 is configured to execute the application program corresponding to the first-type cartridge 1 only when the first-type cartridge 1 is inserted in the slot 51. Therefore, execution of the application by a user who does not have the first-type cartridge 1 can be avoided.

The game apparatus 50 with the first-type cartridge inserted therein can download the first application corresponding to the first-type cartridge regardless of the user account associated with the game apparatus 50, and can execute the downloaded first application.

After the first-type cartridge was inserted in the game apparatus 50 and the first application was downloaded, if the first-type cartridge is inserted in another game apparatus 50, the other game apparatus 50 can download the first application. Thus, the user having the first-type cartridge can execute the first application by using the other game apparatus 50. The first application that is stored in a certain game apparatus 50 through the first-type cartridge inserted in the certain game apparatus 50 is not erased from the certain game apparatus 50 even when, for example, the first-type cartridge is inserted in another game apparatus 50 and the first application is downloaded or when the first-type cartridge is inserted in the other game apparatus 50 and the first application is executed.

Furthermore, for example, suppose that a certain first-type cartridge having stored therein the first information regarding game title A is inserted in the game apparatus 50, and the first application (game title A) is downloaded from the server and stored in the non-volatile memory 56. In this case, by inserting another first-type cartridge having stored therein the first information regarding the game title A into the game apparatus, the game apparatus may be able to execute the first application stored in the non-volatile memory 56. That is, the game apparatus does not identify the individual first-type cartridge, or does not perform control to restrict execution of the downloaded first application even if the game apparatus identifies the individual first-type cartridge.

### (Example of Screen of Game Apparatus)

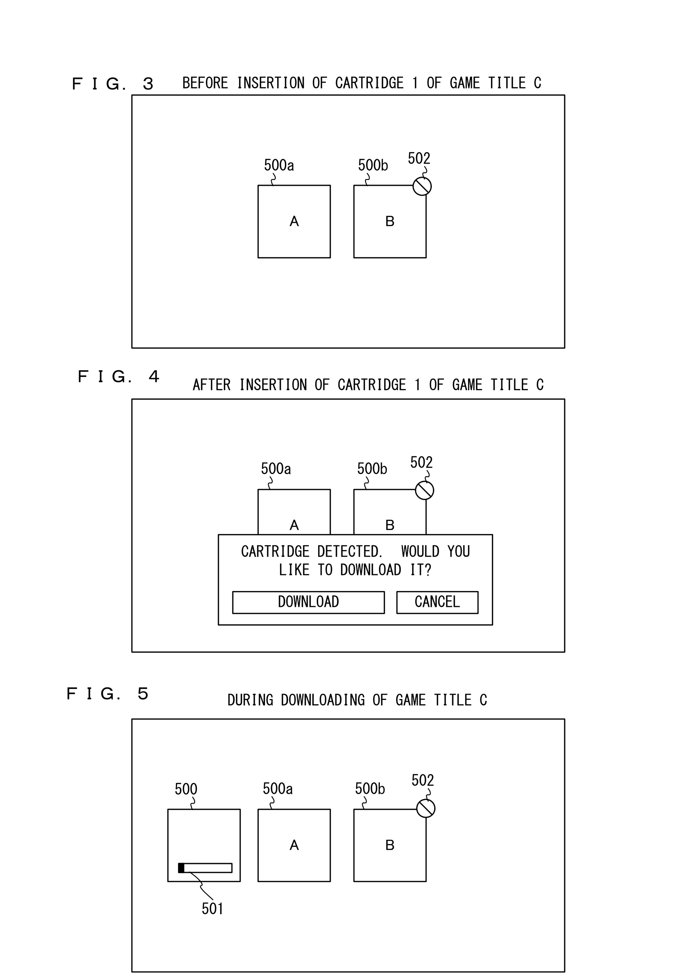

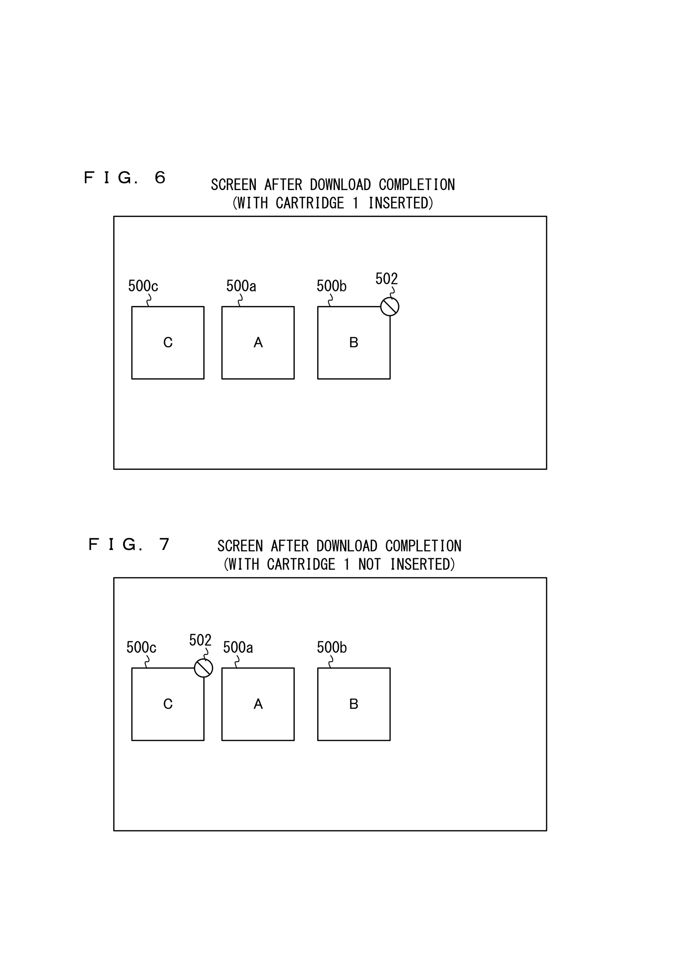

Next, images displayed on the screen of the game apparatus 50 before and after the first-type cartridge 1 is inserted in the game apparatus 50 will be described. FIG. 3 shows an example of a menu screen that is displayed before insertion of the first-type cartridge 1. FIG. 4 shows an example of a menu screen that is displayed after insertion, into the game apparatus 50, of the first-type cartridge 1 having stored therein first information corresponding to game title C. FIG. 5 shows an example of a menu screen that is displayed during downloading of an application program of the game title C. FIG. 6 shows an example of a menu screen that is displayed after downloading of an application program of the game title C. FIG. 7 shows an example of a menu screen that follows FIG. 6 and is displayed when the first-type cartridge 1 having stored therein the first information corresponding to the game title C is not inserted in the game apparatus 50.

As shown in FIG. 3, before the first-type cartridge 1 is inserted in the slot 51 of the game apparatus 50, a plurality of icon images (500a and 500b) are displayed on the menu screen of the game apparatus 50. Each icon image corresponds to an application that has previously been executed on the game apparatus 50. For example, an icon image 500a is an icon image of the game title A, and a download-version application program of the game title A is stored in the non-volatile memory 56. An icon image 500b is an icon image of game title B, and a key-version application program of the game title B is stored in the non-volatile memory 56. Since the first-type cartridge 1 of the game title B is not inserted in the slot 51, the icon image 500b is displayed in a manner indicating that the program is not executable (a manner in which an icon 502 is added).

As shown in FIG. 4, for example, when the first-type cartridge 1 corresponding to the game title C is inserted in the slot 51 of the game apparatus 50, a display that allows the user to select whether to download the application program of the game title C is performed. When the user selects a "download" button, downloading of the application program of the game title C and the icon image 500c is started.

As shown in FIG. 5, during downloading of the application program, an icon image 500, and a progress indicator 501 indicating that the application program is being downloaded are displayed. The icon image 500 displayed during downloading is an image having a relatively small data size, and includes title information, for example. The icon image 500 is stored in the first-type cartridge 1. The game apparatus 50 reads the icon image 500 from the first-type cartridge 1, and displays the same on the screen. The icon image 500 may be stored in the game apparatus 50 in advance. The icon image 500 stored in the game apparatus 50 in advance does not include title information.

As shown in FIG. 6, when downloading of the application program of the game title C and the icon image 500c thereof is completed, the progress indicator 501 is erased, and the icon image 500 changes to the icon image 500c corresponding to the game title C. The icon image 500c is an image including, for example, a character used for the game title C and a scene of the game title C, and is an image having a larger data size than the icon image 500.

The icon image 500c may be downloaded before the application program, and the icon image 500c may be displayed during downloading of the application program.

Even after completion of the application program of the game title C, the icon image 500 may continue to be displayed without changing to the icon image 500c. In this case, the icon image 500c need not be stored in the server SV. Even if the icon image 500c is stored in the server SV, the icon image 500c need not be downloaded.

When the icon image 500c is selected by the user and execution of the application program of the game title C is instructed, the game apparatus 50 executes the application program of the game title C stored in the non-volatile memory 56.

When the first-type cartridge 1 corresponding to the game title C is removed from the slot 51, the icon image 500c is displayed in a manner indicating that the program is not executable, as shown in FIG. 7.

### (External Appearance of Cartridge 1)

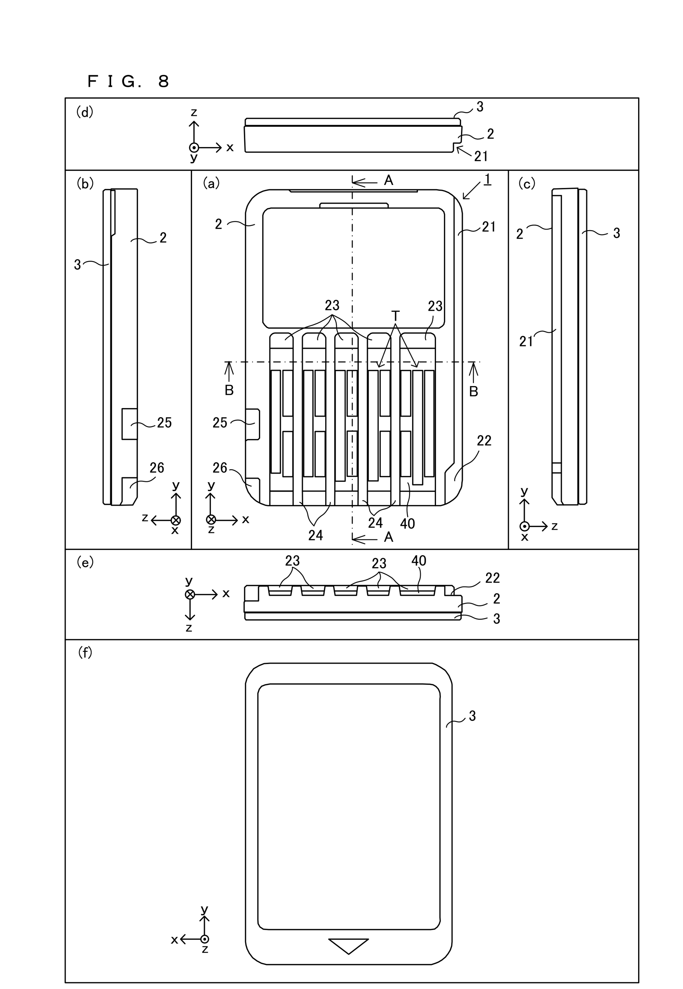

Next, the external appearance of the cartridge 1 is described. FIG. 8 is six orthogonal views showing the external appearance of the cartridge 1 according to the exemplary embodiment.

(a) of FIG. 8 is a front view of the cartridge 1. (b) of FIG. 8 is a left side view of the cartridge 1. (c) of FIG. 8 is a right side view of the cartridge 1. (d) of FIG. 8 is a top view of the cartridge 1. (e) of FIG. 8 is a bottom view of the cartridge 1. (f) of FIG. 8 is a rear view of the cartridge 1.

As shown in FIG. 8, the cartridge 1 is formed of a front surface side housing 2 and a back surface side housing 3. In a housing formed of the front surface side housing 2 and the back surface side housing 3, a substrate 40 is accommodated on which a plurality of terminals T are provided. For example, the front surface side housing 2 and the back surface side housing 3 are formed of a synthetic resin and joined together by welding. Any material may be used for the front surface side housing 2 and the back surface side housing 3. The front surface side housing 2 and the back surface side housing 3 may be fixed by any method such as fitting using a claw and a hole or screwing. The housing of the cartridge 1 does not necessarily need to be formed of the front surface side housing 2 and the back surface side housing 3, and for example, may be formed of three or more housings. The housing of the cartridge 1 may be formed of a single housing obtained by substantially unifying the front surface side housing 2 and the back surface side housing 3.

Here, the direction in which the cartridge 1 is inserted is a negative y-axis direction. A direction orthogonal to the y-axis and toward the right when the front surface side housing 2 is viewed from the front is a positive x-axis direction. A direction orthogonal to the y-axis and the x-axis and from the front surface side housing 2 toward the back surface side housing 3 is a positive z-axis direction. The x-axis direction is also referred to as a "right direction", and the y-axis direction is also referred to as an "up direction". The direction of viewing a surface on which the terminals T are provided is a front view. Hereinafter, for example, the "positive x-axis direction" is referred to as the "x-axis direction" by omitting "positive". The same applies to the y-axis direction and the z-axis direction.

As shown in (a) of FIG. 8, in the front surface side housing 2, five opening portions 23 for exposing the plurality of terminals T provided on the substrate 40 are provided. Specifically, the opening portions 23 are formed to extend in the y-axis direction from the lower end of the cartridge 1 (the lower end in (a) of FIG. 8; also referred to as an "extremity").

Between the opening portions 23, separators 24 are provided that are housings extending between terminals. The separators 24 are a part of the front surface side housing 2.

In a right side end portion (an end portion in the x-axis direction) of the front surface side housing 2, a right side notch (21 and 22) is formed in the negative x-axis direction from the rightmost end of the housing. The right side notch includes an upper portion 21 and a lower portion 22. Hereinafter, the upper portion 21 of the right side notch will be occasionally referred to as the "right side notch 21", and the lower portion 22 of the right side notch will be occasionally referred to as the "right side notch 22". The right side notches 21 and 22 have shapes recessed in the negative x-axis direction from the right side surface of the cartridge 1 and recessed in the z-axis direction from the front surface of the cartridge 1. Specifically, the right side notches 21 and 22 have shapes obtained by notching corner portions as end portions in the x-axis direction and the negative z-axis direction of the front surface side housing 2 as shown in (d) and (e) of FIG. 8 and have approximately L-shapes in a bottom view or a top view. The right side notch 21 is formed to extend in the negative y-axis direction from near the upper end of the cartridge 1 (the upper end of the cartridge in (a) of FIG. 8). The right side notch 21 may be formed from the upper end of the cartridge 1, or may be formed from a position below the upper end of the cartridge 1 as shown in FIG. 8. The length in the y-axis direction of the right side notch 21 is longer than the length in the y-axis direction of the right side notch 22. The right side notch 21 functions as a rail for sliding the cartridge when the cartridge 1 is inserted into a slot of a game apparatus 50 described below. The right side notches 21 and 22 may not be formed exactly parallel to the negative y-axis direction (the insertion direction of the cartridge 1 into the slot), and for example, may be formed to extend in an oblique direction including a negative y-axis direction component (e.g., the negative y-axis direction and the z-axis direction, or the negative y-axis direction and the negative x-axis direction).

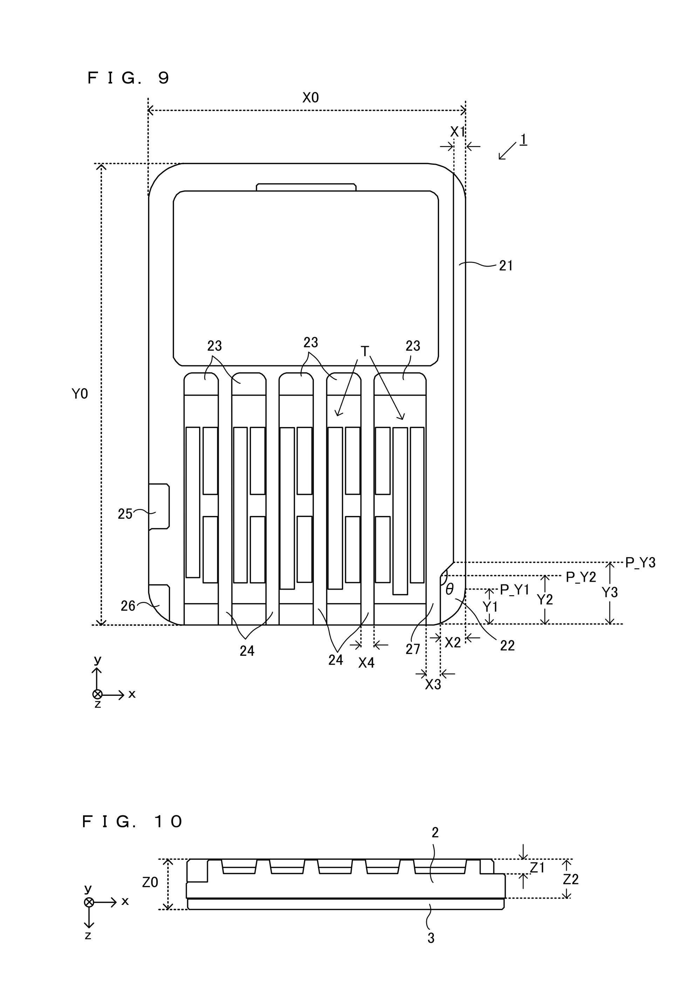

The right side notch 22 is formed to extend from the lower end of the cartridge 1 and to be connected to the right side notch 21. The right side notch 22 may not be formed from the lower end of the cartridge 1, and may be formed from a position above the lower end of the cartridge 1 (e.g., a position between the lower end of the cartridge 1 and a first position P_Y1 in FIG. 9).

FIG. 9 is a front view of the cartridge 1 and is a diagram showing an example of the size of the cartridge 1. FIG. 10 is a bottom view of the cartridge 1 and is a diagram showing an example of the size of the cartridge 1.

As shown in FIG. 9, the width (the length in the x-axis direction) of the cartridge 1 is X0 and is set to about 20 mm to 22 mm, for example. The length (the length in the y-axis direction) of the cartridge 1 is YO and is set to about 30 mm to 32 mm, for example.

As shown in FIG. 9, the plurality of terminals T are exposed through the five opening portions 23 provided on the front surface of the cartridge 1. The plurality of terminals T include a plurality of short terminals placed in an upper area, a plurality of short terminals placed in a lower area, and a plurality of long terminals across the upper and lower areas. The positions in the Y-axis direction of the upper ends of the plurality of short terminals placed in the upper area and long terminals are the same as each other. The positions in the Y-axis direction of the lower ends of the plurality of short terminals placed in the lower area and long terminals are different from each other. The details of the terminals will be described below.

As shown in FIG. 9, the right side notch 21 has a certain width X1 (the length X1 in the x-axis direction). The length X1 in the negative x-axis direction from the rightmost end of the housing is the width of the right side notch 21. For example, the width X1 of the right side notch 21 may be 0.5 mm to 1.0 mm. The four corners of the cartridge 1 are formed into round shapes. In an upper end portion of the right side notch 21, the width of the right side notch 21 is not constant. The closer to the upper end the right side notch 21 is, the narrower the right side notch 21 is.

The right side notch 22 is also formed into a round shape from the lower end of the cartridge to a first position P_Y1 in the y-axis direction (from the lower end to a position at a length Y1). The closer to the lower end the right side notch 22 is, the narrower the width of the right side notch 22 (the length in the x-axis direction) in this portion is. The width of the right side notch 22 is a constant maximum width X2 from the first position P_Y1 to a second position P_Y2 in the y-axis direction (the lower end to a position at a length Y2). The length X2 in the negative x-axis direction from the rightmost end of the housing is the maximum width of the right side notch 22. The right side notch 22 becomes narrower in a tapered manner from the second position P_Y2 to a third position P_Y3 (from the lower end to a position at a length Y3), and the third position P_Y3 is the upper end of the right side notch 22. The maximum width X2 of the right side notch 22 is wider than the width X1 of the right side notch 21. For example, the maximum width X2 of the right side notch 22 may be 1.5 mm to 2.0 mm. The length (Y3 - Y2) in the Y-axis direction of the tapered portion may be 0.8 to 1 mm, for example. The left end of the right side notch 22 linearly extends from the lower end of the right side notch 22 to the second position P_Y2 in the y-axis direction. The length from the lower end to the second position P_Y2 may be 3 mm to 4 mm, for example. The left end of the right side notch 22 is formed to have an angle θ to the y-axis from the second position P_Y2 to the third position P_Y3 in the y-axis direction. For example, θ may be 135 degrees.

As described above, the right side notch 22 includes a portion of which the width becomes narrower in a tapered manner (the portion from the second position P_Y2 to the third position P_Y3) and a portion of which the width is constant (the portion from the first position P_Y1 to the second position P_Y2). Consequently, it is possible to ensure the strength of the housing of the cartridge 1 while providing the right side notch 22 having a wider width. The length in the y-axis direction of the right side notch 22 having a wider width is shortened, whereby it is possible to ensure the strength of the housing.

As shown in FIG. 9, the upper ends of the terminals T are located above the upper end of the right side notch 22. Thus, it is possible to ensure the strength of the housing that protects the terminals T. The lower end of the right side notch 22 is located below the lower ends of the terminals T. The upper end of the right side notch 21 is located above the upper ends of the terminals T. The lower end of the right side notch 21 extends to near the lower ends of the short terminals placed in the lower area and the long terminals. Specifically, the right side notch 21 extends to below the centers in the y-axis direction of the short terminals placed in the lower area. Consequently, it is possible to cause the right side notch 21 to function as a rail, and it is possible to insert the cartridge 1 straight into the slot of the game apparatus. Thus, a positional shift is less likely to occur in a connection between the terminals of the cartridge and terminals of the slot. Since the right side notch 22 is provided at the lower end of the cartridge 1, it is easy to insert the cartridge 1 into the slot. Since the right side notch 21 is provided continuously with the right side notch 22, it is possible to smoothly guide the cartridge 1 in the insertion direction.

As shown in FIG. 10, a thickness Z0 (the length in the z-axis direction) of the cartridge 1 may be about 2.5 mm to 3.0 mm, for example. A depth Z1 (the length in the z-axis direction) of each of the right side notches 21 and 22 may be about 0.8 mm to 1.0 mm, for example. The depth Z1 of each of the right side notches 21 and 22 is smaller than half the thickness Z0 of the cartridge 1. The depth Z1 of each of the right side notches 21 and 22 is smaller than half a thickness Z2 of the front surface side housing 2. Thus, even if the right side notches 21 and 22 are provided, it is possible to sufficiently maintain the strength of the housing.

As shown in FIG. 9, the width of a housing (referred to as a "housing 27" in FIG. 9) of the cartridge 1 provided between a terminal provided on the rightmost side among the plurality of terminals T and the right side notch 22 is wider than a width X4 of each of the housings (the separators 24) provided between the plurality of terminals. Specifically, a width X3 of the housing 27 relating to a portion from the lower end to the second position P_Y2 of the right side notch 22 is wider than the width X4. The width of the housing 27 relating to the portion from the second position P_Y2 to the third position P_Y3 of the right side notch 22 is wider than the widths X3 and X4. Thus, in a case where the right side notch 22 is provided at the lower end and in the end portion in the x-axis direction of the front surface side housing 2, the width of the housing 27 relating to the right side notch 22 is greater than or equal to the width X4, whereby it is possible to maintain the strength of the housing. For example, it is possible to prevent the housing from being damaged when the cartridge falls. For example, the width X3 may be about 0.9 mm, and the width X4 may be about 0.85 mm. The widths X3 and X4 may be the same as each other. The width X3 may be narrower than the width X4.

The lower end of the terminal on the rightmost side among the plurality of terminals T (the terminal closest to the right side notch 22) is located above the lower end of a terminal adjacent to the terminal on the rightmost side. The terminal closest to a notch is likely to be shocked when the cartridge falls, but the lower end of the terminal closest to the notch is provided above the lower end of a terminal adjacent to the terminal closest to the notch, whereby it is possible to make the terminal on the rightmost side less likely to be shocked when the cartridge 1 falls.

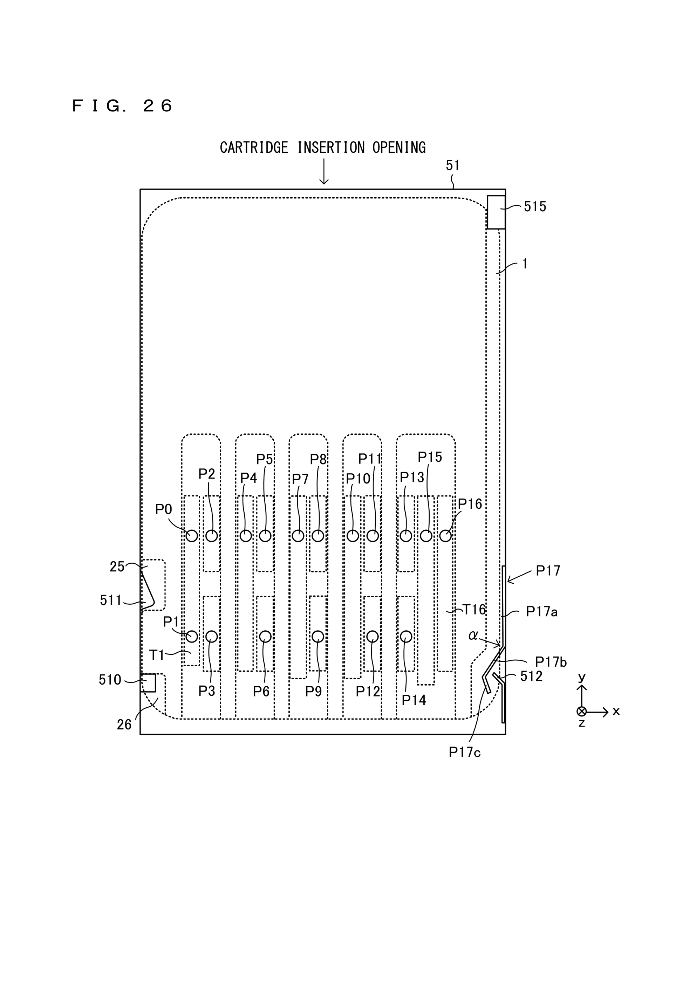

As shown in FIG. 8, the cartridge 1 includes left side notches 25 and 26. The left side notches 25 and 26 are formed at the left end (an end portion in the negative x-axis direction) and in an end portion in the negative z-axis direction of the front surface side housing 2. The left side notch 25 is formed further in the y-axis direction than the left side notch 26. The lower end of the left side notch 25 is located above the upper end of the right side notch 22. The left side notch 26 is formed in the y-axis direction from the lower end of the cartridge 1. The upper end of the left side notch 26 is located below the upper end of the right side notch 22. The left side notches 25 and 26 are used to fix the cartridge 1 at a predetermined position in the back direction of the slot of the game apparatus. Specifically, if the cartridge 1 is inserted into the slot of the game apparatus, a latch portion 511 (see FIG. 26) provided on a left side surface in the slot is fitted to the left side notch 25. In the back of the slot, a member 510 is provided that operates in conjunction with the latch portion 511. If the cartridge 1 is further pushed in in the back direction, the left side notch 26 acts on the member 510 and moves the member 510 and the latch portion 511 in the back direction. The member 510 and the latch portion 511 are biased in the y-axis direction by a biasing member (not shown). If the member 510 and the latch portion 511 are moved to a predetermined position in the back direction, the member 510 and the latch portion 511 are locked. Consequently, the cartridge 1 is fixed at the predetermined position in the back of the slot of the game apparatus. If the cartridge 1 is further pushed in in the back direction in the state where the cartridge 1 is fixed at the predetermined position, the member 510 and the latch portion 511 are unlocked, and the cartridge 1 is pushed out in the y-axis direction (a removal direction).

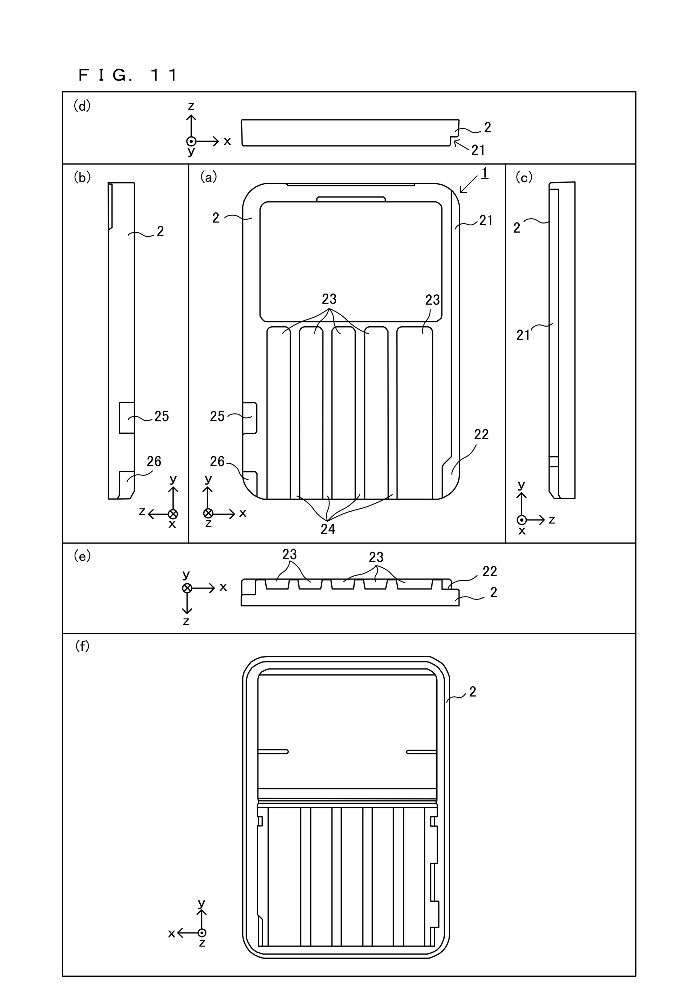

Next, the front surface side housing 2 and the back surface side housing 3 are described. FIG. 11 is six orthogonal views showing the external appearance of the front surface side housing 2. (a) of FIG. 11 is a front view of the front surface side housing 2. (b) of FIG. 11 is a left side view of the front surface side housing 2. (c) of FIG. 11 is a right side view of the front surface side housing 2. (d) of FIG. 11 is a top view of the front surface side housing 2. (e) of FIG. 11 is a bottom view of the front surface side housing 2. (f) of FIG. 11 is a rear view of the front surface side housing 2. An xyz coordinate system in FIG. 11 coincides with the xyz coordinate system in FIG. 8.

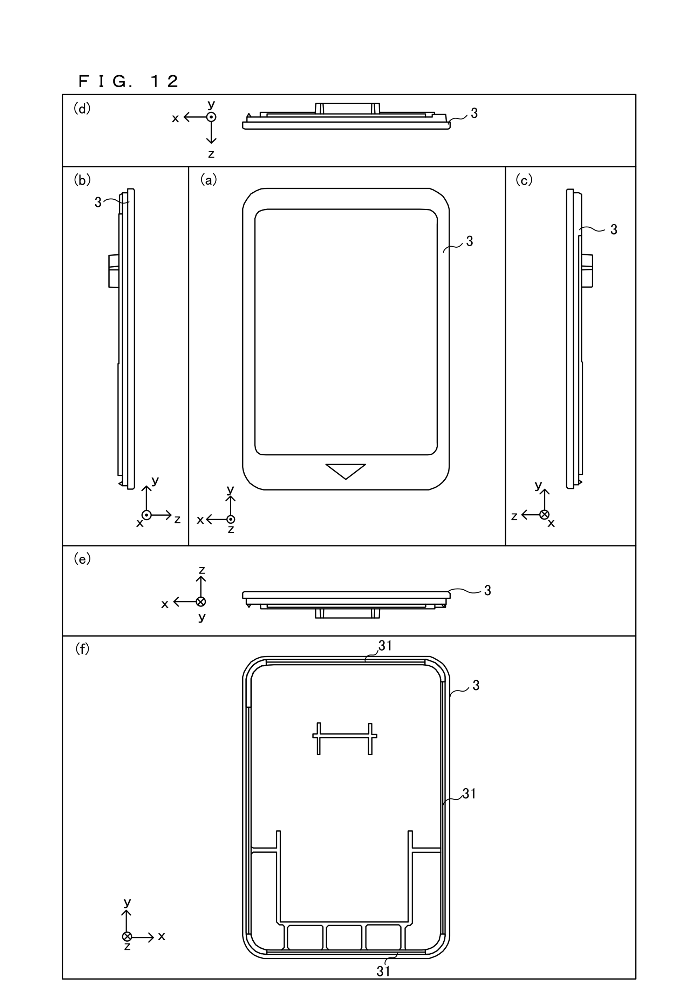

FIG. 12 is six orthogonal views showing the external appearance of the back surface side housing 3. (a) of FIG. 12 is a front view of the back surface side housing 3. An xyz coordinate system in FIG. 12 coincides with the xyz coordinate system in FIG. 8. (a) of FIG. 12 is a diagram showing the state where the cartridge 1 is viewed from the back surface. (b) of FIG. 12 is a left side view of the back surface side housing 3 and is a diagram showing the state where the cartridge 1 is viewed from the right side surface direction. (c) of FIG. 12 is a right side view of the back surface side housing 3. (d) of FIG. 12 is a top view of the back surface side housing 3. (e) of FIG. 12 is a bottom view of the back surface side housing 3. (f) of FIG. 12 is a rear view of the back surface side housing 3.

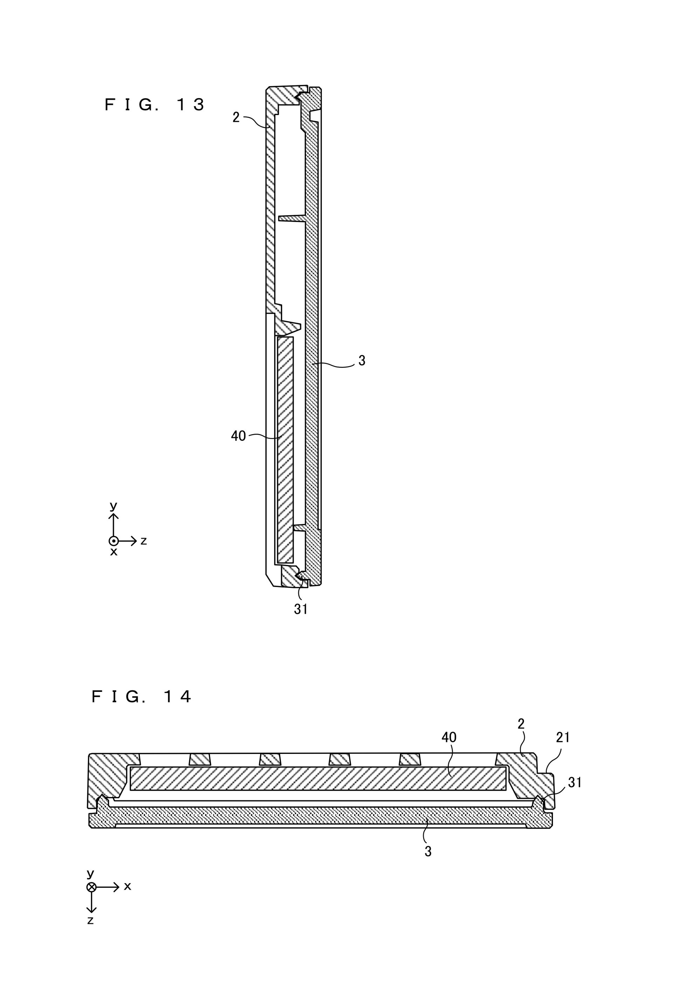

FIG. 13 is a cross-sectional view along an A-A line in FIG. 8. FIG. 14 is a cross-sectional view along a B-B line in FIG. 8.

For example, each of the front surface side housing 2 and the back surface side housing 3 is molded using a mold. As shown in FIG. 12, on the back surface of the back surface side housing 3, a rib 31 is provided along the outer edge of the back surface side housing 3. The rib 31 is a welding margin. As shown in FIGS. 13 and 14, the substrate 40 is accommodated between the back surface side housing 3 and the front surface side housing 2, and the back surface side housing 3 and the front surface side housing 2 are combined together in an overlapping manner, whereby the rib 31 of the back surface side housing 3 and the front surface side housing 2 are welded together.

The rib 31 is provided on each of the four sides on the back surface of the back surface side housing 3, and is not provided in round-shaped portions at the four corners. The rib 31 may also be provided in each of the round-shaped portions at the four corners on the back surface of the back surface side housing 3, and the front surface side housing 2 and the back surface side housing 3 may also be welded together in the round-shaped portions.

As shown in FIG. 14, the center of the rib 31 is provided to approximately match an end portion (an end portion on the center side of the cartridge 1) in the negative x-axis direction of the right side notch 21. In a case where the right side notch 22 is viewed in a planar view in a direction perpendicular to the xz plane, the center of the rib 31 is located further in the x-axis direction than an end portion in the negative x-axis direction of the right side notch 22. The width (the length in the x-axis direction) of the rib 31 may be shorter than the width (the length in the x-axis direction) of the right side notch 22. The width of the rib 31 may be shorter than the width (the length in the x-axis direction) of the right side notch 21. For example, the width of the rib 31 may be 0.5 mm to 0.6 mm.

The range in the x-axis direction of a welded position where the front surface side housing 2 and the back surface side housing 3 are welded together by the rib 31 includes the end portion in the negative x-axis direction of the right side notch 21. That is, when the welded position and the right side notch 21 are viewed in a planar view from a direction perpendicular to the xy plane, at least a part of the welded position and at least a part of the right side notch 21 overlap each other. Consequently, even if the right side notch 21 is provided in the front surface side housing 2, it is possible to firmly connect the front surface side housing 2 and the back surface side housing 3.

### (Connection between Cartridge 1 and Game Apparatus)

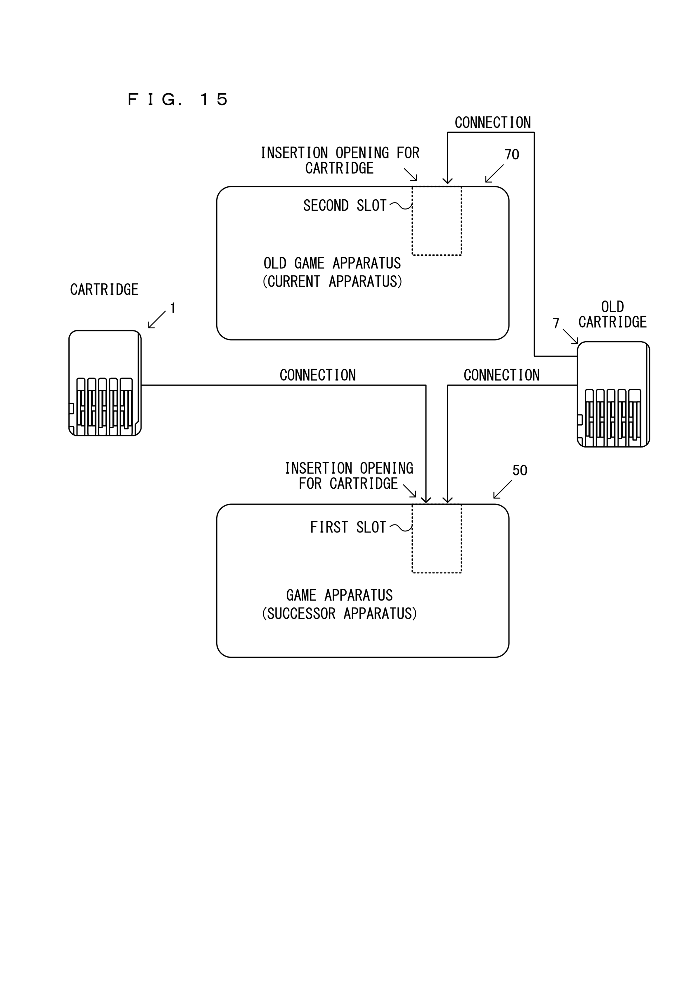

Next, a connection between the cartridge 1 and the game apparatus is described. FIG. 15 is a diagram illustrating a connection between the cartridge 1 and a game apparatus.

As shown in FIG. 15, the cartridge 1 is insertable into a first slot 51 of a game apparatus 50 and can be electrically connected to terminals provided in the first slot. The game apparatus 50 is a successor apparatus (a next-generation model) of an old game apparatus 70 and is released after the old game apparatus 70. The game apparatus 50 is a game apparatus having higher performance than that of the old game apparatus 70. As an example, the game apparatus 50 includes a CPU having a higher processing capability than that of the old game apparatus 70. As an example, the game apparatus 50 includes a GPU having a higher image processing capability than that of the old game apparatus 70. As an example, the game apparatus 50 can read or generate an image having a higher resolution than the old game apparatus 70 and display the image on a display. The cartridge 1 is detachably connected to the game apparatus 50. The game apparatus 50 reads the game program, image data, and the like stored in the cartridge 1 and executes game processing.

The cartridge 1 has a shape that can be inserted in a second slot of the old game apparatus 70, but cannot communicate with the old game apparatus 70 because the communication standards (protocols) differ. When the cartridge 1 is connected to the second slot of the old game apparatus 70, the screen of the old game apparatus 70 displays a message indicating that the inserted cartridge cannot be used in the old game apparatus 70.

A cartridge 7 manufactured for the old game apparatus 70 is also insertable into the second slot of the old game apparatus 70. The cartridge 7 includes the right side notch 21 similarly to the cartridge 1, but does not include the right side notch 22. The old game apparatus 70 can read the game program and the like from the cartridge 7 connected to the second slot and execute game processing.

The cartridge 7 is also insertable into the first slot 51 of the game apparatus 50. The game apparatus 50 can read the game program and the like from the cartridge 7 and execute game processing.

The cartridge 7 that does not include the right side notch 22 is referred to as the "old cartridge 7". In a case where the cartridge 1 and the old cartridge 7 are not particularly distinguished from each other, each of the cartridge 1 and the old cartridge 7 is referred to as a "cartridge". In a case where the game apparatus 50 and the old game apparatus 70 are not particularly distinguished from each other, each of the game apparatus 50 and the old game apparatus 70 is occasionally referred to as a "game apparatus". In a case where the first and second slots are not particularly distinguished from each other, each of the first and second slots is occasionally referred to as a "slot".

As described above, the old cartridge 7 can be connected to both the game apparatus 50 and the old game apparatus 70. Both the game apparatus 50 and the old game apparatus 70 can read data stored in the old cartridge 7 and write data to the old cartridge 7. Although the details will be described below, the game apparatus 50 includes an identification terminal for identifying the cartridge 1 and the old cartridge 7, and the old game apparatus 70 does not include the identification terminal.

### (Aspects of Game apparatus and Cartridge)

Next, the aspects of the game apparatus 50 and the cartridge 1 are described.

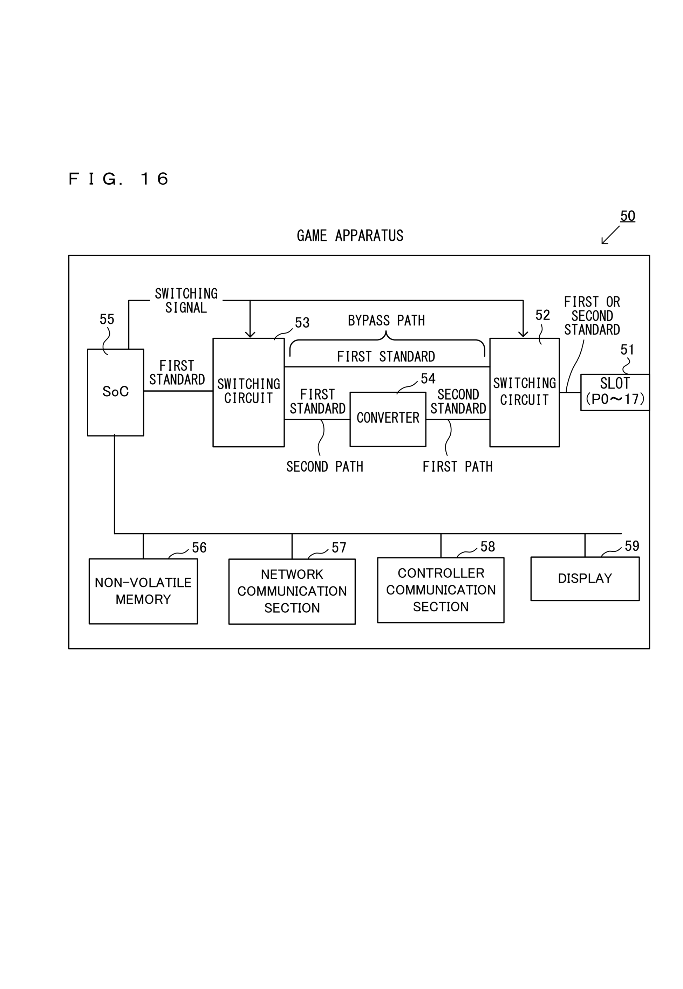

FIG. 16 is a diagram showing an example of the aspect of the game apparatus 50. As shown in FIG. 16, the game apparatus 50 includes a first slot 51. The above cartridge 1 or the above old cartridge 7 is insertable into and removable from the first slot 51. Inside the first slot 51, a connector including a plurality of terminals P (P0 to P 17) is provided. The plurality of terminals P provided inside the first slot 51 are connected to a plurality of terminals T provided in the cartridge 1. The details of the plurality of terminals P0 to P17 of the game apparatus 50 will be described below.

The game apparatus 50 includes a switching circuit 52, a switching circuit 53, and a converter 54. The game apparatus 50 also includes an SoC (System On a Chip) 55. The SoC 55 includes one or more processors and a memory. For example, the SoC 55 includes one or more CPUs (Central Processing Units). The CPUs of the SoC 55 execute an application program such as a game application. The SoC 55 also includes a GPU (Graphics Processing Unit) that performs image processing. In the game apparatus 50, the CPUs and the GPU may be individually provided.

The switching circuit 52 is electrically connected to the plurality of terminals P inside the first slot 51. The switching circuit 52 functions as a branching section that causes signals from the plurality of terminals P to branch into a first path or a bypass path. The bypass path branching from the switching circuit 52 is connected to the switching circuit 53. The first path branching from the switching circuit 52 is connected to the converter 54, and the converter 54 is further connected to the switching circuit 53 via a second path. In the switching circuit 53, the bypass path branching from the switching circuit 52 and the second path connected to the converter 54 join together. The switching circuit 53 is connected to the SoC 55. The switching circuits 52 and 53 switch the first path and the bypass path based on a switching signal from the SoC 55. The switching circuit 52, the switching circuit 53, the converter 54, the bypass path, the first path, and the second path may be configured by one or more integrated circuits.

In the bypass path between the switching circuits 52 and 53, a signal compliant with a first standard (protocol) is transmitted and received. For example, the first standard may be eMMC (embedded Multi Media Card). The first standard may be any other standard, or may be a unique standard. In the first path between the switching circuit 52 and the converter 54, a signal compliant with a second standard is transmitted and received. For example, the second standard may be a unique standard. The second standard may be any other standard.

The first and second standards are different in performance from each other. For example, in the first standard, the data transmission speed may be faster than in the second standard. In the first standard, power consumption may be smaller than in the second standard.

Communication between the switching circuit 53 and the converter 54 is performed based on the first standard. Specifically, if data communication using the first path is performed, the converter 54 converts a signal compliant with the second standard from the switching circuit 52 into a signal compliant with the first standard and transmits the signal compliant with the first standard to the switching circuit 53. The converter 54 also converts the signal compliant with the first standard from the switching circuit 53 into a signal compliant with the second standard and transmits the signal compliant with the second standard to the switching circuit 52. Communication between the SoC 55 and the switching circuit 53 is performed based on the first standard. The converter 54 also encrypts and decrypts communication between the SoC 55 and the old cartridge 7. Specifically, the converter 54 receives data from the SoC 55 via the switching circuit 53 and encrypts the data. The encrypted data is transmitted to the old cartridge 7 via the switching circuit 52. The converter 54 also receives data from the old cartridge 7 and decrypts the data. The decrypted data is transmitted to the SoC 55 via the switching circuit 53.

The game apparatus 50 includes the non-volatile memory 56, a network communication section 57 for connecting to the network NW, a controller communication section 58, and a display 59 for outputting an image. The controller communication section 58 communicates with the controller operated by the user, and receives operation data from the controller.

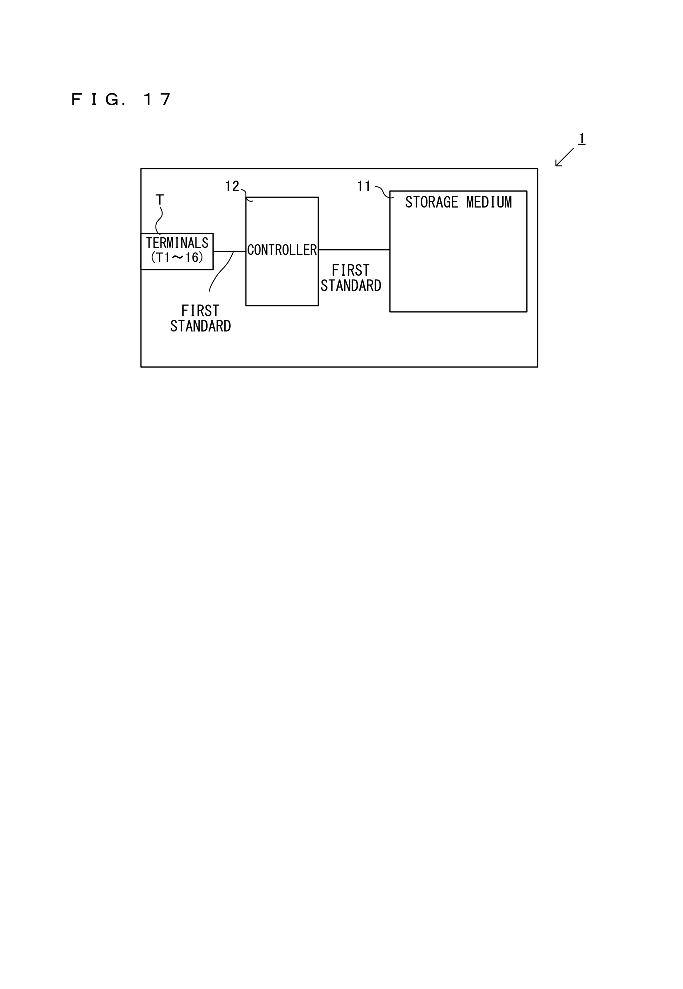

FIG. 17 is a diagram showing an example of the aspect of the cartridge 1. As shown in FIG. 17, the cartridge 1 includes a plurality of terminals T (T1 to T16). Although the details will be described below, if the cartridge 1 is inserted into the first slot 51 of the game apparatus 50, the plurality of terminals T are connected to the plurality of terminals P provided in the first slot 51.

The cartridge 1 includes a storage medium 11 and a controller 12. The storage medium 11 is implemented by a non-volatile memory such as a ROM or an MRAM. Various kinds of data are stored in the storage medium 11. The data stored in the storage medium 11 are encrypted in a predetermined format. When the game apparatus 50 is successful in authentication with the cartridge 1, the game apparatus 50 can acquire the data encrypted in the predetermined format.

The storage medium 11 of the first-type cartridge 1 is a non-volatile memory having a relatively small capacity. First information specifying an application (e.g., identification information or title information of the application) is stored in the storage medium 11 of the first-type cartridge 1. Furthermore, identification information (e.g., a cartridge ID that uniquely identifies the cartridge, a vendor ID indicating a vendor (manufacturer), etc.) may be stored in the storage medium 11 of the first-type cartridge 1. Moreover, an icon image 500 displayed during downloading of the application program is stored in the storage medium 11 of the first-type cartridge 1. Moreover, firmware for controlling communication with the game apparatus 50 is stored in the storage medium 11 of the first-type cartridge 1. The firmware performs management of a storage area of the storage medium 11 (including reading process, writing process, preservation process, etc.), management of communication with the game apparatus, and management regarding security.

The storage medium 11 of the second-type cartridge 1 is a non-volatile memory having a relatively large capacity. An application program, title information, identification information of the application, an icon image, etc., are stored in the storage medium 11 of the second-type cartridge 1. Furthermore, identification information (e.g., a cartridge ID that uniquely identifies the cartridge, a vendor ID, etc.) may be stored in the storage medium 11 of the second-type cartridge 1. Moreover, firmware for controlling communication with the game apparatus 50 is stored in the storage medium 11 of the second-type cartridge 1.

The plurality of terminals T and the controller 12 are electrically connected together. Specifically, the plurality of terminals T and the controller 12 are connected together via a single path (signal lines; a bus). The controller 12 and the storage medium 11 are connected together via a single path (signal lines; a bus).

The controller 12 controls communication between the cartridge 1 and the game apparatus 50, and performs processing according to a reading command from the game apparatus 50. The controller 12 performs communication based on the first standard with the game apparatus 50.

### (Connection between Cartridge 1 and Game Apparatus)

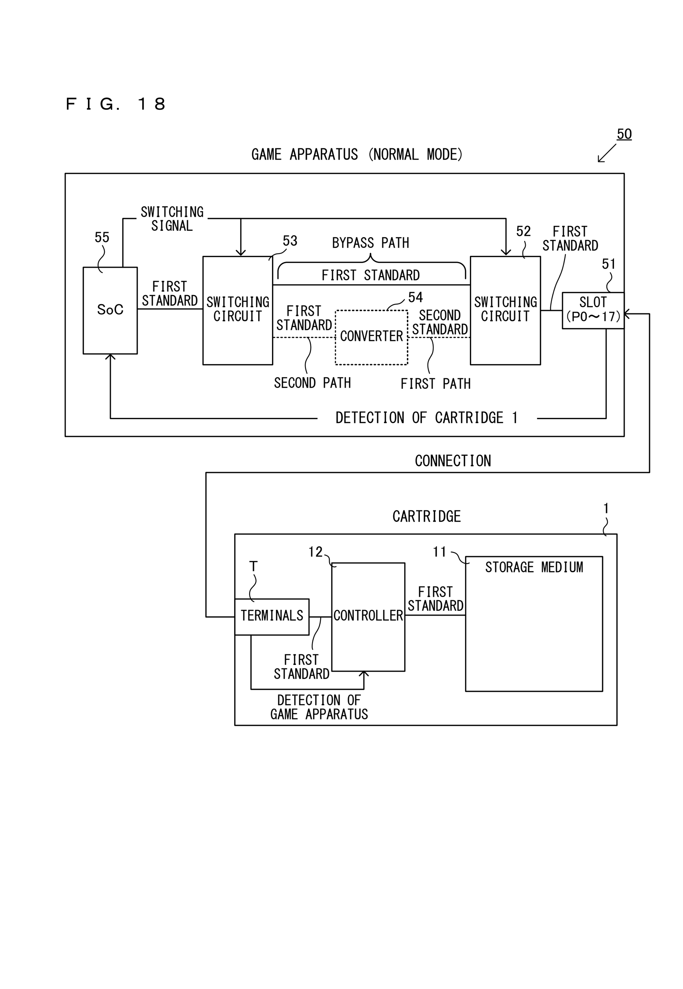

Next, a description is given of the operations of the cartridge 1 and the game apparatus 50 when the cartridge 1 is connected to the game apparatus 50. FIG. 18 is a diagram illustrating the operations of the game apparatus 50 and the cartridge 1 when the cartridge 1 is connected to the game apparatus 50.

As shown in FIG. 18, if the cartridge 1 is connected to the first slot 51 of the game apparatus 50, the game apparatus 50 operates in the normal mode. In the normal mode, the bypass path is enabled, and communication between the game apparatus 50 and the cartridge 1 is performed based on the first standard via the bypass path. The communication between the game apparatus 50 and the cartridge 1 is encrypted in a predetermined format.

Specifically, if the cartridge 1 is connected to the first slot 51, based on the states of the terminals in the first slot 51, the SoC 55 detects that the cartridge 1 is connected. The bypass path is enabled by default, and the switching circuits 52 and 53 switch from the bypass path to the first path based on a switching signal from the SoC 55. If the SoC 55 detects the cartridge 1, the SoC 55 does not transmit the switching signal to the switching circuits 52 and 53. If the SoC 55 detects that the cartridge 1 is connected, the SoC 55 may transmit a switching signal for switching to the bypass path to the switching circuits 52 and 53. Based on the switching signal, the switching circuits 52 and 53 may switch to the bypass path. Consequently, communication between the game apparatus 50 and the cartridge 1 is performed based on the first standard.

On the other hand, if the cartridge 1 is connected to the first slot 51 of the game apparatus 50, based on the states of the terminals T, the cartridge 1 detects that the cartridge 1 is connected to the game apparatus 50. Upon detecting that the cartridge 1 is connected to the game apparatus 50, the controller 12 starts operating by activating the firmware. Consequently, communication between the cartridge 1 and the game apparatus 50 is performed based on the first standard.

Specifically, when the cartridge 1 is connected to the game apparatus 50, the SoC 55 of the game apparatus 50 determines whether the connected cartridge 1 is the first-type cartridge 1 or the second-type cartridge 2. For example, the SoC 55 of the game apparatus 50 determines whether the connected cartridge 1 is the first-type cartridge 1 or the second-type cartridge 2, based on the identification information stored in the cartridge 1 (e.g., a cartridge ID that uniquely identifies the cartridge, a vendor ID indicating a vendor (manufacturer), etc.) or information such as the capacity of the storage medium 11. Upon determining that the connected cartridge 1 is the first-type cartridge 1, the SoC 55 acquires the first information from the first-type cartridge 1, and downloads the application program from the server SV, based on the first information. On the other hand, upon determining that the connected cartridge 1 is the second-type cartridge 1, the SoC 55 reads the application program from the second-type cartridge 1.

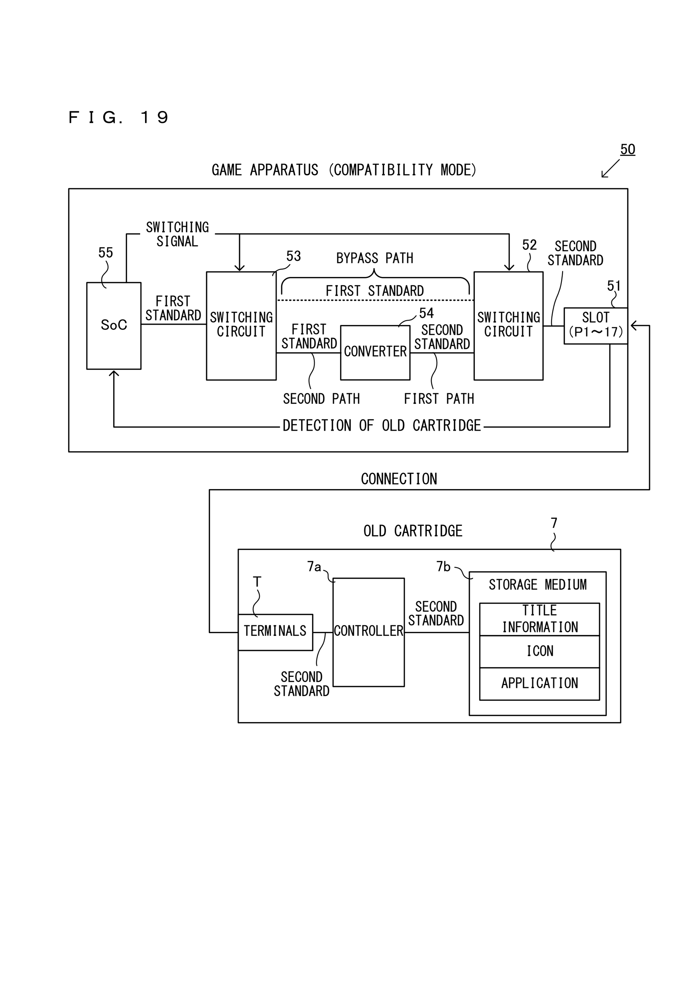

Next, a description is given of the operation of the game apparatus 50 when the old cartridge 7 is connected to the game apparatus 50. FIG. 19 is a diagram illustrating the operation of the game apparatus 50 when the old cartridge 7 is connected to the game apparatus 50.

As shown in FIG. 19, if the old cartridge 7 is connected to the first slot 51 of the game apparatus 50, the game apparatus 50 operates in the compatibility mode. In the compatibility mode, the first path is enabled (the bypass path is disabled), and the game apparatus 50 and the old cartridge 7 communicate with each other based on the second standard via the first path. The communication between the game apparatus 50 and the old cartridge 7 is encrypted in a format different from the predetermined format in the communication between the game apparatus 50 and the cartridge 1.

Specifically, if the old cartridge 7 is connected to the first slot 51, based on the states of the terminals in the first slot 51, the SoC 55 detects that the old cartridge 7 is connected. If the SoC 55 detects that the old cartridge 7 is connected, the SoC 55 transmits a switching signal for switching to the first path to the switching circuits 52 and 53. Based on the switching signal, the switching circuits 52 and 53 switch to the first path. Consequently, communication between the game apparatus 50 and the old cartridge 7 is performed based on the second standard.

The old cartridge 7 recognizes that the old cartridge 7 is connected to the game apparatus 50 or the old game apparatus 70, but does not recognize to which of the game apparatuses the old cartridge 7 is connected. Similarly to the cartridge 1, the old cartridge 7 includes a plurality of terminals T. The old cartridge 7 also includes a controller 7a and a storage medium 7b. If the old cartridge 7 is connected to the game apparatus 50 or the old game apparatus 70, the controller 7a controls a signal compliant with the second standard. In the storage medium 7b, title information, an icon image, and an application program are stored.

In FIG. 17, the controller 12 and the storage medium 11 of the cartridge 1 may be connected together based on a standard for a storage medium interface (a third standard). If the game apparatus reads data in the cartridge 1, data from the storage medium 11 may be transmitted as a signal relating to the third standard to the controller 12, and the controller 12 may convert the signal into a signal compliant with the first standard. Separately from the controller 12, a converter may be provided between the controller 12 and the storage medium 11, and the converter may convert the third standard and the first standard. Similarly, in FIG. 19, the controller 7a and the storage medium 7b of the old cartridge 7 may be connected together based on the third standard. If the game apparatus reads data in the old cartridge 7, data from the storage medium 7b may be transmitted as a signal relating to the third standard to the controller 7a, and the controller 7a may convert the signal into a signal compliant with the second standard.

### (Description of Terminals T of Cartridge 1)

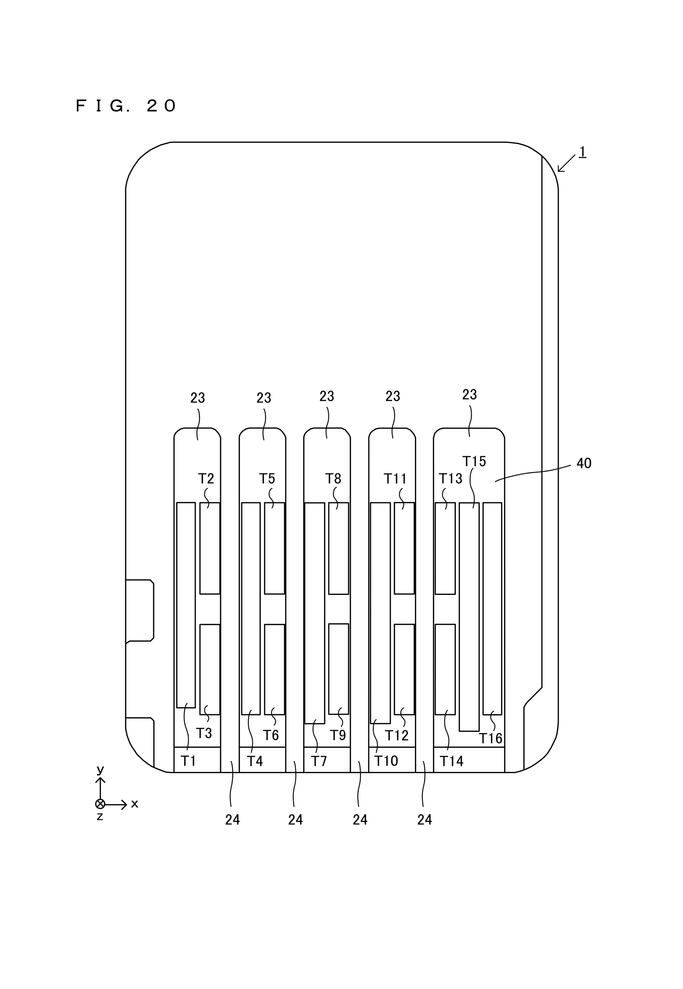

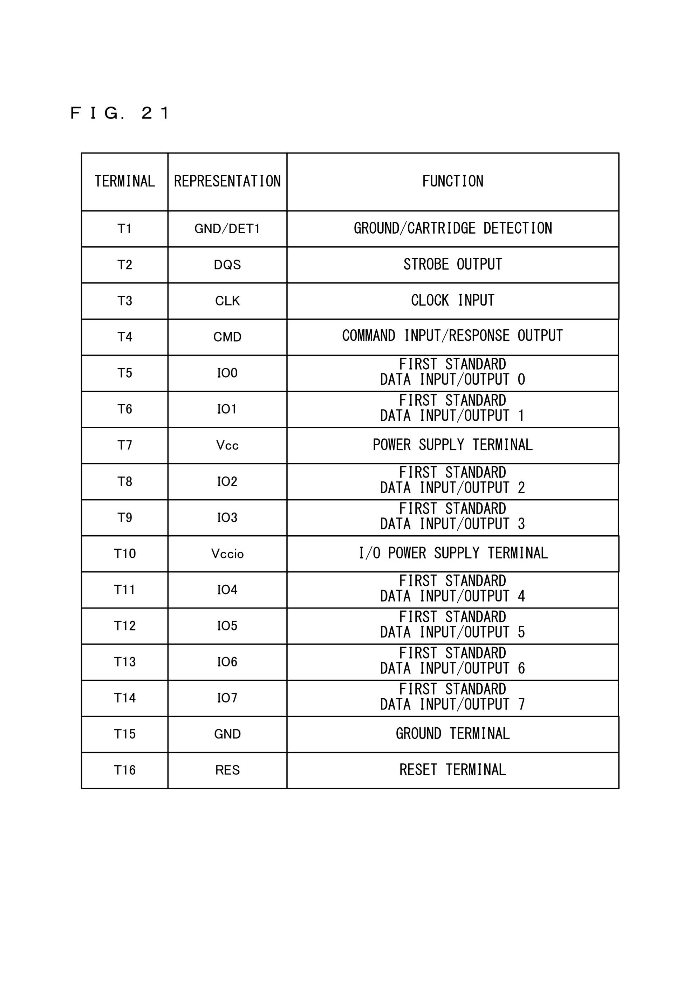

Next, the terminals T of the cartridge 1 are described. FIG. 20 is a diagram showing the details of the terminals T1 to T16 provided on the front surface of the cartridge 1. FIG. 21 is a diagram showing the functions of the terminals T of the cartridge 1.

The cartridge 1 is inserted into an insertion opening of the first slot 51 of the game apparatus 50 from the lower end of the cartridge 1. Here, the insertion/removal direction of the cartridge 1 (the up-down direction in FIG. 20; the positive/negative y-axis direction) is referred to as a "first direction", and a direction perpendicular to the first direction (the left-right direction in FIG. 20; the positive/negative x-axis direction) is referred to as a "second direction".

As shown in FIG. 20, a terminal placement area is provided on the front surface of the substrate 40, and the terminals T1 to T16 are placed in the terminal placement area. The terminal placement area is divided into an upper area and a lower area. The terminals T1, T4, T7, T10, T15, and T16 are long terminals extending in the first direction and across the upper and lower areas of the terminal placement area. The terminals T2, T5, T8, T11, and T13 are short terminals extending in the first direction and placed in the upper area of the terminal placement area. The terminals T3, T6, T9, T12, and T14 are short terminals extending in the first direction and placed in the lower area of the terminal placement area.

The positions in the y-axis direction of the upper ends of the long terminals T1, T4, T7, T10, T15, and T16 and the short terminals T2, T5, T8, T11, and T13 placed in the upper area are the same as each other. The positions in the y-axis direction of the lower ends of the short terminals T2, T5, T8, T11, and T13 placed in the upper area are the same as each other. The positions in the y-axis direction of the upper ends of the short terminals T3, T6, T9, T12, and T14 placed in the lower area are the same as each other. The positions in the y-axis direction of the lower ends of the short terminals T3, T6, T9, T12, and T14 placed in the lower area are the same as each other. The positions in the x-axis direction of the terminals T2 and T3 are the same as each other. The positions in the x-axis direction of the terminals T5 and T6 are the same as each other. The positions in the x-axis direction of the terminals T8 and T9 are the same as each other. The positions in the x-axis direction of the terminals T11 and T12 are the same as each other. The positions in the x-axis direction of the terminals T13 and T14 are the same as each other.

The positions in the y-axis direction of the lower ends of the long terminals T1, T4, T7, T10, T15, and T16 are different from each other. Specifically, the terminal T15 is the longest, and the lower end of the terminal T15 is the closest to the lower end of the cartridge 1. The positions in the y-axis direction of the lower ends of the terminals T7 and T10 are the same as each other. The lower ends of the terminals T7 and T10 are above the lower end of the terminal T15 and below the lower end of the terminal T3. The position in the y-axis direction of the lower end of the terminal T16 is the same as the position in the y-axis direction of the lower end of the terminal T3. The position in the y-axis direction of the lower end of the terminal T1 is above the lower end of the terminal T3 and located on the uppermost side.

The widths (the lengths in the x-axis direction) of the terminals T1 to T16 are the same as each other. The widths of the terminals T1 to T16 may be about 1 mm, for example. The lengths in the y-axis direction of the short terminals T2, T5, T8, T11, and T13 placed in the upper area and the short terminals T3, T6, T9, T12, and T14 placed in the lower area are all the same as each other, and may be about 4.5 mm, for example. The length in the y-axis direction of the terminal T15 may be about 11.3 mm. The lengths in the y-axis direction of the terminals T7 and T10 may be about 10.9 mm. The length in the y-axis direction of the terminal T1 may be about 10.1 mm, for example.

The distance in the x-direction between a plurality of terminals exposed through the same opening portion 23 may be about 0.2 mm, for example. Specifically, the distance between the terminals T1 and T2, the distance between the terminals T4 and T5, the distance between the terminals T7 and T8, the distance between the terminals T10 and T11, the distance between the terminals T13 and T15, and the distance between the terminals T15 and T16 are all equal to each other, and may be about 0.2 mm. The distance in the x-direction between two terminals divided by a separator 24 may be about 1.0 mm, for example. Specifically, the distance between the terminals T2 and T4, the distance between the terminals T5 and T7, the distance between the terminals T8 and T10, the distance between the terminals T11 and T13, and the distance between the terminals T12 and T14 are all equal to each other, and may be about 1.0 mm.

As shown in FIG. 21, the terminal T1 is a ground terminal. The terminal T1 is grounded by being connected to the ground terminal P0 of the game apparatus 50 or the old game apparatus 70. The terminal T1 functions also as a detection terminal for the game apparatus 50 or the old game apparatus 70 to detect the cartridge 1. In the following figures, the ground terminal is represented as "GND", and the detection terminal is represented as "DET1".

The terminal T2 is a strobe terminal for outputting a strobe signal to the game apparatus 50 or the old game apparatus 70. In the following figures, the terminal T2 is occasionally represented as "DQS".

The terminal T3 is a clock terminal for inputting a clock signal from the game apparatus. In the following figures, the terminal T3 is occasionally represented as "CLK".

If the cartridge 1 is connected to the game apparatus 50, the clock signal from the game apparatus 50 is input to the terminal T3. If the cartridge 1 is connected to the game apparatus 50, the strobe signal from the cartridge 1 is output from the terminal T2 to the game apparatus 50.

The clock signal is a signal used when the game apparatus transmits data to the cartridge 1 via a data input/output terminal. The clock signal is a signal that periodically changes to a high-voltage state and a low-voltage state, and is a high-frequency signal. Based on the state of the voltage of the data input/output terminal at the timing when the clock signal switches (in other words, the timing when the low voltage and the high voltage switch), it is determined what data ("0" or "1") is flowing through the data input/output terminal. That is, the clock terminal T3 is a terminal through which a high-frequency signal flows, and is a terminal of which the voltage frequently changes.

The strobe signal is a signal output from the cartridge 1 and is a signal used when the game apparatus reads data from the cartridge 1 via a data input/output terminal. Similarly to the clock terminal T3, the strobe terminal T2 is also a terminal through which a high-frequency signal flows, and is a terminal of which the voltage frequently changes.

The terminal T4 functions as a terminal for inputting a command from the game apparatus 50 and outputs a response to the game apparatus 50. In the figures, the terminal T4 for inputting the command from the game apparatus 50 and outputs the response to the game apparatus 50 is occasionally represented as "CMD". Examples of the command from the game apparatus 50 to the cartridge 1 include a command to read data, a command to write data, a command to inquire of the cartridge 1 about the state of the cartridge 1, and the like. Examples of the response from the cartridge 1 to the game apparatus 50 include responses to these commands. For example, if the game apparatus 50 reads data stored in the cartridge 1, the cartridge 1 receives a command to read the data via the terminal T4. When the command to read the data is transmitted, the terminal T4 changes to the high-voltage state and the low-voltage state, but the frequency of the terminal T4 is lower than those of the above clock terminal and the like. After the command is transmitted and when the data is read using a data input/output terminal, the terminal T4 is maintained at the low-voltage or the high-voltage state, and the voltage is approximately constant. The same applies to a case where the game apparatus 50 writes data to the cartridge 1. That is, after the game apparatus 50 transmits a command to write the data to the cartridge 1 and when the data is read using a data input/output terminal, the voltage of the terminal T4 is approximately constant.

As shown in FIG. 21, the terminals T5, T6, T8, T9, T11, T12, T13, and T14 are data input/output terminals for inputting and outputting data between the cartridge 1 and the game apparatus. The data input/output terminals T5, T6, T8, T9, T11, T12, T13, and T14 are occasionally represented as "IO0", "IO1", "IO2", "IO3", "IO4", "IO5", "IO6", and "IO7", respectively. The terminals T5, T6, T8, T9, T11, T12, T13, and T14 function as data input/output terminals for transmitting and receiving a signal compliant with the first standard.

Data communication via each data input/output terminal is performed at a relatively high speed. When data is input and output, a high-frequency signal flows through the data input/output terminal. That is, it can be said that the data input/output terminal is a terminal of which the voltage frequently changes.

The terminal T7 is a power supply terminal for supplying power to the controller 12. The terminal T7 is occasionally represented as "Vcc". If the cartridge 1 is electrically connected to the game apparatus 50, the game apparatus 50 supplies a predetermined voltage to the terminal T7, and the controller 12 of the cartridge 1 operates with this power supply voltage. If the cartridge 1 is electrically connected to the old game apparatus 70, the old game apparatus 70 supplies the same voltage to the terminal T7, and the controller 12 of the cartridge 1 operates with this power supply voltage. However, when it is determined that the cartridge 1 is connected to the old game apparatus 70, the controller 12 does not communicate with the game apparatus 70. The power supply voltage supplied from the game apparatus 50 or the old game apparatus 70 to the terminal T7 is about 3.1 V, for example. The power supply voltage supplied to the terminal T7 is approximately constant. That is, it can be said that the power supply terminal T7 is not a terminal through which a high-frequency signal flows as in the clock terminal, the strobe terminal, and the data input/output terminals, and is a terminal of which the voltage changes infrequently.

The terminal T10 is a power supply terminal for inputting and outputting data. The terminal T10 is occasionally represented as "Vccio". If the cartridge 1 is electrically connected to the game apparatus 50, the game apparatus 50 supplies a predetermined power supply voltage for inputting and outputting data to the terminal T10. If the cartridge 1 is electrically connected to the old game apparatus 70, the old game apparatus 70 supplies the same power supply voltage for inputting and outputting data to the terminal T10. However, when it is determined that the cartridge 1 is connected to the old game apparatus 70, data communication is not performed between the old game apparatus 70 and the cartridge 1. The power supply voltage supplied from the game apparatus 50 or the old game apparatus 70 to the terminal T10 is about 1.8 V, for example. The power supply voltage supplied to the terminal T10 is approximately constant. That is, it can be said that the power supply terminal T10 is not a terminal through which a high-frequency signal flows as in the clock terminal, the strobe terminal, and the data input/output terminals, and is a terminal of which the voltage changes infrequently.

As shown in FIG. 21, the terminal T15 is a ground terminal. The terminal T15 is occasionally represented as "GND". The terminal T15 is connected to a ground terminal of the game apparatus 50 or the old game apparatus 70, whereby the cartridge 1 is grounded. Since the terminal T15 is a ground terminal, the voltage of the terminal T15 is approximately constant. That is, it can be said that the terminal T15 is not a terminal through which a high-frequency signal flows as in the clock terminal, the strobe terminal, and the data input/output terminals, and is a terminal of which the voltage changes infrequently.

The terminal T16 is a reset terminal for inputting a reset cancellation signal from the game apparatus 50. The terminal T16 is occasionally represented as "RES". If the reset cancellation signal is input to the cartridge 1, the cartridge 1 starts firmware, starts operating, and is initialized. After the cartridge 1 and the game apparatus 50 are electrically connected together, the terminal T16 is maintained in a high-voltage state (a reset cancellation state). Thus, it can be said that the reset terminal T16 is not a terminal through which a high-frequency signal flows as in the clock terminal, the strobe terminal, and the data input/output terminals, and is a terminal of which the voltage changes infrequently.

In the cartridge 1, among a plurality of terminals exposed through the same opening portion 23, a terminal of which the voltage frequently changes and a terminal of which the voltage changes infrequently are placed adjacent to each other. Consequently, it is possible to reduce the influence of noise applied to terminals adjacent to each other. For example, the terminals T12 and T14 are divided by a separator 24 and relatively distant from each other, and therefore, the terminals T12 and T14 are less likely to be influenced by noise from each other.

For example, if the cartridge 1 is connected to the game apparatus 50, the terminal T4 functions as the command input/response output terminal. The terminal T4 is adjacent to the data input/output terminals T5 and T6. The terminal T4 has an approximately constant voltage when data is input and output using the data input/output terminals T5 and T6. In a case where the cartridge 1 is connected to the game apparatus 50, and even when a command is transmitted and received to and from the terminal T4, the voltage of the terminal T4 changes relatively infrequently. Thus, the data input/output terminals T5 and T6 are less likely to be influenced by noise from the terminal T4 adjacent to the data input/output terminals T5 and T6. The terminal T4 is also placed adjacent to the strobe terminal T2 and the clock terminal T3. The voltage of the terminal T4 changes infrequently, and the terminal T4 are relatively distant from the strobe terminal T2 and the clock terminal T3. Thus, the strobe terminal T2 and the clock terminal T3 are less likely to be influenced by noise from the terminal T4.

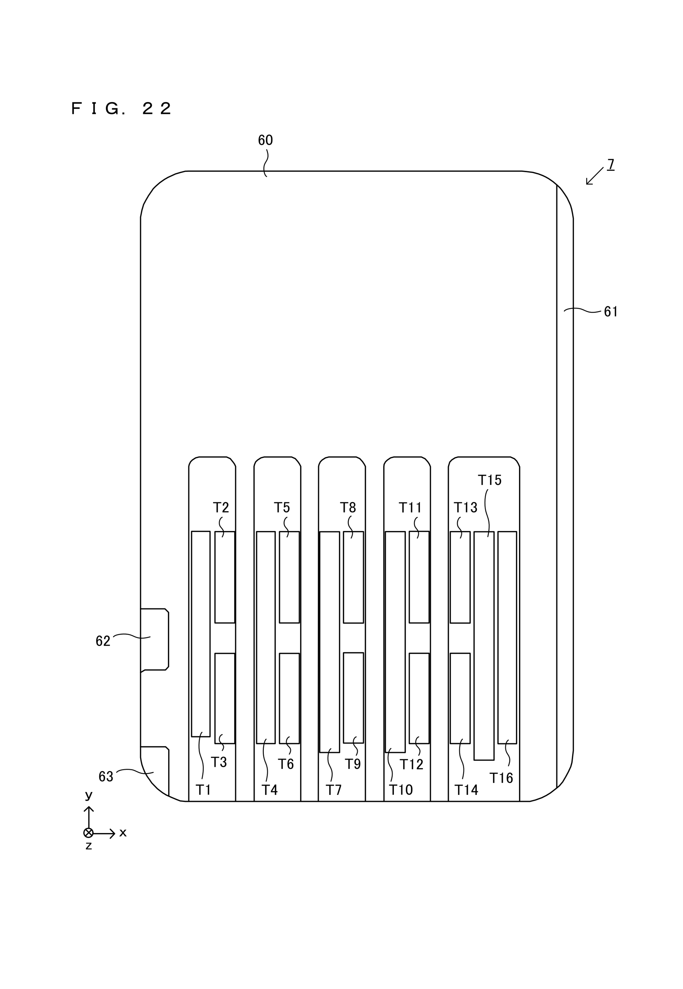

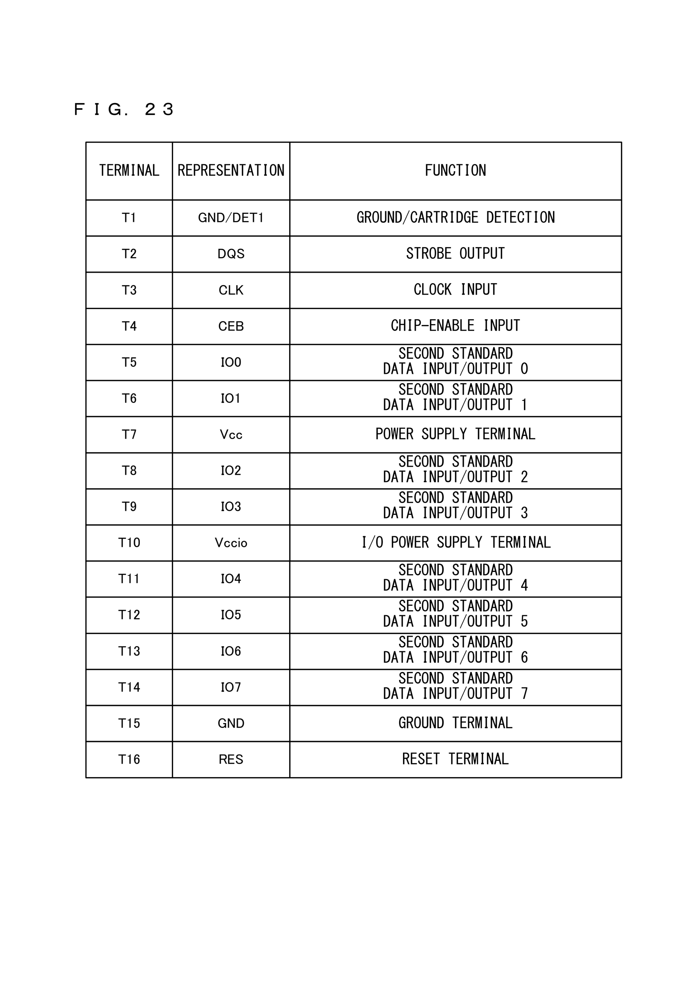

Here, the old cartridge 7 is described. FIG. 22 is a front view of the old cartridge 7. FIG. 23 is a diagram showing the functions of the terminals T of the old cartridge 7.

The shape and the size of the old cartridge 7 are almost the same as the shape and the size of the cartridge 1 except that the shapes of the notches are different. Similarly to the cartridge 1, the old cartridge 7 is inserted into the slot of the game apparatus 50 or the old game apparatus 70 from the lower end of the old cartridge 7.

As shown in FIG. 22, the old cartridge 7 includes a housing 60. At the right end of the housing 60, a notch 61 extending in the insertion/removal direction (a first direction) of the old cartridge 7 is provided. Similarly to the right side notch 21 of the cartridge 1, the notch 61 of the old cartridge 7 functions as a rail when the old cartridge 7 is inserted into the slot of the game apparatus 50 or the old game apparatus 70.

In the old cartridge 7, a notch similar to the right side notch 22 provided at the right end and the lower end of the cartridge 1 is not provided.

At the left end of the housing 60, notches 62 and 63 are provided. The notch 62 of the old cartridge 7 has the same shape as that of the left side notch 25 of the cartridge 1 and is located at the same position as that of the left side notch 25. The notch 63 of the old cartridge 7 has the same shape as that of the left side notch 26 of the cartridge 1 and is located at the same position as that of the left side notch 26.

A substrate is accommodated inside the housing 60. On the front surface of the substrate, the terminals T1 to T16 are provided.

Specifically, the terminals T1 to T16 of the old cartridge 7 have the same shapes and sizes as those of the terminals T1 to T16 of the cartridge 1. The positions of the terminals T1 to T16 of the old cartridge 7 are placed at the same positions as those of the terminals T1 to T16 of the cartridge 1.

As shown in FIG. 23, the terminal T1 of the old cartridge 7 has the same function as that of the terminal T1 of the cartridge 1. The terminals T2 and T3 of the old cartridge 7 have the same functions as, respectively, those of the terminals T2 and T3 of the cartridge 1.

The terminal T4 of the old cartridge 7 is a chip-enable terminal for inputting a chip-enable signal.

The terminals T5 and T6 of the old cartridge 7 are data input/output terminals for transmitting and receiving a signal compliant with the second standard. Similarly, the terminals T8, T9, T11, T12, T13, and T14 of the old cartridge 7 are data input/output terminal for transmitting and receiving a signal compliant with the second standard.

The terminal T7 of the old cartridge 7 is a power supply terminal and has the same function as that of the terminal T7 of the cartridge 1. The same power supply voltage is supplied from the game apparatus to the terminal T7. Similarly, the terminal T10 of the old cartridge 7 is a power supply terminal and has the same function as that of the terminal T10 of the cartridge 1. The same power supply voltage is supplied from the game apparatus to the terminal T10.

The terminal T15 of the old cartridge 7 is a ground terminal and has the same function as that of the terminal T15 of the cartridge 1. Similarly, the terminal T16 of the old cartridge 7 is a reset terminal and has the same function as that of the terminal T16 of the cartridge 1.

### (Description of First Slot 51 of Game apparatus 50)

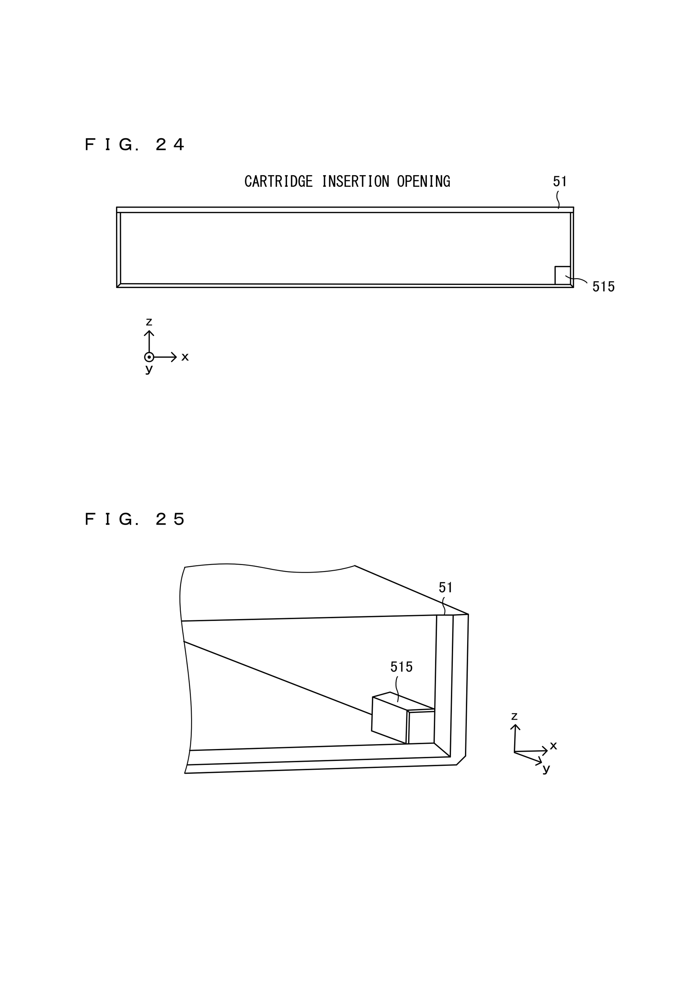

Next, the first slot 51 of the game apparatus 50 is described. FIG. 24 is a diagram showing the cartridge insertion opening of the first slot 51 as viewed from the front.

FIG. 25 is a partially enlarged view of the cartridge insertion opening as viewed from an oblique direction. The depth direction of the plane of the paper in FIG. 24 is the insertion direction (the negative y-axis direction) of the cartridge. FIGS. 24 and 25 show only the shape of the cartridge insertion opening of the slot 51 and omit the terminals and the like in the slot.

The cartridge insertion opening of the first slot 51 has approximately the same shape as that of the upper surface of the cartridge 1 and is formed to be slightly larger than the cartridge 1. As shown in FIG. 24, the cartridge insertion opening of the first slot 51 is approximately a rectangle. As shown in FIG. 25, a wall portion 515 is provided on an inner wall of the first slot 51. The wall portion 515 is provided at a position slightly further in the negative y-axis direction from the right end (an end portion in the x-axis direction) and the upper end (an end portion in the y-axis direction) in the first slot 51. The wall portion 515 is an example of a guide portion for correctly inserting the cartridge into the first slot 51. As shown in FIG. 25, the wall portion 515 is provided near the insertion opening, and is not provided in the back direction of the first slot 51. The wall portion 515 may be formed to extend from the cartridge insertion opening to the inside of the first slot 51 in the insertion direction of the cartridge.

The wall portion 515 is formed in the negative x-axis direction from the end portion in the x-axis direction in the first slot 51 and in the z-axis direction from an end portion in the negative z-axis direction in the first slot 51. The right side notch 22 and the wall portion 515 function as a guide for inserting the cartridge into the first slot 51 in a correct direction. While the cartridge is inserted, the right side notch 21 and the wall portion 515 come into contact with each other. The right side notch 21 functions as a rail when the cartridge is slid in the insertion direction. The right side notch 22 may also function as a rail by coming into contact with the wall portion 515 when the cartridge is inserted into the slot, or may be formed not to come into contact with the wall portion 515 (not to function as a rail) when the cartridge is inserted into the slot. The user can insert the cartridge 1 in the insertion direction by inserting the cartridge 1 into the cartridge insertion opening so that the wall portion 515 and the right side notch 22 of the first slot 51 fit together, and pushing in the cartridge 1. With the right side notches 22 and 21 provided at one end of the cartridge 1 and the wall portion 515 provided at a relating position in the first slot 51, the user can insert the cartridge 1 into the cartridge insertion opening in a correct direction and also easily insert the cartridge 1 to the back of the first slot 51.

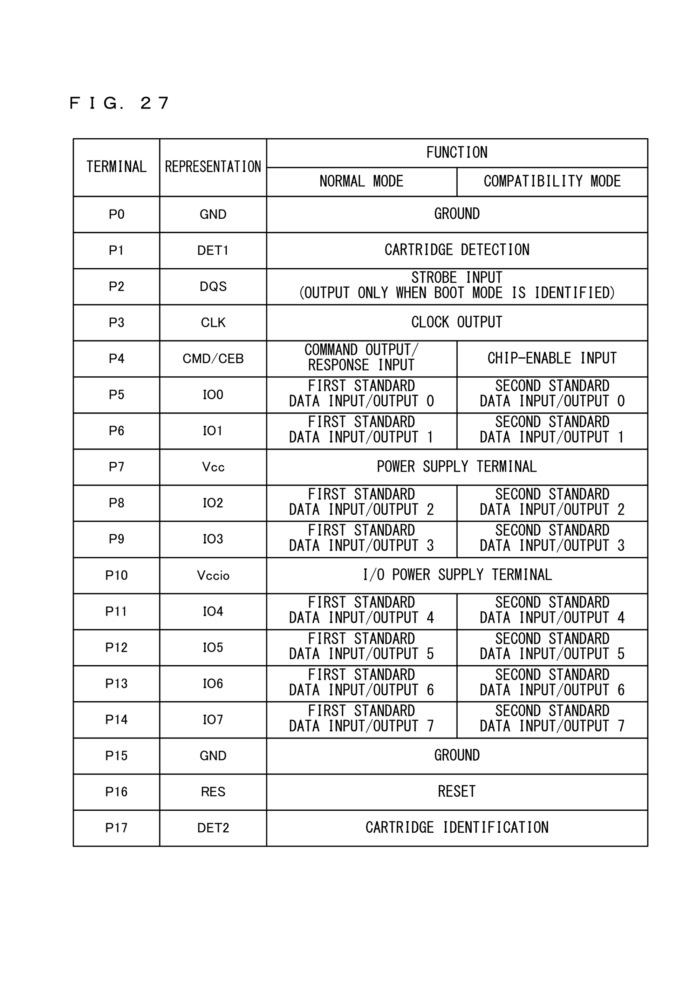

FIG. 26 is a diagram showing the placement of the plurality of terminals P provided inside the first slot 51. FIG. 27 is a diagram showing the functions of the terminals P provided inside the first slot 51. FIG. 26 is a diagram showing the state where the first slot 51 is viewed from the front in a case where the cartridge 1 is inserted into the first slot 51. In FIG. 26, the cartridge 1 is indicated by a dashed line, and members included in the first slot 51 are indicated by solid lines.

If the cartridge 1 is inserted to the back of the first slot 51, the cartridge 1 is fixed at a predetermined position in the back direction of the first slot 51 by a lock mechanism.

As shown in FIG. 26, the plurality of terminals P0 to P16 are provided inside the first slot 51. The plurality of terminals P are connected to an electronic circuit provided in the game apparatus 50. The terminals P0, P2, P4, P5, P7, P8, P10, P11, P13, P15, and P16 are placed side by side in the horizontal direction (the x-axis direction). The terminals P1, P3, P6, P9, P12, and P14 are placed side by side in the horizontal direction (the x-axis direction). The terminals P1, P3, P6, P9, P12, and P14 are placed further in the back direction of the first slot 51 than the terminals P0, P2, P4, P5, P7, P8, P10, P11, P13, P15, and P16.

In the state where the cartridge 1 is fixed in the first slot 51, the terminals P0 and P1 of the first slot 51 are electrically connected to the terminal T1 of the cartridge 1. In the state where the cartridge 1 is fixed in the first slot 51, the terminals P2 to P16 of the first slot 51 are electrically connected to the terminals T2 to T16, respectively, of the cartridge 1.

As shown in FIG. 27, the terminal P0 of the first slot 51 functions as a ground terminal and is connected to the ground of an electronic circuit provided in the game apparatus 50. The terminal P1 of the first slot 51 functions as a detection terminal for detecting the cartridge. The detection terminal P1 is connected to a predetermined terminal of the same electronic circuit or a different electronic circuit provided in the game apparatus 50. If the cartridge is not connected, the detection terminal P1 is maintained at a predetermined voltage. If the cartridge is connected, the detection terminal P1 is connected to the terminal T1 of the cartridge and electrically connected to the ground terminal P0. If the terminal P1 of the first slot 51 and the terminal T1 of the cartridge 1 or the old cartridge 7 are connected together, the detection terminal P1 reaches the ground potential, whereby the game apparatus 50 detects that the cartridge 1 or the old cartridge 7 is connected.

The terminals P2 to P16 of the first slot 51 have the same functions as those of the terminals T2 to T16, respectively, of the cartridge 1 shown in FIG. 21. Specifically, the terminal P2 functions as a strobe terminal for inputting a strobe signal. The terminal P3 functions as a clock terminal for outputting a clock signal. The terminal P4 functions as a terminal for outputting a command to the cartridge 1 and inputting a response from the cartridge 1 when the game apparatus 50 is operating in the normal mode. The terminal P4 functions also as a terminal for outputting a chip-enable signal when the game apparatus 50 is operating in the compatibility mode. The terminals P5, P6, P8, P9, and P11 to P14 function as data input/output terminals for transmitting and receiving a signal compliant with the first standard when the game apparatus 50 is operating in the normal mode, and function as data input/output terminals for transmitting and receiving a signal compliant with the second standard when the game apparatus 50 is operating in the compatibility mode. The terminals P7 and P10 function as power supply terminals for supplying power to the cartridge. The terminal P15 functions as a ground terminal. The terminal P16 functions as a reset terminal for outputting a reset cancellation signal to the cartridge.

As shown in FIG. 26, inside the first slot 51, the terminal P17 is provided. The terminal P17 is an identification terminal for the game apparatus 50 to identify whether the cartridge 1 is connected or the old cartridge 7 is connected.

Specifically, the terminal P17 is provided at one end in the left-right direction (an end portion in the x-axis direction) inside the first slot 51. The terminal P17 includes a part P17a extending in the negative y-axis direction (the insertion direction of the cartridge) and a part P17b protruding in the negative y-axis direction and the negative x-axis direction (a direction toward the other end) from an end portion in the negative y-axis direction of the part P17a. The parts P17a and P17b have an obtuse angle α. The terminal P17 includes a part P17c extending in the negative y-axis direction and the x-axis direction (a direction toward one end) from an end portion in the negative y-axis direction of the part P17b. The parts P17b and P17c have an obtuse angle. At a position opposed to the parts P17b and P17c of the terminal P17 in the X-axis direction, a terminal 512 is provided.

The terminal P17 is provided at a position where the terminal P17 does not come into contact with the housing of the cartridge 1 accommodated in the first slot 51. If the old cartridge 7 is accommodated, the terminal P17 comes into contact with a part of the housing of the old cartridge 7. The part P17a of the terminal P17 may come into contact with the housing of the cartridge 1 or the housing of the old cartridge 7. Here, the state where the cartridge is "accommodated" in the slot means the state where the cartridge is inserted into the slot and fixed at a predetermined position. If the cartridge is accommodated in the slot, a part of the cartridge may or may not be exposed through the slot. Specifically, if the cartridge 1 is accommodated in the first slot 51, the terminal P17 (specifically, P17b and P17c) is accommodated in a space formed by the right side notch 22 of the cartridge 1. In the process in which the cartridge 1 is inserted into the first slot 51, the terminal P17 does not come into contact with the terminal 512.

The terminal P17 is a switch that changes to an ON state or an OFF state. Normally, the terminal P17 is not in contact with the terminal 512 to which the terminal P17 is opposed, and is in the OFF state. If the terminal P17 comes into contact with the terminal 512 to which the terminal P17 is opposed by elastically deforming, the terminal P17 changes to the ON state. If the cartridge 1 is fixed to the first slot 51, the terminal P17 maintains the OFF state. On the other hand, if the old cartridge 7 is fixed to the first slot 51, the terminal P17 changes to the ON state. Inside the game apparatus 50, a circuit (not shown) is provided that determines whether the terminal P17 is in the ON state or the OFF state.

Although not shown in the figures, the second slot 71 of the old game apparatus 70 has the same shape and size as those of the first slot 51. The shape of the cartridge insertion opening of the second slot 71 is also the same as that of the first slot 51. Inside the second slot 71, similarly to the first slot 51, the terminals P0 to P16 are provided. The positions of the terminals P0 to P16 in the second slot 71 are the same as the positions of the terminals P0 to P16, respectively, in the first slot 51. On the other hand, inside the second slot 71, the identification terminal P17 is not provided.

### (Changes in States of Terminals When Cartridge 1 Is Inserted)

Next, a description is given of changes in the states of the terminals when the cartridge 1 is inserted into the first slot 51.

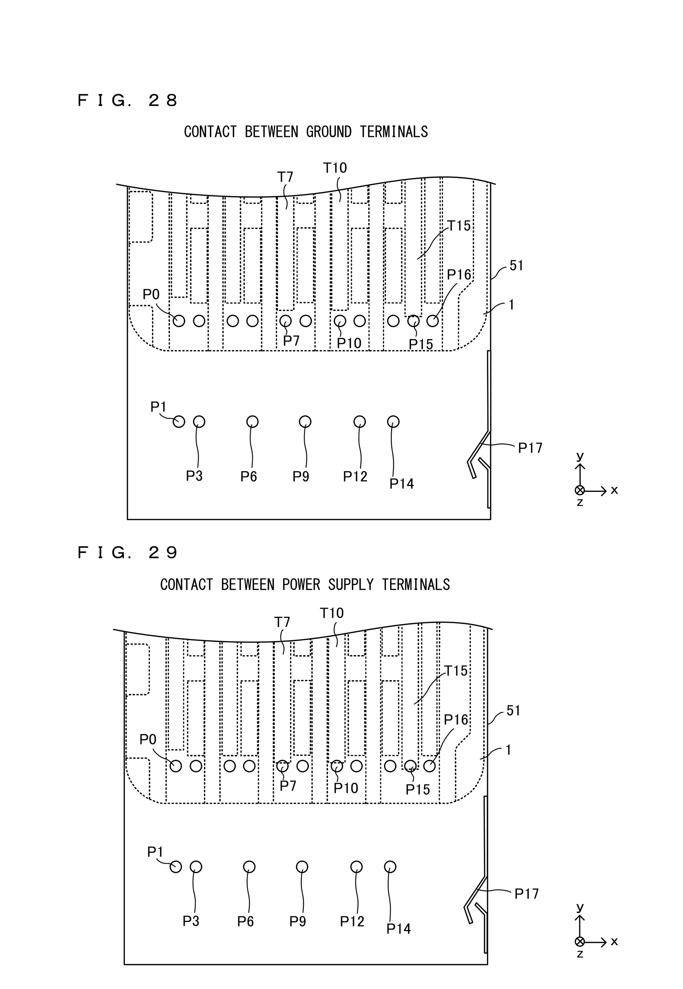

FIGS. 28 to 33 are diagrams illustrating which terminal T and which terminal P come into contact with each other as the cartridge 1 is inserted into the first slot 51.

As shown in FIG. 28, if the cartridge 1 is inserted into the first slot 51, first, the ground terminal P15 of the first slot 51 and the ground terminal T15 of the cartridge 1 come into contact with each other. If the cartridge 1 is further pushed in in the back direction of the first slot 51, next, the power supply terminal P7 of the first slot 51 and the power supply terminal T7 of the cartridge 1 come into contact with each other (FIG. 29). The power supply terminal P10 of the first slot 51 and the power supply terminal T10 of the cartridge 1 also come into contact with each other.

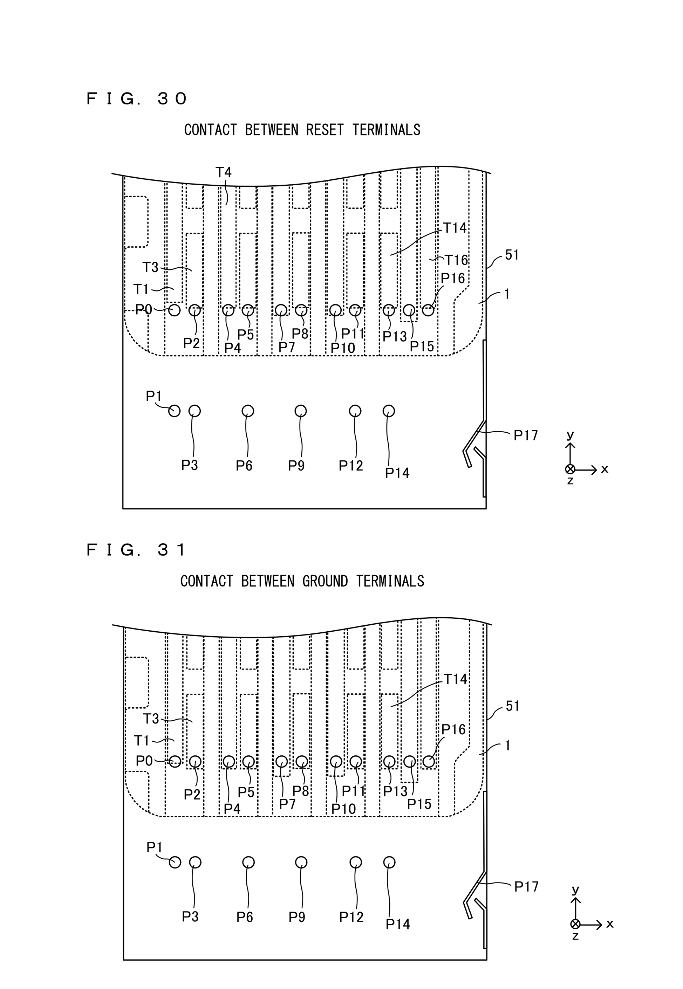

If the cartridge 1 is further pushed in in the back direction of the first slot 51, the reset terminal P16 of the first slot 51 and the reset terminal T16 of the cartridge 1 come into contact with each other (FIG. 30). The terminals P2 and T3 also come into contact with each other. The terminals P4 and T4 also come into contact with each other. The terminals P5 and T6 also come into contact with each other. The terminals P8 and T9 also come into contact with each other. The terminals P11 and T12 also come into contact with each other. The terminals P13 and T14 also come into contact with each other (FIG. 30). If the cartridge 1 is further pushed in, next, the ground terminals P0 and T1 come into contact with each other (FIG. 31).

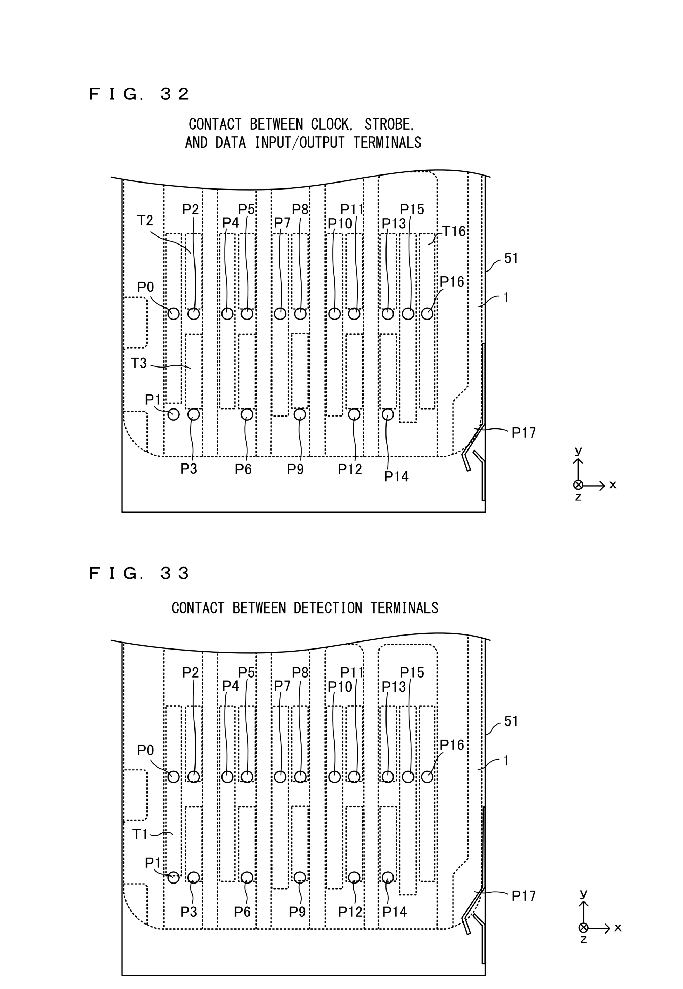

If the cartridge 1 is further pushed in, the terminals P2, P3, P5, P6, P8, P9, P11, P12, P13, and P14 come into contact with the terminals T2, T3, T5, T6, T8, T9, T11, T12, T13, and T14, respectively (FIG. 32).

If the cartridge 1 is further pushed in, finally, the detection terminal P1 of the first slot 51 and the detection terminal T1 of the cartridge 1 come into contact with each other. Based on this contact between the detection terminals P1 and T1, the game apparatus 50 detects that the cartridge 1 is connected.

As described above, the terminal P17 is provided in the first slot 51. Normally, the terminal P17 is not connected to the terminal 512, and is in the OFF state. If the cartridge 1 is inserted into the first slot 51, the terminal P17 does not come into contact with the cartridge 1. Thus, the terminal P17 is not connected to the terminal 512, and maintains the OFF state.

### (Changes in States of Terminals When Old Cartridge 7 Is Inserted)

Next, a description is given of changes in the states of the terminals when the old cartridge 7 is inserted into the first slot 51.

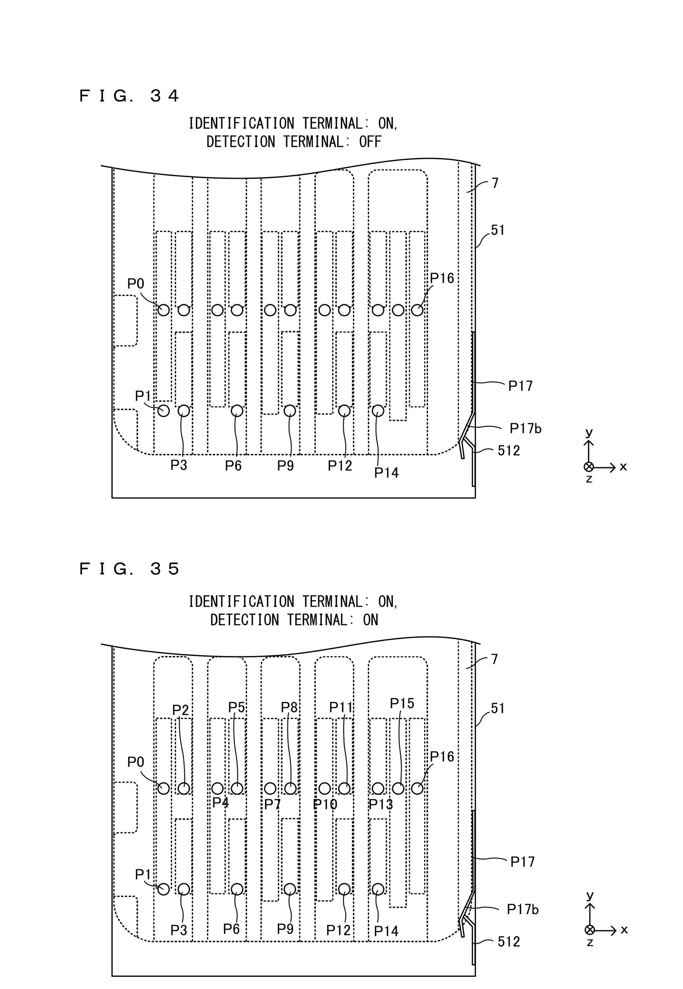

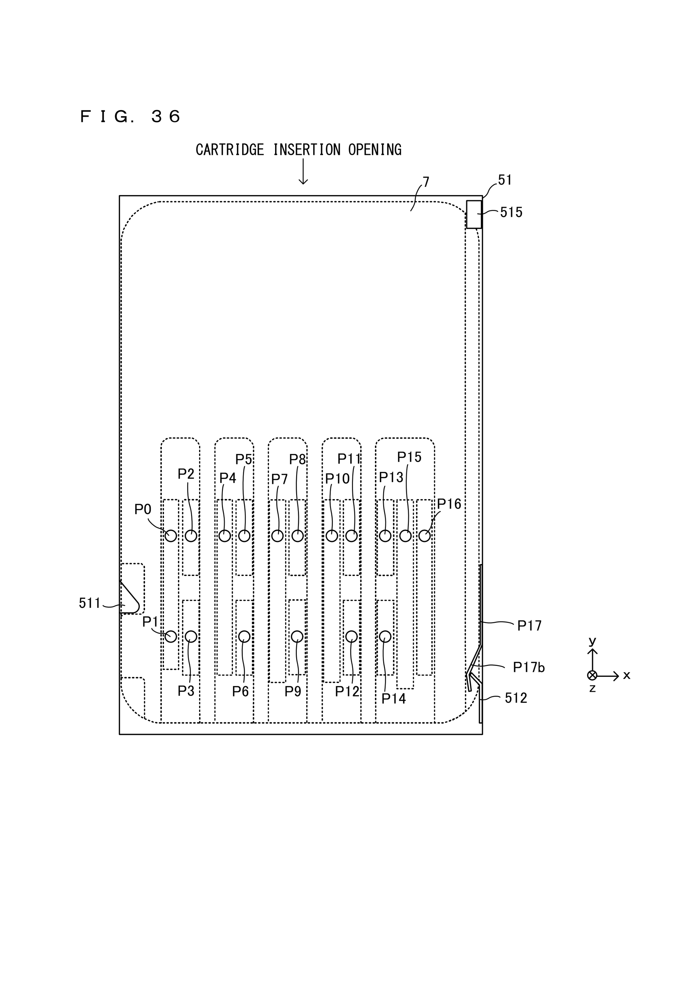

FIG. 34 is a diagram showing the state where the terminal P17 of the first slot 51 changes from the OFF state to the ON state. FIG. 35 is a diagram showing the state where the detection terminal T1 of the old cartridge 7 comes into contact with the detection terminal P1 of the first slot 51 after FIG. 34. FIG. 36 is a diagram showing the state where the old cartridge 7 is fixed in the first slot 51 after FIG. 35.

The positions, the sizes, and the shapes of the terminals T1 to T16 of the old cartridge 7 are the same as the positions, the sizes, and the shapes of the terminals T1 to T16, respectively, of the cartridge 1. Thus, also if the old cartridge 7 is inserted into the first slot 51, the terminals P other than the detection terminal P1 come into contact with the terminals T of the old cartridge 7 in order similar to that described with reference to FIGS. 28 to 32.

As shown in FIG. 34, if the old cartridge 7 is inserted into the first slot 51, the housing of the old cartridge 7 comes into contact with the terminal P17, whereby the terminal P17 elastically deforms, and the terminal P17 is connected to the terminal 512. Consequently, the identification terminal P17 changes to the ON state. At this time, the detection terminal P1 does not come into contact with the detection terminal T1.

If the old cartridge 7 is further pushed in, the detection terminal P1 comes into contact with the detection terminal T1 (FIG. 35). Based on this contact between the detection terminals P1 and T1, the game apparatus 50 detects that the old cartridge 7 is connected. Then, the old cartridge 7 is fixed in the first slot 51 (FIG. 36).

As described with reference to FIGS. 28 to 33, if the cartridge 1 is inserted into the first slot 51, the terminal P17 does not come into contact with the terminal 512, and the detection terminal P1 comes into contact with the detection terminal T1. On the other hand, as described with reference to FIGS. 34 to 36, if the old cartridge 7 is inserted into the first slot 51, the terminal P17 comes into contact with the housing of the old cartridge 7, whereby the terminal P17 is connected to the terminal 512, and the state of the terminal P17 changes to the ON state. After the state of the terminal P17 changes to the ON state, the detection terminal P1 comes into contact with the detection terminal T1.

If the detection terminal P1 comes into contact with the detection terminal T1, based on the state of the terminal P17 at this time, the game apparatus 50 determines whether the cartridge 1 is connected or the old cartridge 7 is connected. Specifically, when the detection terminals P1 and T1 come into contact with each other, and if the terminal P17 is in the OFF state, the game apparatus 50 detects that the cartridge 1 is connected. On the other hand, when the detection terminals P1 and T1 come into contact with each other, and if the terminal P17 is in the ON state, the game apparatus 50 detects that the old cartridge 7 is connected.

As described above, an aspect is employed in which if the old cartridge 7 is inserted into the game apparatus 50, the identification terminal P17 comes into contact with the housing of the old cartridge 7, whereby the identification terminal P17 changes to the ON state, and then, the detection terminals T1 and P1 come into contact with each other. An aspect is also employed in which if the cartridge 1 is inserted into the game apparatus 50, the detection terminals T1 and P1 come into contact with each other while the identification terminal P17 maintains the OFF state. That is, an aspect is employed in which when the game apparatus 50 detects the cartridge, the identification terminal P17 is in either of the ON state and the OFF state. If an aspect is employed in which after the game apparatus 50 detects the cartridge, the state of the identification terminal P17 changes, the game apparatus 50 cannot distinguish what type of cartridge is connected until the state of the identification terminal P17 is finalized after it is detected that the cartridge is connected. If the cartridge is identified after the lapse of a predetermined time from the detection of the cartridge, it is difficult to appropriately set the predetermined time because the speed of inserting the cartridge by the user is unknown. At the timing when the cartridge is detected (the timing when the detection terminal P1 comes into contact with the detection terminal T1), the game apparatus 50 can identify whether the detected cartridge is the cartridge 1 or the old cartridge 7, and can perform processing relating to the type of the identified cartridge.

Both in a case where the old cartridge 7 is inserted into the first slot 51 of the game apparatus 50 and in a case where the cartridge 1 is inserted into the first slot 51 of the game apparatus 50, first, the ground terminal T15 and the ground terminal P15 of the first slot 51 come into contact with each other. Consequently, the cartridge is electrically stabilized, and it is possible to securely connect the cartridge to the game apparatus 50.

The ground terminals T15 and P15 may not necessarily come into contact with each other first. For example, an aspect may be employed in which after the state of the identification terminal P17 is finalized, the ground terminals T15 and P15 come into contact with each other, and then, the detection terminals T1 and P1 come into contact with each other. For example, an aspect may also be employed in which after the state of the identification terminal P17 is finalized, the detection terminals T1 and P1 come into contact with each other, and then, the ground terminals T15 and P15 come into contact with each other.

The identification terminal P17 includes the part P17a extending in the negative y-axis direction, the part P17b extending in the negative y-axis direction and the negative x-axis direction from the lower end of the part P17a, and the part P17c extending in the negative y-axis direction and the x-axis direction from the lower end of the part P17b. The parts P17a and P17b have an obtuse angle, and the parts P17b and P17c have an obtuse angle. Consequently, when the old cartridge 7 is inserted into and removed from the first slot 51 of the game apparatus 50, the extremity of the identification terminal P17 (the extremity of the part P17c) does not come into contact with the housing of the old cartridge 7, and it is possible to make the extremity of the identification terminal P17 less likely to be caught on the housing. Consequently, when the old cartridge 7 is inserted and removed, it is possible to prevent the identification terminal P17 from plastically deforming by deforming more than expected.

The identification terminal P17 and the terminal 512 described above are merely examples, and the structure of an identification terminal for identifying the type of the connected cartridge is not limited to that described above.

### (Processing Sequence When Cartridge Is Connected to Game apparatus)

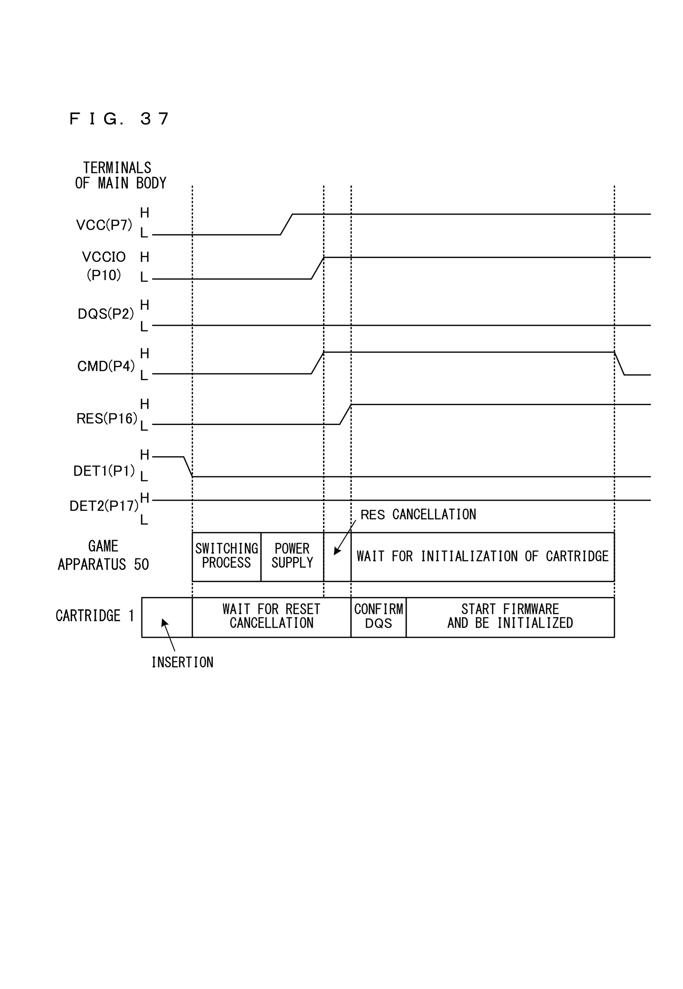

Next, a description is given of processing performed by the game apparatus 50 and the cartridge 1 when the cartridge 1 is connected to the game apparatus 50. FIG. 37 is an example of a sequence diagram of the game apparatus 50 and the cartridge 1 when the cartridge 1 is connected to the game apparatus 50.

FIG. 37 shows changes in the voltage levels of the terminals P of the game apparatus 50 relating to the lapse of time and processing performed by the game apparatus 50 and the cartridge 1. As shown in FIG. 37, if the cartridge is not connected to the game apparatus 50, the voltage level of the detection terminal P1 (DET1) of the game apparatus 50 is maintained at "high" (represented as "H" in the figures). If the identification terminal P17 is not in contact with the terminal 512, the voltage level of the identification terminal P17 (DET2) is maintained at "high". If the detection terminal P1 of the game apparatus 50 is connected to the detection terminal T1 of the cartridge 1, the voltage level of the detection terminal P1 changes from "high" to "low" (represented as "L" in the figures). (The SoC 55 of) the game apparatus 50 senses a change in the voltage level of the detection terminal P1. The game apparatus 50 confirms the voltage level of the identification terminal P17 at this time and determines whether the cartridge 1 is connected or the old cartridge 7 is connected. In FIG. 37, the voltage level of the identification terminal P17 is "high", and therefore, the identification terminal P17 is not in contact with the terminal 512, and the game apparatus 50 determines that the cartridge connected to the game apparatus 50 is the cartridge 1.

If the game apparatus 50 detects that the cartridge is connected, the game apparatus 50 performs a switching process. In this switching process, if the old cartridge 7 is connected to the game apparatus 50, the SoC 55 transmits a switching signal to the switching circuits 52 and 53. If the switching circuits 52 and 53 receive the switching signal, the switching circuits 52 and 53 switch from the bypass path to the first path. On the other hand, if the game apparatus 50 detects that the cartridge 1 is connected, the game apparatus 50 ends the switching process without transmitting the above switching signal in the switching process. Consequently, if the cartridge 1 is connected, the game apparatus 50 enters the normal mode and communicates with the cartridge 1 via the bypass path (based on the first standard). The first path may be enabled by default, and if the old cartridge 7 is connected to the game apparatus 50, the paths may not be switched. If the cartridge 1 is connected to the game apparatus 50, the first path may be switched to the bypass path. After the game apparatus 50 detects the cartridge and before the switching process is performed, a dead period for preventing chattering may be provided.

Next, the game apparatus 50 supplies power to the cartridge 1. Specifically, the game apparatus 50 changes the voltage level of the power supply terminal P7 from "low" to "high". Consequently, power is supplied to the controller 12 of the cartridge 1, and the cartridge 1 starts operating. Then, the game apparatus 50 changes the voltage level of the power supply terminal P10 from "low" to "high". The game apparatus 50 also changes the voltage level of the terminal P4 (CMD) from "low" to "high". If the cartridge 1 is connected, the game apparatus 50 maintains the voltage level of the terminal P2 (DQS) at "low".

Next, the game apparatus 50 transmits a reset cancellation signal to the cartridge 1. Specifically, the game apparatus 50 changes the voltage level of the reset terminal P16 from "low" to "high".

On the other hand, after the cartridge 1 is inserted into the first slot 51 of the game apparatus 50 and until the cartridge 1 receives the reset cancellation signal from the game apparatus 50, the cartridge 1 maintains the state of waiting for the cancellation of reset. (The controller 12 of) the cartridge 1 detects that the voltage level of the terminal T16 changes from "low" to "high", thereby receiving the reset cancellation signal from the game apparatus 50. If the cartridge 1 receives the reset cancellation signal from the game apparatus 50, the cartridge 1 confirms the voltage level of the terminal T2 (DQS). If the voltage level of the terminal T2 is "low", the cartridge 1 determines that the cartridge 1 is connected to the game apparatus 50. Then, the cartridge 1 starts firmware. Then, the cartridge 1 is initialized to enter the state where the cartridge 1 can be used in the game apparatus 50. The game apparatus 50 waits until the initialization of the cartridge 1 is completed. If the initialization of the cartridge 1 is completed, the cartridge 1 can communicate data with the game apparatus 50. The data communication between the cartridge 1 and the game apparatus 50 is performed based on the first standard.

### (Processing Flow of Cartridge)

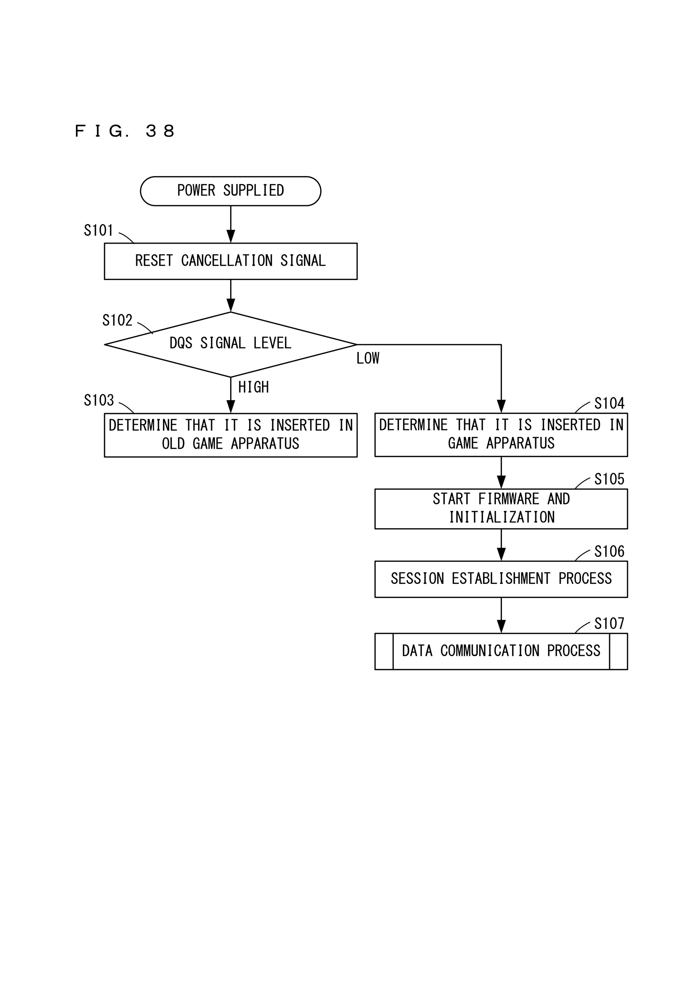

FIG. 38 is a flow chart showing an example of processing performed when the cartridge 1 receives a reset cancellation signal from the game apparatus. The processing shown in FIG. 38 is performed by the controller 12 of the cartridge 1 executing a boot program stored in advance in the cartridge 1.

As shown in FIG. 38, when power is supplied from the game apparatus, (the controller 12 of) the cartridge 1 receives a reset cancellation signal (step S101). Upon receiving the reset cancellation signal, the cartridge 1 determines the level of a DQS signal (step S102). That is, the cartridge 1 determines the voltage level at the terminal T2.

When the level of the DQS signal is "HIGH", the cartridge 1 determines that it is inserted in the old game apparatus 70 (step S103), and ends the processing. Thereafter, the cartridge 1 does not communicate with the game apparatus.

On the other hand, when the level of the DQS signal is "LOW", the cartridge 1 determines that it is inserted in the game apparatus 50 (step S104). Next, the cartridge 1 activates the firmware (step S105). The cartridge 1 performs initialization after the activation of the firmware. When the initialization is completed, the cartridge 1 performs a session establishment process (step S106). Here, the cartridge 1 performs authentication with the game apparatus 50, and establishes a session for secure communication with the game apparatus 50. For example, the cartridge 1 exchanges a key for encrypting the communication with the game apparatus 50. Thereafter, the communication between the cartridge 1 and the game apparatus 50 is encrypted in a predetermined format. In addition, in the session establishment process, the cartridge 1 transmits, to the game apparatus 50, various kinds of information such as identification information (e.g., a cartridge ID that uniquely identifies the cartridge, a vendor ID, etc.), and the capacity of the storage medium 11.

After the session establishment process has ended, the cartridge 1 performs a data communication process based on a command from the game apparatus 50 (step S107). For example, when the first-type cartridge 1 is inserted in the game apparatus 50, the game apparatus 50 transmits a reading command for first information to the first-type cartridge 1, and the first-type cartridge 1 transmits the first information in response to the command. In addition, the game apparatus 50 periodically transmits a reading command for identification information during execution of the application program, and the cartridge 1 transmits the identification information (e.g., the cartridge ID) in response to the command.

The cartridge 1 and the game apparatus 50 communicate with each other based on the first standard. For example, when the game apparatus 50 reads data (e.g., first information) from (the storage medium 11 of) the first-type cartridge 1, the game apparatus 50 transmits a reading command for reading data from the terminal P4. The cartridge 1 outputs a response in response to the command from the terminal T4. Next, the cartridge 1 reads, from the storage medium 11, the data corresponding to the reading command from the game apparatus 50, and transmits the read data from at least one of a plurality of data input/output terminals T (T5, T6, T8, T9, T11, T12, T13, and T14).

If the game apparatus 50 writes data to the cartridge 1, the game apparatus 50 sends out a writing command to write the data from the terminal P4. The cartridge 1 outputs a response relating to the command from the terminal T4. Next, the game apparatus 50 sends out the data relating to the writing command from at least any one of the plurality of data input/output terminals P (P5, P6, P8, P9, P11, P12, P13, and P14). Writing of data from the game apparatus 50 to the first-type cartridge 1 may be prohibited.

There is also a case where the game apparatus 50 sends out a command to acquire the state of the cartridge 1 from the terminal P4. In accordance with the reception of the command, the cartridge 1 sends out a response relating to the state of the cartridge 1 from the terminal T4.

While the cartridge 1 and the game apparatus 50 do not transmit and receive data to and from each other, the cartridge 1 transitions to a power saving state. Even when the cartridge 1 is in the power saving state, the cartridge 1 can receive a command from the game apparatus 50 via the terminal T4. When the cartridge 1 is in the power saving state, and if the cartridge 1 receives a command from the game apparatus 50 via the terminal T4, the cartridge 1 returns a response relating to the command and also returns from the power saving state to a normal state.

### (Processing of Game Apparatus 50 When Cartridge is Inserted)

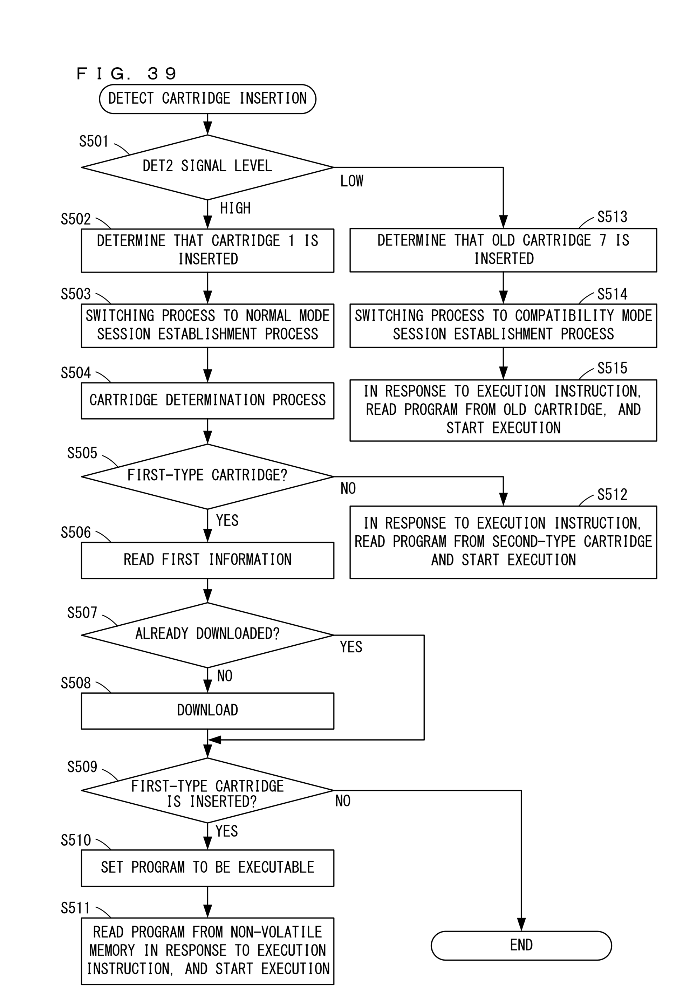

Next, the processing of the game apparatus 50 when a cartridge is inserted therein will be described. FIG. 39 is a flowchart showing an example of processing of the game apparatus 50 when a cartridge is inserted. The processing shown in FIG. 39 is performed by, for example, the SoC 55 of the game apparatus 50.

As shown in FIG. 39, upon detecting insertion of a cartridge into the slot 51 (i.e., when the voltage level at the detection terminal P1 (DET1) changes to "LOW"), the game apparatus 50 determines the signal level at the identification terminal P17 (DET2) (step S501).

When the signal level at the identification terminal P17 (DET2) is "HIGH", the game apparatus 50 determines that the cartridge 1 is inserted (step S502). Next, the game apparatus 50 performs a switching process to the normal mode, and then performs a session establishment process (step S503). For example, in the session establishment process, the game apparatus 50 performs authentication with the cartridge 1, and establishes a session for secure communication with the cartridge 1. For example, the game apparatus 50 performs key exchange with the cartridge 1 for encrypting the communication between them. Thereafter, the communication between the game apparatus 50 and the cartridge 1 is encrypted in a predetermined format. In addition, in the session establishment process, the game apparatus 50 acquires, from the cartridge 1, various kinds of information such as identification information (e.g., a cartridge ID that uniquely identifies the cartridge, a vendor ID, etc.), and the capacity of the storage medium 11.

After step S503, the game apparatus 50 performs a cartridge determination process for determining whether the inserted cartridge 1 is the first-type cartridge 1 or the second-type cartridge 1 (step S504). For example, the game apparatus 50 determines whether the inserted cartridge 1 is the first-type cartridge 1 or the second-type cartridge 2, based on the information acquired from the cartridge 1 in the session establishment process in step S503, such as the identification information (e.g., the cartridge ID, the vendor ID, etc.) and the capacity of the storage medium 11. In the first-type cartridge 1 and the second-type cartridge 1, a type ID for identifying the type of the cartridge may be stored, and the game apparatus 50 may determine whether the inserted cartridge 1 is the first-type cartridge 1 or the second-type cartridge 2, based on the type ID.

When the inserted cartridge 1 is the first-type cartridge 1 (step S505: YES), the game apparatus 50 reads the first information from the first-type cartridge 1 (step S506). For example, the game apparatus 50 reads the identification information (first information) or the title information of the application.

Next, the game apparatus 50 determines whether the application program corresponding to the read first information has already been downloaded (step S507). Here, the game apparatus 50 determines whether the key-version application program corresponding to the first information is stored in the non-volatile memory 56.

When the application program has not yet been downloaded (step S507: NO), the game apparatus 50 downloads the application program corresponding to the first information from the server SV (step S508). Specifically, the game apparatus 50 displays a screen that allows the user to select whether to download the application program, and when "download" is selected, transmits a download request including the first information to the server SV. Thus, the application program corresponding to the first information stored in the first-type cartridge 1 and the icon image thereof are downloaded from the server SV and stored in the non-volatile memory 56. During the downloading, the icon image 500 and the progress indicator 501 are displayed (see FIG. 5).

When the application program has already been downloaded (step S507: YES), the game apparatus 50 performs the process in step S509 without making a download request to the server SV. In the case where the application program has already been downloaded, if the game apparatus 50 is in an online state (i.e., communicable with the server), the game apparatus 50 queries the server SV (or another server) as to whether there is an update of the already downloaded application program. If there is such an update, the game apparatus 50 downloads the newest application program from the server, and stores the same in the non-volatile memory 56. When the game apparatus 50 is in an offline state, the game apparatus 50 performs the process in step S509 without making an inquiry as to whether there is an update.

When the process in step S508 has been performed or when the determination result in step S507 is "YES", the game apparatus 50 determines whether the first-type cartridge 1 is inserted therein (step S509).

If the first-type cartridge 1 is inserted in the game apparatus 50 (step S509: YES), the game apparatus 50 reads the first information and the title information from the first-type cartridge 1, and sets the key-version application program, which corresponds to the first information and is stored in the non-volatile memory 56, to be executable (step S510). Thus, the icon image of the key-version application program corresponding to the first-type cartridge 1 is displayed in a manner indicating that the program is executable (e.g., the icon image 500c shown in FIG. 6). By default, the key-version application program stored in the non-volatile memory 56 is set to be inexecutable. Therefore, if the corresponding first-type cartridge 1 is not inserted in the game apparatus 50, the icon image of each key-version application program stored in the non-volatile memory 56 is displayed in a manner indicating that the program is not executable.

Next, if the icon image indicating that the program is executable is selected by the user and an execution instruction is made, the game apparatus 50 reads the key-version application program from the non-volatile memory 56, and starts executing the program (step S511). Then, the game apparatus 50 ends the processing shown in FIG. 39. During execution of the application program, the game apparatus 50 may periodically determine whether the cartridge 1 is inserted, and whether the cartridge ID of the inserted cartridge 1 matches the cartridge ID of the cartridge 1 that was inserted when execution of the application program was started. If the cartridge 1 is not inserted or the cartridge IDs do not match, the game apparatus 50 ends the application program currently executed. Alternatively, the game apparatus 50 may periodically read the first information or the title information from the inserted cartridge 1, and may determine whether the first information or the title information corresponds to the application program currently executed.

On the other hand, when the determination result in step S509 is "NO", the game apparatus 50 ends the processing shown in FIG. 39. Thus, the icon image of the key-version application program stored in the non-volatile memory 56 remains in the state indicating that the program is not executable. If the icon image indicating that the program is not executable is selected by the user and an execution instruction is made, the game apparatus 50 performs a display indicating that the application is not executable, and a display that urges the user to insert the first-type cartridge 1.

On the other hand, when the inserted cartridge 1 is the second-type cartridge 1 (step S505: NO), the game apparatus 50, in response to an execution instruction of the user, reads the application program from the second-type cartridge 1, and starts executing the program (step S512). Then, the game apparatus 50 ends the processing shown in FIG. 39. During execution of the application program, the game apparatus 50 may periodically determine whether the cartridge 1 is inserted, and whether the cartridge ID of the inserted cartridge 1 matches the cartridge ID of the cartridge 1 that was inserted when execution of the application program was started. If the cartridge 1 is not inserted or the cartridge IDs do not match, the game apparatus 50 ends the application program currently executed.

On the other hand, when the signal level of the identification terminal P17 (DET2) is "LOW", the game apparatus 50 determines that the old cartridge 7 is inserted (step S513). Next, the game apparatus 50 performs a switching process to the compatibility mode, and then performs a session establishment process (step S514). For example, in the session establishment process, the game apparatus 50 performs authentication with the cartridge 1, and establishes a session for secure communication with the old cartridge 7. The communication between the game apparatus 50 and the old cartridge 7 is encrypted in a format different from the above predetermined format.

Next, in response to the execution instruction of the user, the game apparatus 50 reads the application program from the old cartridge 7, and executes the program (step S515). Then, the game apparatus 50 ends the processing shown in FIG. 39. The game apparatus 50 periodically confirms whether the old cartridge 7 is inserted, during execution of the application program. If the old cartridge 7 is not inserted, the game apparatus 50 ends the application program currently executed. This is the end of the description for FIG. 39.

After step S506, the game apparatus 50 may determine whether the download-version application program having the same title information as that of the inserted first-type cartridge 1 is stored in the non-volatile memory 56. If the download-version application program having the same title information as that of the inserted first-type cartridge 1 is stored, the game apparatus 50 may perform a display indicating that the application program of the same title has already been stored.

As described above, the game system 100 of the exemplary embodiment includes the first-type cartridge 1, the game apparatus 50, and the server SV. When the first-type cartridge 1 is inserted in the game apparatus 50, the game apparatus 50 downloads the application program from the server SV, based on the first information stored in the first-type cartridge 1. The game apparatus 50 executes the downloaded application program only when the first-type cartridge 1 corresponding to the application program is inserted therein. As a result, the capacity of the first-type cartridge 1 can be reduced, and inappropriate execution of the application program can be inhibited. In the above aspect, the application program is downloaded from the server SV, based on the first information stored in the first-type cartridge 1. However, when the first-type cartridge 1 is inserted in the game apparatus 50, the game apparatus 50 may download the application program from the server SV, based on the title information in addition to or instead of the first information stored in the first-type cartridge 1.

The cartridge 1 according to the above exemplary embodiment includes the right side notches 21 and 22 in one end portion in the second direction perpendicular to the first direction as the insertion/removal direction of the slot of the game apparatus. The old cartridge 7 has approximately the same shape and size as those of the cartridge 1, includes the right side notch 21 in the one end portion in the second direction, and does not include the right side notch 22. Inside the first slot 51 of the game apparatus 50, the identification terminal P17 is provided that is accommodated in a space formed by the right side notch 22 in a case where the cartridge 1 is inserted. If the cartridge 1 is inserted into the first slot 51, the identification terminal P17 does not come into contact with the terminal 512. If the old cartridge 7 is inserted into the first slot 51, a part of the housing of the old cartridge 7 comes into contact with the identification terminal P17, and the identification terminal P17 comes into contact with the terminal 512. Consequently, the game apparatus 50 can identify whether the cartridge 1 is connected or the old cartridge 7 is connected.

The right side notch 22 is formed into an approximately L-shape in a bottom view of the cartridge 1. Consequently, even if the right side notch 22 is provided, it is possible to ensure the strength of the housing of the cartridge 1, and it is also possible to facilitate the manufacturing of the housing of the cartridge 1. For example, in a case where the right side notch 22 is formed into an approximately L-shape, it is easier to insert the cartridge than in a case where the right side notch 22 is not formed into a shape obtained by notching the corner portions of the housing, but the right side notch 22 is formed into a reverse C-shape in a bottom view (than in a case where the right side notch 22 is not formed from an end portion in the z-axis direction, but a recessed shape is formed from a central portion in the negative x-axis direction on the right side surface of the housing). That is, in a case where the right side notch 22 is formed into an approximately L-shape open on the front surface side as shown in (e) of FIG. 8, it is easy to fit the L-shaped portion to the wall portion 515 of the slot, and it is easy to insert the cartridge when the cartridge is inserted into the slot. In a case where the right side notch 22 is formed into an approximately L-shape, it is easy to take out the cartridge from a mold at the time of manufacturing.

The width X2 of the right side notch 22 is configured to be wider than the width X1 of the right side notch 21. The right side notch 21 is formed to extend to near the lower ends of the plurality of terminals T in the insertion direction (the negative y-axis direction), and the right side notch 22 is formed to extend in the insertion direction of the cartridge 1 from the lower end of the right side notch 21. Consequently, for example, it is possible to ensure the strength of the housing and provide the right side notch 22 for the game apparatus 50 to identify the type of the cartridge compared to a case where the entirety of the right side notches 21 and 22 has the width X2.

The identification terminal P17 is formed to protrude in the left-right direction (the x-axis direction) of the first slot 51 from the side surface of the first slot 51, and the right side notch 22 has a width to accommodate the identification terminal P17. Consequently, it is possible to make the depth (the length in the z-axis direction) of the right side notch 22 small, and it is possible to ensure the strength of the housing of the cartridge 1. For example, in a case where the identification terminal P17 is formed to extend in the thickness direction (the z-axis direction) from the front surface or the back surface of the first slot 51, the right side notch 22 that accommodates the identification terminal P17 requires some depth. In this case, the strength of the housing in a portion where the right side notch 22 is provided decreases. In the exemplary embodiment, however, the identification terminal P17 protrudes in the left-right direction of the cartridge 1, and therefore, it is possible to make the depth of the right side notch 22 small, and it is possible to ensure the strength of the housing.

An aspect is employed in which if the old cartridge 7 is inserted into the first slot 51, the identification terminal P17 comes into contact with the terminal 512, and then, the detection terminal P1 of the game apparatus and the detection terminal T1 of the cartridge come into contact with each other. Consequently, immediately after the game apparatus 50 detects that the cartridge is connected, it is possible to perform processing relating to the type of the connected cartridge, and it is possible to quickly perform the process of reading data or the like after the connection.

### (Variations)

The aspect, the shape, and the like of the cartridge 1 described above are not limited to those described above, and may be modified as follows.

For example, in the above exemplary embodiment, as the first information that specifies an application, the identification information or the title information of the application is stored in the first-type cartridge 1, and the game apparatus 50 downloads the application program from the server, based on the first information. In other embodiments, other information specifying an application (e.g., a value obtained by performing a predetermined operation on the identification information or the title information of the application) may be stored as the first information in the first-type cartridge 1, and the application program may be downloaded based on the other information.

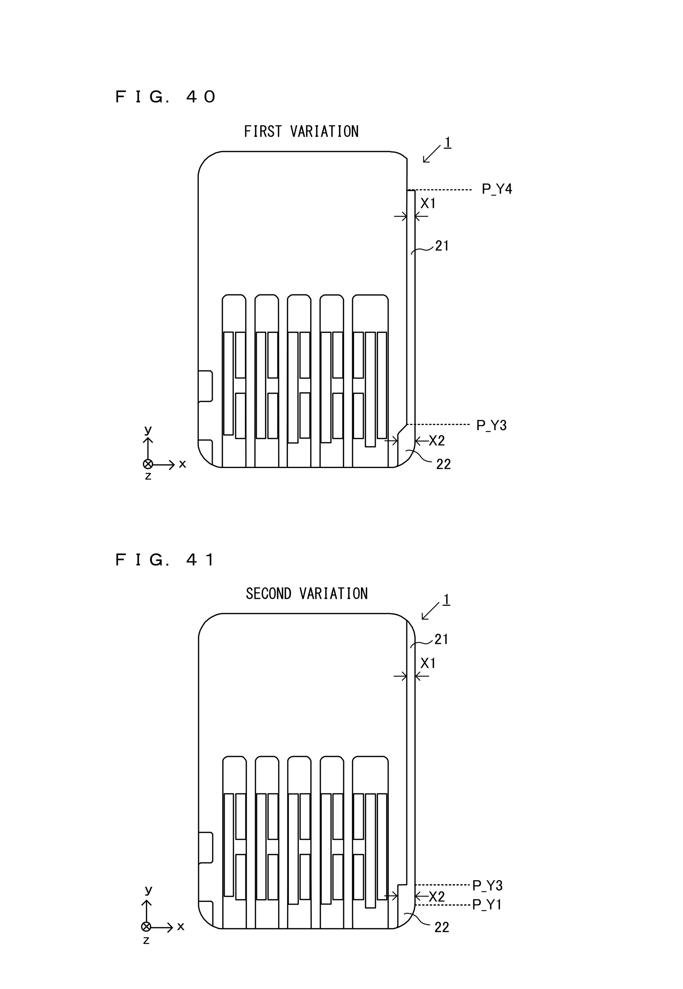

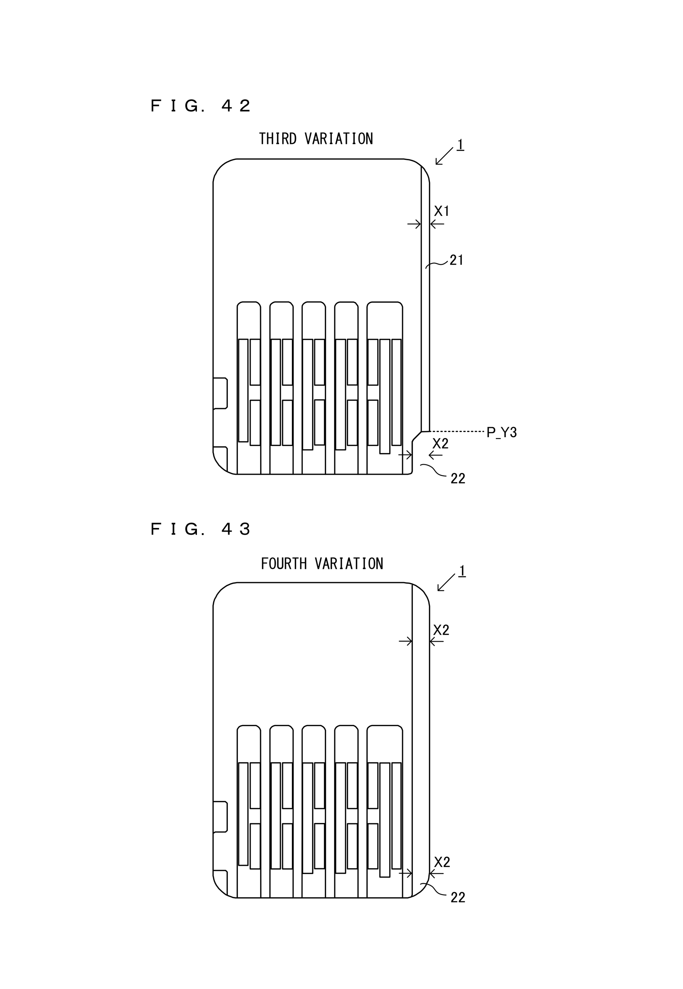

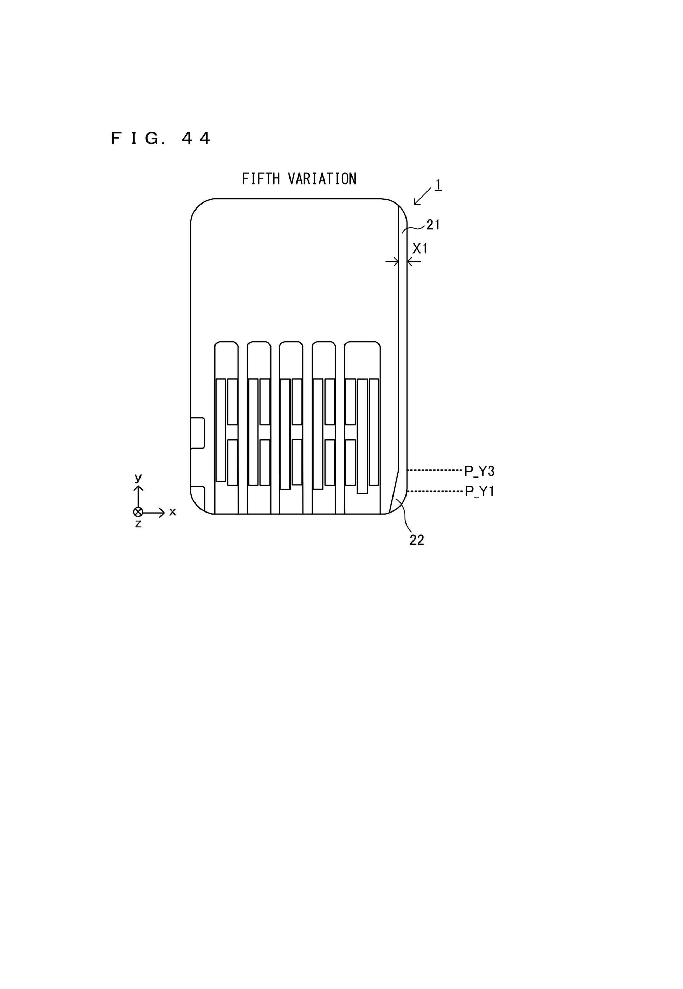

The shape of the housing of the cartridge 1 is not limited to the above. FIG. 40 is a diagram showing the cartridge 1 according to a first variation. FIG. 41 is a diagram showing the cartridge 1 according to a second variation. FIG. 42 is a diagram showing the cartridge 1 according to a third variation. FIG. 43 is a diagram showing the cartridge 1 according to a fourth variation. FIG. 44 is a diagram showing the cartridge 1 according to a fifth variation.

For example, in the above exemplary embodiment, the right side notch 21 that functions as a rail used to insert the cartridge 1 into the slot is formed to extend to an upper end portion of the cartridge 1. Alternatively, as shown in FIG. 40, the right side notch 21 may be formed from the third position P_Y3 at the upper end of the right side notch 22 to a fourth position P_Y4 below the upper end of the cartridge 1. In the range from the fourth position P_Y4 to the upper end in the y-axis direction and in the range from the right end in the x-axis direction to a distance X1 in the left direction, the entirety of the front surface side housing 2 and the back surface side housing 3 may be notched, and a housing may not be formed. In other words, the rail does not necessarily need to be provided from the upper end to the lower end in the y-axis direction, and may be provided from the fourth position P_Y4 below the upper end in the y-axis direction.

The shape and the length of the right side notch 21 are not limited to those shown in the figures, and may be any shape and length so long as the right side notch 21 functions as a rail when the cartridge 1 is inserted into the slot of the game apparatus 50 or the old game apparatus 70.

The shape of the right side notch 22 is not limited to that described above. For example, as shown in FIG. 41, the left end of the right side notch 22 may be linearly formed. That is, the right side notch 22 may have the constant width X2 from the first position P_Y1 to the third position P_Y3 in the y-axis direction, and may be formed into a round shape from the first position P_Y1 to the lower end of the right side notch 22. The four corners of the cartridge 1 may not be formed into round shapes, and the right side notch 22 may have the constant width X2 from the upper end to the lower end of the right side notch 22.

As shown in FIG. 42, the right side notch 22 may not have a shape obtained by notching a part of the front surface side housing 2, but may have a shape obtained by notching the entirety of the front surface side housing 2 and the back surface side housing 3. That is, in the range below the third position P_Y3 (the lower end of the right side notch 21) in the y-axis direction and in the range from the right end in the x-axis direction to the distance X2 in the left direction, the entirety of the front surface side housing 2 and the back surface side housing 3 may be notched, and a housing may not be formed. Even if the right side notch 22 has a shape as shown in FIG. 42, but if the cartridge is inserted into the slot of the game apparatus 50, the terminal P17 does not come into contact with the housing of the cartridge, and the terminal P17 does not come into contact with the terminal 512.

As shown in FIG. 43, the right side notch 22 may be formed to extend from the upper end to the lower end of the cartridge 1. In this case, similarly to the right side notch 21, the right side notch 22 functions also as a guide when the cartridge 1 is inserted into the slot of the game apparatus 50 or the old game apparatus 70. The right side notch 22 may function as a rail by coming into contact with the wall portion 515 provided in the slot when the cartridge 1 is inserted into the slot of the game apparatus 50 or the old game apparatus 70, or may be formed not to come into contact with the wall portion 515 (not to function as a rail) when the cartridge 1 is inserted into the slot. The right side notch 22 has the width X2 and forms a space that accommodates the terminal P17 of the game apparatus 50 similarly to FIG. 26. Thus, if the cartridge 1 having the shape shown in FIG. 43 is inserted into the first slot 51 of the game apparatus 50, the terminal P17 does not come into contact with the terminal 512, and the game apparatus 50 detects that the cartridge 1 is connected.

As shown in FIG. 44, the right side notch 22 may not include a portion having a constant width, and the right side notch 22 may be formed obliquely with respect to the y-axis from the lower end of the right side notch 22 to the third position P_Y3. That is, the right side notch 22 may be formed in a tapered manner from the first position P_Y1 to the third position P_Y3, and may be formed into a round shape from the first position P_Y1 to the lower end of the right side notch 22.

The shape of the housing of the cartridge 1 may be obtained by optionally combining the shapes shown in FIGS. 40 to 44. For example, the right side notch 21 that functions as a rail used to insert the cartridge 1 into the slot as shown in FIG. 40 may be provided up to the fourth position P_Y4 below the upper end of the cartridge 1, and the shape of the right side notch 22 may be a shape as shown in FIG. 41. The left end of the right side notch 22 may be linearly formed as shown in FIG. 41, and may be formed into a shape obtained by notching the entirety of the front surface side housing 2 and the back surface side housing 3 as shown in FIG. 42.

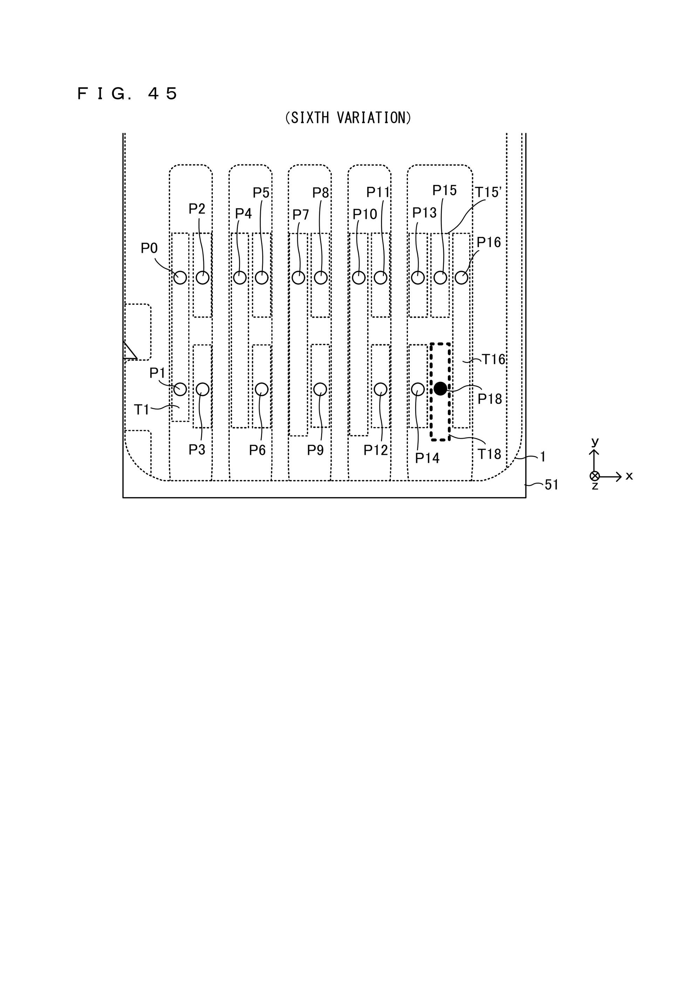

In the above exemplary embodiment, the terminal P17 provided inside the first slot 51 comes into contact with the housing of the old cartridge 7, whereby the game apparatus 50 identifies whether the old cartridge 7 is connected or the cartridge 1 is connected. The method for identifying whether the old cartridge 7 is connected or the cartridge 1 is connected is not limited to this, and may be another method. With reference to FIGS. 45 to 50, a description is given of another identification method for identifying whether the old cartridge 7 is connected or the cartridge 1 is connected.

FIG. 45 is a diagram showing another identification method and is a diagram showing the state where the cartridge 1 is connected to the game apparatus 50 according to a sixth variation.

As shown in FIG. 45, in the cartridge 1 according to the sixth variation, the long terminal T15 (a ground terminal) placed across the upper and lower areas of the terminal placement area is replaced by a short terminal T15' (a ground terminal) placed in the upper area. In the lower area below the short terminal T15', an identification terminal T18 is provided. The lower end of the identification terminal T18 is provided below the lower end of the detection terminal T1. Inside the first slot 51 of the game apparatus 50 according to the sixth variation, an identification terminal P18 is provided at a position overlapping the identification terminal T18. If the cartridge 1 is connected to the first slot 51 of the game apparatus 50, the ground terminals P15 and T15' come into contact with each other, and the identification terminals T18 and P18 come into contact with each other. If the old cartridge 7 is connected to the game apparatus 50 according to the sixth variation, the ground terminals P15 and T15 come into contact with each other, and the identification terminal P18 and the ground terminal T15 also come into contact with each other. Based on the state of the identification terminal P 18, the game apparatus 50 according to the sixth variation can identify whether the cartridge 1 is connected or the old cartridge 7 is connected. The positions in the y-axis direction of the ground terminal P15 and the identification terminal P18 may be reversed, and the positions in the y-axis direction of the ground terminal T15' and the identification terminal T18 may also be configured to be reversed. That is, the identification terminals P18 and T18 may be placed in the upper area, and the ground terminals P15 and T15' may be placed in the lower area.

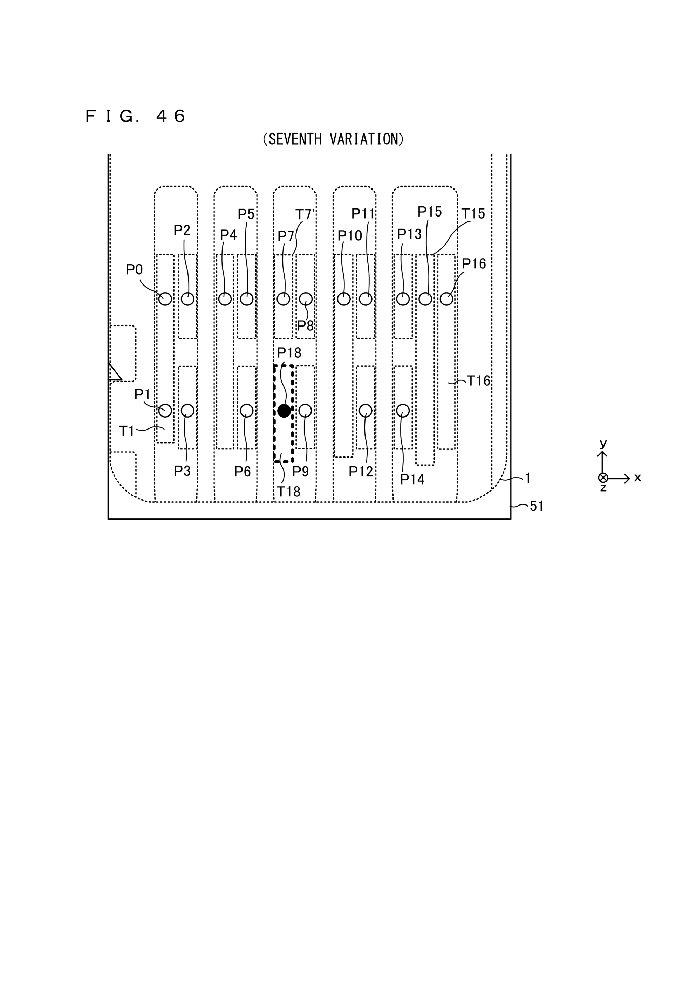

FIG. 46 is a diagram showing another identification method and is a diagram showing the state where the cartridge 1 is connected to the game apparatus 50 according to a seventh variation.

As shown in FIG. 46, in the cartridge 1 according to the seventh variation, the long terminal T7 (a power supply terminal) placed across the upper and lower areas of the terminal placement area is replaced by a short terminal T7' (a power supply terminal) placed in the upper area. In the lower area below the short terminal T7', an identification terminal T18 is provided. The lower end of the identification terminal T18 is provided below the lower end of the detection terminal T1. Inside the first slot 51 of the game apparatus 50 according to the seventh variation, an identification terminal P18 is provided at a position overlapping the identification terminal T18. If the cartridge 1 is connected to the first slot 51 of the game apparatus 50, the power supply terminals P7 and T7' come into contact with each other, and the identification terminals P18 and T18 come into contact with each other. If the old cartridge 7 is connected to the game apparatus 50 according to the seventh variation, the power supply terminals P7 and T7 come into contact with each other, and the identification terminal P18 and the power supply terminal T7 also come into contact with each other. Based on the state of the identification terminal P18, the game apparatus 50 according to the seventh variation can identify whether the cartridge 1 is connected or the old cartridge 7 is connected. The positions in the y-axis direction of the power supply terminal P7 and the identification terminal P18 may be reversed, and the positions in the y-axis direction of the power supply terminal T7' and the identification terminal T18 may also be configured to be reversed. That is, the identification terminals P18 and T18 may be placed in the upper area, and the power supply terminals P7 and T7' may be placed in the lower area.

Although not shown in the figures, instead of the power supply terminal T7, the power supply terminal T10 may be similarly replaced by a short terminal T10'. In this case, in the lower area below the short terminal T10', an identification terminal T18 is provided. If the cartridge 1 is connected to the first slot 51 of the game apparatus 50, the power supply terminals P10 and T10' come into contact with each other, and the identification terminals P18 and T18 come into contact with each other. On the other hand, if the old cartridge 7 is connected to the game apparatus 50, the power supply terminals P10 and T10 come into contact with each other, and the identification terminal P18 and the power supply terminal T10 also come into contact with each other. Also in this case, similarly to the above, the positions in the y-axis direction of the power supply terminal P10 and the identification terminal P18 may be reversed, and the positions in the y-axis direction of the power supply terminal T10' and the identification terminal T18 may also be configured to be reversed.

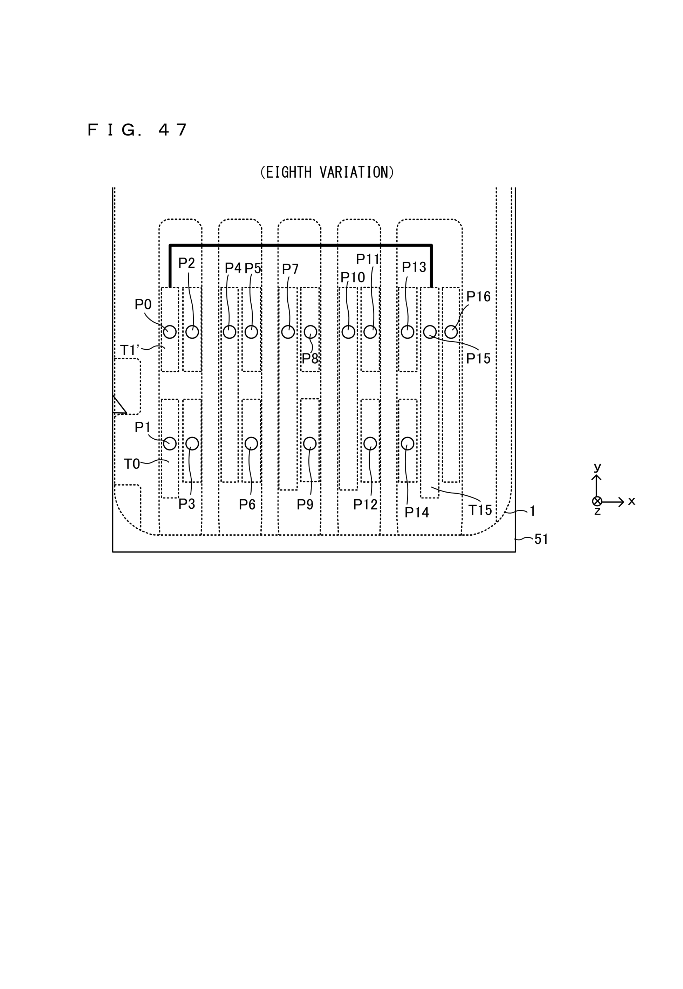

FIG. 47 is a diagram showing another identification method and is a diagram showing the state where the cartridge 1 is connected to the game apparatus 50 according to a eighth variation.

As shown in FIG. 47, in the cartridge 1 according to the eighth variation, the long terminal T1 (a ground/detection terminal) placed across the upper and lower areas is divided into a short terminal T1' placed in the upper area and a short terminal T0 placed in the lower area. The terminals T1' and T15 are electrically connected together. The short terminal T0 functions as a ground terminal. The position in the y-axis direction of the lower end of the short terminal T0 is the same as that of the lower end of the terminal T15 or extends to below the lower end of the terminal T15. The game apparatus 50 according to the eighth variation detects a short circuit between the terminals P0 and P15, thereby detecting that the cartridge 1 is connected. If the old cartridge 7 is connected to the game apparatus 50, the short circuit between the terminals P0 and P15 is not detected, and therefore, the game apparatus 50 detects that the old cartridge 7 is connected.

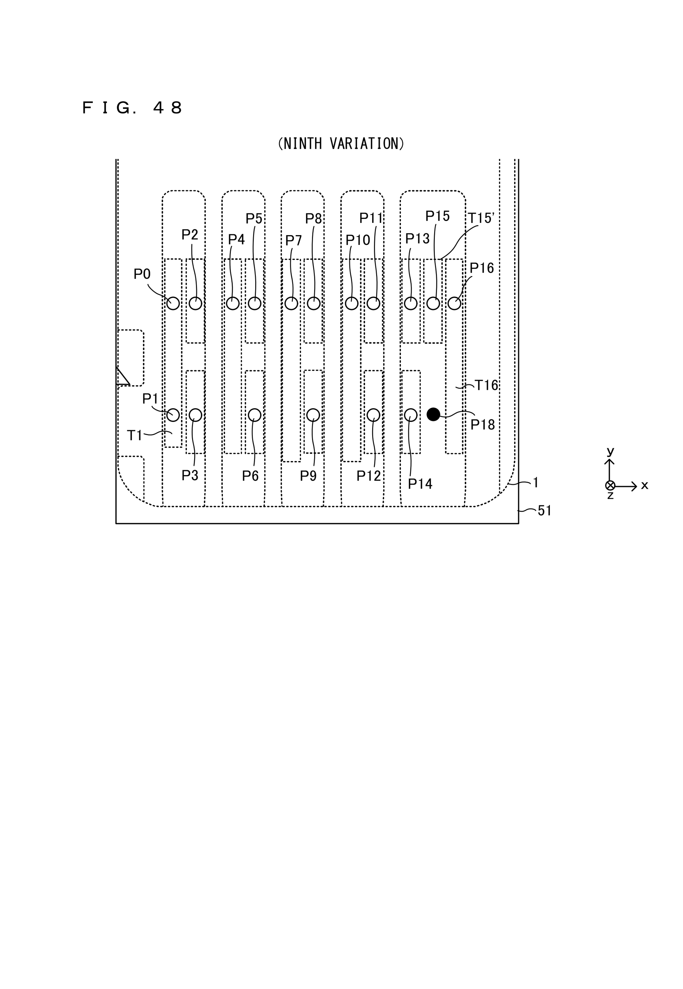

FIG. 48 is a diagram showing another identification method and is a diagram showing the state where the cartridge 1 is connected to the game apparatus 50 according to a ninth variation.

As shown in FIG. 48, in the cartridge 1 according to the ninth variation, the long terminal T15 (a ground terminal) placed across the upper and lower areas of the terminal placement area is replaced by a short terminal T15' (a ground terminal) placed in the upper area. Inside the first slot 51 of the game apparatus 50 according to the ninth variation, an identification terminal P18 is provided at a position overlapping the lower area below the short terminal T15'. If the cartridge 1 is connected to the first slot 51 of the game apparatus 50, the ground terminals P15 and T15' come into contact with each other, but the identification terminal T18 and the short terminal T15' do not come into contact with each other. If the old cartridge 7 is connected to the game apparatus 50 according to the ninth variation, the ground terminals P15 and T15 come into contact with each other, and the identification terminal P18 and the ground terminal T15 also come into contact with each other. Based on the state of the identification terminal P18, the game apparatus 50 according to the ninth variation can identify whether the cartridge 1 is connected or the old cartridge 7 is connected. The positions in the y-axis direction of the ground terminal P15 and the identification terminal P18 may be reversed, and the ground terminal T15' may be provided in the lower area. That is, the identification terminal P18 may be placed in the upper area, and the ground terminals P15 and T15' may be placed in the lower area.

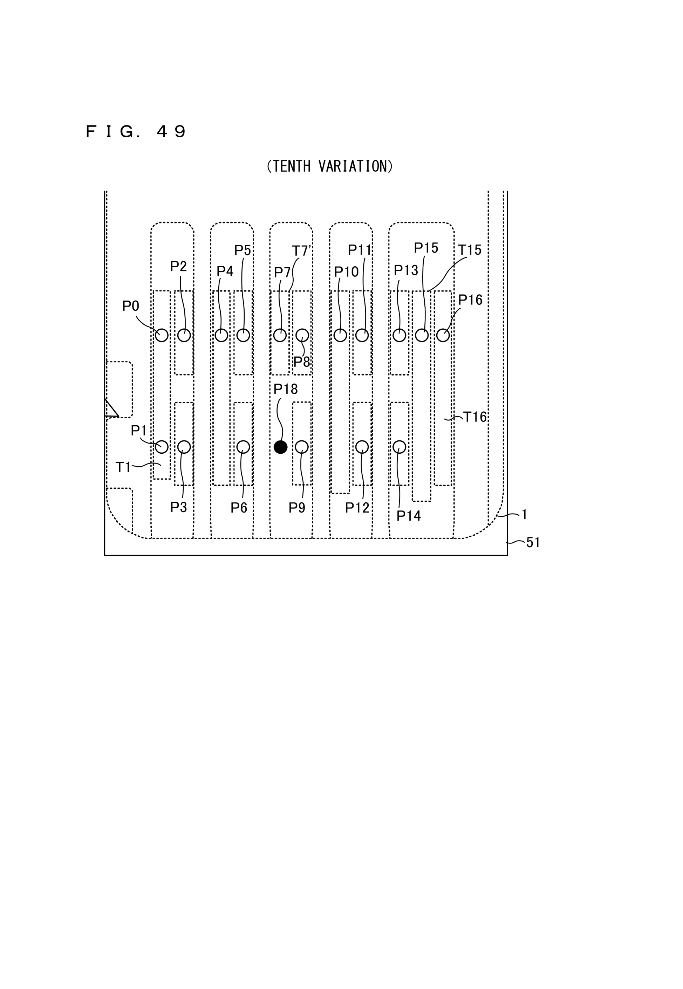

FIG. 49 is a diagram showing another identification method and is a diagram showing the state where the cartridge 1 is connected to the game apparatus 50 according to a tenth variation.

As shown in FIG. 49, in the cartridge 1 according to the tenth variation, the long terminal T7 (a power supply terminal) placed in the upper and lower areas of the terminal placement area is replaced by a short terminal T7' (a power supply terminal) placed in the upper area. Inside the first slot 51 of the game apparatus 50 according to the tenth variation, an identification terminal P18 is provided at a position overlapping the lower area below the short terminal T7'. If the cartridge 1 is connected to the first slot 51 of the game apparatus 50, the power supply terminals P7 and T7' come into contact with each other, but the identification terminal T18 and the short terminal T7' do not come into contact with each other. If the old cartridge 7 is connected to the game apparatus 50 according to the tenth variation, the power supply terminals P7 and T7 come into contact with each other, and the identification terminal P18 and the power supply terminal T7 also come into contact with each other. Based on the state of the identification terminal P18, the game apparatus 50 according to the tenth variation can identify whether the cartridge 1 is connected or the old cartridge 7 is connected. The positions in the y-axis direction of the power supply terminal P7 and the identification terminal P18 may be reversed, and the power supply terminal T7' may be provided in the lower area. That is, the identification terminal P18 may be placed in the upper area, and the power supply terminals P7 and T7' may be placed in the lower area.

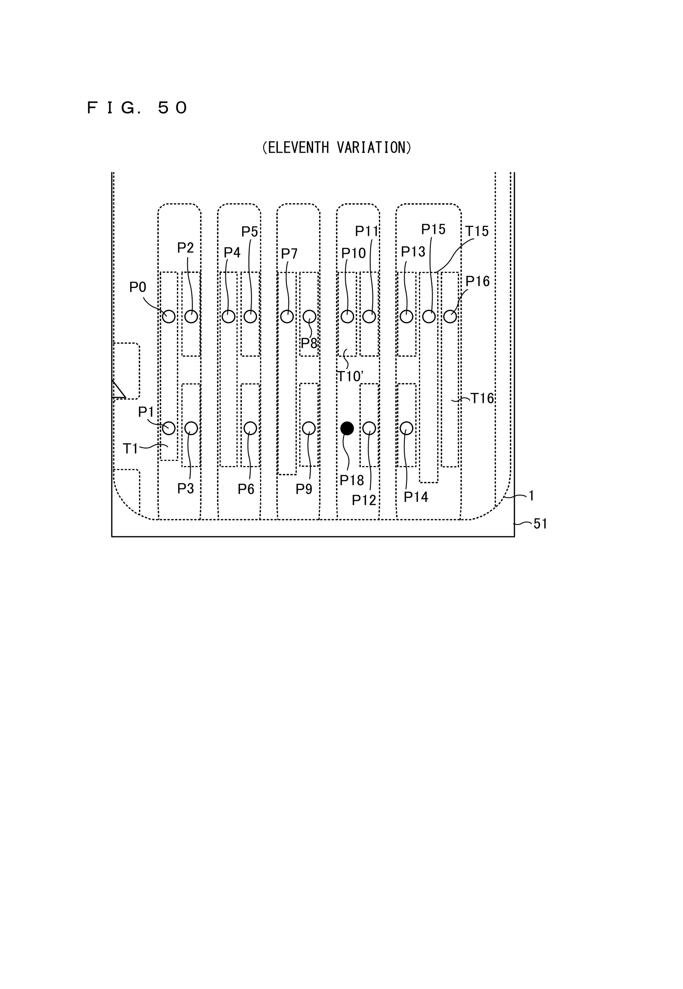

FIG. 50 is a diagram showing another identification method, when the cartridge 1 is connected to the game apparatus 50 according to an eleventh variation.

As shown in FIG. 50, in the eleventh variation, instead of the power supply terminal T7, the power supply terminal T10 may be replaced by a short terminal T10'. Inside the first slot 51, an identification terminal P18 is provided at a position overlapping the lower area below the short terminal T10'. If the cartridge 1 is connected to the first slot 51 of the game apparatus 50, the power supply terminals P10 and T10' come into contact with each other, but the identification terminal T18 and the short terminal T10' do not come into contact with each other. If the old cartridge 7 is connected to the game apparatus 50 according to the eleventh variation, the power supply terminals P10 and T10 come into contact with each other, and the identification terminal P18 and the power supply terminal T10 also come into contact with each other. The positions in the y-axis direction of the power supply terminal P10 and the identification terminal P18 may be reversed. That is, the identification terminal P18 may be placed in the upper area, and the power supply terminals P10 and T10' may be placed in the lower area.

Although power is supplied from the game apparatus 50 or the old game apparatus 70 to the cartridge 1 in the above exemplary embodiment, the cartridge 1 may have a power supply built-in, or power may be supplied from another apparatus to the cartridge 1. In this case, the cartridge 1 may not include the power supply terminals T7 and T10 that supply power from the game apparatus 50 or the old game apparatus 70.

In the above exemplary embodiment, the right side notch 22 is provided in the cartridge 1, and in the first slot 51 of the game apparatus 50, the switch (the terminal P17) is provided, of which the on or off state changes by a part of the housing of the old cartridge 7 coming into contact with the switch in a case where the old cartridge 7 is accommodated. The switch (the terminal P17) is configured so that the state of the switch does not change in a case where the cartridge 1 is accommodated. That is, the information processing apparatus (the game apparatus) according to the above exemplary embodiment includes a first slot into and from which a first cartridge and a second cartridge insertable into and removable from a second slot of a second information processing apparatus are insertable and removable. The information processing apparatus also includes a switch which is provided in the first slot, and of which the on or off state changes by a part of a housing of the second cartridge coming into contact with the switch in a case where the second cartridge is accommodated in the first slot, and of which the state does not change in a case where the first cartridge is accommodated, a circuit that determines the on or off state of the switch, and a detection terminal that is provided in the first slot and detects that the first or second cartridge is connected. Then, the information processing apparatus is configured so that if the second cartridge is inserted into the first slot, the state of the switch changes, and then, the detection terminal comes into contact with a detection terminal of the second cartridge, and if the first cartridge is inserted into the first slot, the state of the switch does not change, and the detection terminal comes into contact with a detection terminal of the first cartridge.

In an information processing apparatus according another exemplary embodiment, the above switch may be configured to come into contact with the housing of the cartridge 1 and not to come into contact with the housing of the old cartridge 7. That is, the information processing apparatus according another exemplary embodiment may include a first slot into and from which the above first and second cartridges are insertable and removable, a switch which is provided in the first slot, and of which the on or off state changes by a part of the housing of the first cartridge coming into contact with the switch in a case where the first cartridge is accommodated in the first slot, and of which the state does not change in a case where the second cartridge is accommodated, a circuit that determines the on or off state of the switch, and a detection terminal that is provided in the first slot and detects that the first or second cartridge is connected, and may be configured so that if the first cartridge is inserted into the first slot, the state of the switch changes, and then, the detection terminal comes into contact with the detection terminal of the first cartridge, and if the second cartridge is inserted into the first slot, the state of the switch does not change, and the detection terminal comes into contact with the detection terminal of the second cartridge.

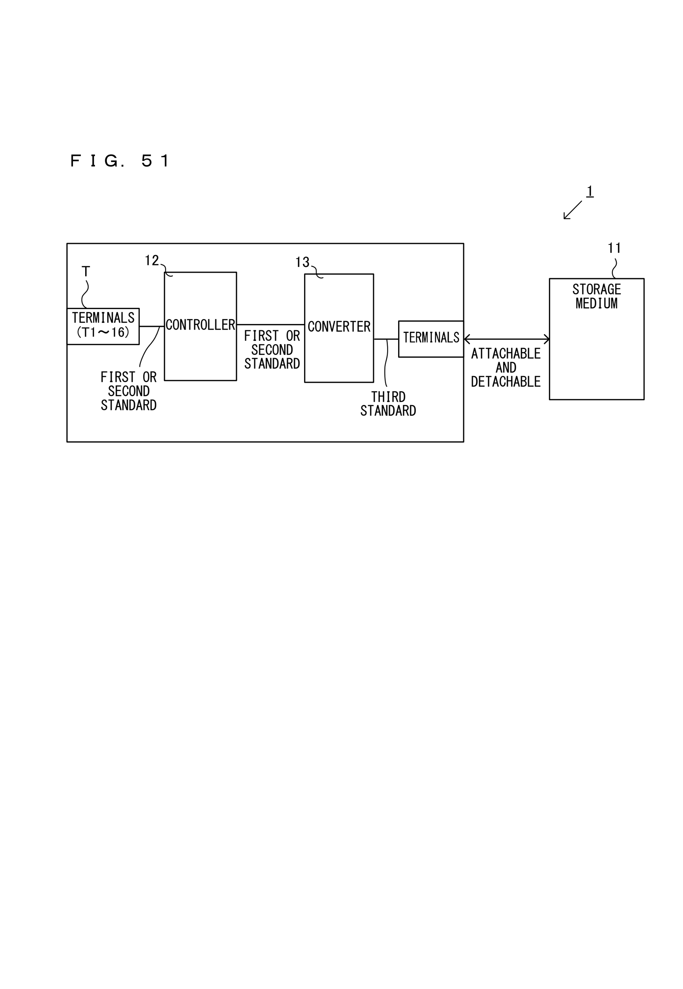

Although the storage medium 11 of the cartridge 1 is fixed to the cartridge 1 in the above exemplary embodiment, in another exemplary embodiment, the storage medium 11 of the cartridge 1 may be detachably connected to the cartridge 1. For example, the storage medium 11 attachable to and detachable from the cartridge 1 may be a storage medium based on a third standard different from the above first and second standards. For example, the storage medium 11 attachable to and detachable from the cartridge 1 may be a storage medium compliant with an SD standard. FIG. 51 is a diagram showing a variation of the cartridge 1 and an example of a cartridge including the storage medium 11 attachable to and detachable from the cartridge 1. As shown in FIG. 51, the cartridge 1 includes a plurality of terminals connected to a plurality of terminals of the storage medium 11 attachable to and detachable from the cartridge 1, and a converter 13 that converts a signal compliant with the third standard into a signal compliant with the first or second standard. The controller 12 of the cartridge 1 controls the converter 13 in accordance with the game apparatus to which the cartridge 1 is connected. Specifically, if the cartridge 1 is connected to the game apparatus 50, communication between the cartridge 1 and the game apparatus 50 is performed based on the first standard, and the converter 13 converts a signal compliant with the first standard into the third standard and communicates with the storage medium 11 attachable to and detachable from the cartridge 1. If the cartridge 1 is connected to the old game apparatus 70, communication between the cartridge 1 and the old game apparatus 70 is performed based on the second standard, and the converter 13 converts a signal compliant with the second standard into the third standard and communicates with the storage medium 11 attachable to and detachable from the cartridge 1. The converter may be included in the controller. That is, an integrated circuit included in the controller may have a conversion function for converting the first and second standards. The storage medium 11 attachable to and detachable from the cartridge 1 may be a storage medium compliant with the first standard, or may be a storage medium compliant with the second standard. In this case, the cartridge 1 may not include the above converter 13, and the controller 12 may process a signal in accordance with the game apparatus to which the cartridge 1 is connected.

The cartridge may be able to be connected to a plurality of storage media. The cartridge may be able to switch any of a plurality of storage media, and write and read data to and from any of the plurality of storage media.

The aspects of the above exemplary embodiment and its variations can be optionally combined together unless they contradict each other. Further, the above aspects are merely an example of the present invention, and may be improved and modified in various manners other than the above.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. A communication terminal apparatus capable of communicating with a server, comprising:
at least one memory;
a slot configured to detachably receive a first external storage medium; and
at least one processor configured to:
receive first data from the first external storage medium attached to the slot;
acquire, from the server, a first application corresponding to the first data and store the first application in the memory, when the first external storage medium is attached to the slot; and
execute the first application stored in the memory, while the first external storage medium is attached to the slot.

2. The communication terminal apparatus according to claim 1, wherein
the at least one processor is further configured to perform a notification to notify a user that the first application has already been stored, when the first application is stored in the memory and a second application of the same type as the first application is acquired from the server.

3. The communication terminal apparatus according to claim 1 or 2, wherein the slot is further configured to detachably receive a second external storage medium having stored therein a second application, and
the at least one processor is further configured to:
determine whether the external storage medium attached to the slot is the first external storage medium or the second external storage medium, based on information transmitted from the external storage medium attached to the slot;
execute the first application stored in the memory, based on the first data received from the first external storage medium, in response to determining that the external storage medium attached to the slot is the first external storage medium; and
read the second application stored in the second external storage medium, and execute the second application, in response to determining that the external storage medium attached to the slot is the second external storage medium.

4. The communication terminal apparatus according to any one of claims 1 to 3, wherein
the at least one processor is further configured to:
execute a third application corresponding to the first application;
acquire the third application from the server when the first application is not stored in the memory; and
not acquire the third application from the server when the first application is stored in the memory.

5. The communication terminal apparatus according to any one of claims 1 to 4, wherein
the at least one processor is further configured to execute the first application stored in the memory if the first external storage medium is attached to the slot, even when the communication terminal apparatus is in an offline state.

6. The communication terminal apparatus according to any one of claims 1 to 5, wherein
the first data is identification information for identifying the first application.

7. The communication terminal apparatus according to any one of claims 1 to 6, wherein
the at least one processor is further configured to:
acquire a first icon image indicating information on the first application from the first external storage medium; and
display the acquired first icon image.

8. The communication terminal apparatus according to claim 7, wherein
the at least one processor is further configured to:
acquire the first application from the server, and acquire a second icon image corresponding to the first application from the server;
display the first icon image acquired from the first external storage medium, while acquiring the first application from the server; and
display the second icon image acquired from the server instead of the first icon image, when having acquired the first application from the server.

9. An external storage medium configured to be detachably attached to a slot of a first communication terminal apparatus communicable with a server, comprising:
a memory having stored therein at least first data;
a terminal configured to be electrically connected to the first communication terminal apparatus when the external storage medium is attached to the slot of the first communication terminal apparatus; and
a controller configured to:
establish a session for communicating with the first communication terminal apparatus, in response to receiving a predetermined signal via the terminal;
transmit the first data to the first communication terminal apparatus that acquires a first application associated with the first data from the server based on the first data from the external storage medium, while the session with the first communication terminal apparatus is established; and
transmit the first data stored in the memory to the first communication terminal apparatus, when the first communication terminal apparatus executes the first application, in a state where the session with the first communication terminal apparatus storing the first application acquired from the server is established.

10. The external storage medium according to claim 9, wherein
the first data is identification information for identifying the first application.

11. The external storage medium according to claim 10, wherein
a first icon image indicating information on the first application is stored in the memory, and
the controller is further configured to transmit the first icon image stored in the memory to the first communication terminal apparatus so that the first icon image is displayed on the first communication terminal apparatus, in the state where the external storage medium establishes the session with the first communication terminal apparatus.

12. The external storage medium according to claim 9, wherein
the controller is further configured to periodically transmit predetermined data to the first communication terminal apparatus, in response to a request from the first communication terminal apparatus, in the state where the external storage medium establishes the session with the first communication terminal apparatus.

13. An information processing system comprising a communication terminal apparatus capable of communicating with a server, and a first external storage medium detachably attached to the communication terminal apparatus, wherein
the first external storage medium is configured to store first data without storing a first application therein,
the communication terminal apparatus comprises:
at least one memory;
a slot configured to detachably receive a first external storage medium; and
at least one processor configured to:
receive the first data from the first external storage medium attached to the slot,
acquire, from the server, the first application corresponding to the first data and store the first application in the memory, when the first external storage medium is attached to the slot, and
execute the first application stored in the memory, while the first external storage medium is attached to the slot, and not execute the first application stored in the memory, when the first external storage medium is not attached to the slot.

14. The information processing system according to claim 13, wherein
the at least one processor is further configured to perform a notification to notify a user that the first application has already been stored, when the first application is stored in the memory and a second application of the same type as the first application is acquired from the server.

15. The information processing system according to claim 13, wherein
the slot is further configured to detachably receive a second external storage medium having stored therein a second application, and
the at least one processor is further configured to:
determine whether the external storage medium attached to the slot is the first external storage medium or the second external storage medium, based on information transmitted from the external storage medium attached to the slot;
execute the first application stored in the memory, based on the first data received from the first external storage medium, in response to determining that the external storage medium attached to the slot is the first external storage medium; and
read the second application stored in the second external storage medium, and execute the second application, in response to determining that the external storage medium attached to the slot is the second external storage medium.

16. One or more non-transitory computer-readable storage media having stored therein instructions that cause at least one processor of a communication terminal apparatus, which includes at least one memory and a slot configured to detachably receive a first external storage medium, to perform operations comprising:
determining whether the first external storage medium is attached to the slot;
acquiring first data from the first external storage medium attached to the slot;
acquiring, from a server, a first application corresponding to the first data, and storing the first application in the memory, in response to determining that the first external storage medium is attached to the slot; and
executing the first application stored in the memory, in response to determining that the first external storage medium is attached to the slot.

17. A method for executing an application in a communication terminal apparatus including at least one memory, and a slot configured to detachably receive a first external storage medium, the method comprising:
determining whether the first external storage medium is attached to the slot;
acquiring first data from the first external storage medium attached to the slot;
acquiring, from a server, a first application corresponding to the first data, and storing the first application in the memory, in response to determining that the first external storage medium is attached to the slot; and
executing the first application stored in the memory in response to determining that the first external storage medium is attached to the slot.
